(19)

Europäisches Patentamt
European Patent Office
Office européen des brevets

(11) **EP 4 299 651 A1**

(12) **EUROPEAN PATENT APPLICATION**
published in accordance with Art. 153(4) EPC

(43) Date of publication:
**03.01.2024 Bulletin 2024/01**

(21) Application number: **22759805.9**

(22) Date of filing: **25.02.2022**

(51) International Patent Classification (IPC):
***C08J 3/12*** (2006.01)     ***B01J 20/26*** (2006.01)

(52) Cooperative Patent Classification (CPC):
**B29B 7/42; B01J 20/26; B29B 7/582; B29B 9/06;
B29B 9/12; C08J 3/12**

(86) International application number:
**PCT/JP2022/007925**

(87) International publication number:
**WO 2022/181771 (01.09.2022 Gazette 2022/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.02.2021 JP 2021030521
26.02.2021 JP 2021030524**

(71) Applicant: **Nippon Shokubai Co., Ltd.
Osaka-shi, Osaka 541-0043 (JP)**

(72) Inventors:
• **FUJITA, Keisuke**
  **Himeji-shi, Hyogo 671-1282 (JP)**
• **ADACHI, Yoshifumi**
  **Himeji-shi, Hyogo 671-1282 (JP)**
• **YORINO, Tsuyoshi**
  **Himeji-shi, Hyogo 671-1282 (JP)**
• **SATO, Mai**
  **Himeji-shi, Hyogo 671-1282 (JP)**

• **WAKABAYASHI, Ryota**
  **Himeji-shi, Hyogo 671-1282 (JP)**
• **NODA, Atsuhiro**
  **Himeji-shi, Hyogo 671-1282 (JP)**
• **UEDA, Junya**
  **Himeji-shi, Hyogo 671-1282 (JP)**
• **KANEKO, Jumpei**
  **Himeji-shi, Hyogo 671-1282 (JP)**
• **UEDA, Hiroko**
  **Himeji-shi, Hyogo 671-1282 (JP)**
• **TAMAKI, Mariko**
  **Himeji-shi, Hyogo 671-1282 (JP)**
• **NODA, Yuika**
  **Himeji-shi, Hyogo 671-1282 (JP)**
• **KITANO, Takahiro**
  **Himeji-shi, Hyogo 671-1282 (JP)**
• **TORII, Kazushi**
  **Himeji-shi, Hyogo 671-1282 (JP)**
• **IKEUCHI, Hiroyuki**
  **Himeji-shi, Hyogo 671-1282 (JP)**

(74) Representative: **Hoffmann Eitle
Patent- und Rechtsanwälte PartmbB
Arabellastraße 30
81925 München (DE)**

(54) **GRANULAR WATER ABSORBENT, ABSORBENT BODY CONTAINING SAID WATER ABSORBENT, AND ABSORBENT ARTICLE USING SAID ABSORBENT BODY**

(57)     Provided is a particulate water absorbent with which an absorbent body having an excellent speed of incorporating liquid and enabling reduction in release amount can be produced.
    The particulate water absorbent contains poly(meth)acrylic acid (salt)-based water-absorbing resin particles as a main component, and the particulate water absorbent includes a cavity that is a space connecting to outside and a void that is a closed space not connecting to outside, in which a cavity ratio to a total volume is 10% by volume or more, and a void ratio to a total volume is 0.5% by volume or less.

FIG. 1

EP 4 299 651 A1

## Description

### TECHNICAL FIELD

The present invention relates to a particulate water absorbent containing poly(meth)acrylic acid (salt)-based water-absorbing resin particles as a main component, an absorbent body containing the water absorbent, and an absorbent article using the absorbent body.

### BACKGROUND ART

Water-absorbing resins (SAPs/Super Absorbent Polymers) are a water swellable and water insoluble polymer gelling agent. A particulate water absorbent containing a water-absorbing resin as a main component is used in absorbent articles for various use applications including sanitary articles such as disposable diapers, sanitary napkins, and incontinence products for adults, agricultural or horticultural soil humectants, industrial water sealants, and the like. Many monomers and hydrophilic polymers have been proposed as raw materials of such a water-absorbing resin, and a poly(meth)acrylic acid (salt)-based water-absorbing resin using a (meth) acrylic acid and/or its salt as a monomer is most often used from the viewpoint of performance and cost.

With performance enhancement of disposable diapers which are main applications of the particulate water absorbent, many functions (physical properties) are required for the particulate water absorbent. Specific examples of the physical properties of the particulate water absorbent include water absorption speed, fluid retention capacity, absorption capacity under load, liquid permeability, release amount (re-wet), gel strength, water soluble component, particle size distribution, urine resistance, antibacterial property, impact resistance (damage resistance), powder fluidity, deodorization property, coloring resistance (whiteness), low dust, and the like.

Taking disposable diapers as an example, improvement against urine leakage and skin rash is required for the particulate water absorbent (water-absorbing resin). For example, it is estimated that urine leakage and skin rash occur when urine is difficult to be taken into the disposable diaper or when absorption of urine by the particulate water absorbent is slow even if urine is taken into the disposable diaper. From this, it is considered that improving the water absorption speed of the particulate water absorbent and the absorbability of the particulate water absorbent leads to reduction of the release amount and the shortening of absorption time of the disposable diaper, and further leads to reduction of urine leakage and skin rash.

For example, in order to improve the absorbability and the water absorption speed of the particulate water absorbent, a technique for improving the particle shape of the water-absorbing resin has been proposed. Patent Literature 1 discloses that a water-absorbing resin obtained by foam polymerization and having cavities, which are open spaces connecting to the outside, and voids, which are closed spaces not connecting to the outside is excellent in liquid permeability and water absorption speed.

Citation List

Patent Literature

Patent Literature 1: WO 2013/002387 A

### SUMMARY OF INVENTION

Technical Problem

An absorbent body produced using the water-absorbing resin obtained by the technique described in Patent Literature 1 exhibits a reduction in release amount, but there is a problem in that it is not necessarily effective in terms of the absorption of high-concentration liquid (for example, menstrual blood) or the speed of incorporating liquid and release amount in an absorbent body not using pulp.

Therefore, an object of the present invention is to provide a particulate water absorbent with which an absorbent body having an excellent speed of incorporating liquid and enabling reduction in release amount can be produced.

Another object of the present invention is to provide an absorbent body having an excellent speed of incorporating liquid as compared with conventional techniques and enabling reduction in release amount. Solution to Problem

The present inventors have conducted intensive studies in view of the above problems. As a result, the present inventors have found that the above problems can be solved by a particulate water absorbent containing poly(meth)acrylic acid (salt)-based water-absorbing resin particles as a main component, the particulate water absorbent including a cavity that is a space connecting to outside and a void that is a closed space not connecting to outside, in which a cavity ratio to a total volume is 10% by volume or more, and a void ratio to a total volume is 0.5% by volume or less, thereby completing the present invention.

Effect of the Invention

According to the present invention, there is provided a particulate water absorbent with which an absorbent body having an excellent speed of incorporating liquid and enabling reduction in release amount can be produced. That is, according to the present invention, there is provided a particulate water absorbent that provides an excellent speed of incorporating liquid and an excellent release amount in an absorbent body.

BRIEF DESCRIPTION OF DRAWINGS

Fig. 1 is a schematic front view for describing holes (a cavity and a void) formed in a particulate water absorbent according to an embodiment of the present invention.

Fig. 2A is a partially cutaway side view illustrating an example of a gel-crusher (meat chopper/screw extruder) used in a production method according to an embodiment of the present invention.

Fig. 2B is a schematic view illustrating a supporting tool attached to an extrusion port in the gel-crusher of Fig. 2A.

Fig. 3 is a partially cutaway side view illustrating an example of a gel-crusher (multiaxial kneader) used in the production method according to an embodiment of the present invention.

Fig. 4 is an enlarged view of the gel-crusher in Fig. 3 (a view of the central part of the main body as viewed from above).

Fig. 5 is a schematic view illustrating classification of a gel sizing device having an extrusion action portion and a perforated plate.

Fig. 6 is a schematic view illustrating an extrusion portion in the gel sizing device.

Fig. 7 is a schematic view illustrating the configuration of a gel sizing device (a screw-type pretreating and extrusion type sizing machine having a spherical (dome-shaped) die) according to one embodiment.

Fig. 8 is a partially cutaway side view illustrating an example of a drying device (rotary heating device equipped with a heating tube) used in the production method according to an embodiment of the present invention.

Fig. 9 is a schematic view illustrating a cross-section of an absorbent body according to a first embodiment of the present invention taken along a short-side direction of the absorbent body.

Fig. 10 is a schematic horizontal section of the absorbent body taken along line A-A in Fig. 9.

Fig. 11 is a schematic view illustrating another embodiment of the gap in the absorbent body according to the first embodiment of the present invention.

Fig. 12 is a schematic horizontal section of the absorbent body taken along line A-A in Fig. 9 and is a schematic view illustrating another embodiment of the gap.

Fig. 13 is a schematic horizontal section of the absorbent body taken along line A-A in Fig. 9 and is a schematic view illustrating another embodiment of the gap.

Fig. 14 is a schematic horizontal section of the absorbent body taken along line A-A in Fig. 9 and is a schematic view illustrating another embodiment of the gap.

Fig. 15 is a schematic cross-sectional view of an absorbent body according to a second embodiment of the present invention taken along a short-side direction of the absorbent body.

Fig. 16 is a schematic view of another embodiment in the absorbent body according to the second embodiment of the present invention and a cross-sectional view of the absorbent body taken along the short-side direction of the absorbent body.

Fig. 17 is a schematic cross-sectional view of an absorbent body according to one embodiment of the present invention.

Fig. 18 illustrates an evaluation device for measuring a time for incorporating liquid and a release amount.

Fig. 19 is a graph showing a correlation between cavities and voids of water-absorbing resin particles produced in Examples and Comparative Examples.

Fig. 20 is a plan view and a front view of a liquid injection cylinder used for evaluating a release amount.

Fig. 21 is a schematic view of the liquid injection cylinder placed on an absorbent body used in Example of the present application in release amount evaluation, and is a schematic front view from a longitudinal direction of the absorbent body and a schematic front view from a short-side direction of the absorbent body.

Fig. 22 is a side view illustrating how an aqueous sodium chloride solution is put into the absorbent body from the liquid injection cylinder through a funnel in release amount evaluation.

Fig. 23 is a schematic view of the liquid injection cylinder placed on the absorbent body used in Example of the present application in release amount evaluation.

**DESCRIPTION OF EMBODIMENTS**

Hereinafter, the present invention will be described with reference to the best embodiment. Throughout the present specification, any expression in a singular form should be understood to encompass the concept of its plural form unless otherwise specified. Thus, the article specifying a single form (e.g., "a", "an", and "the" in English) should be understood to encompass the concept of its plural form unless otherwise specified. Any term used in the present specification should be understood as ordinarily used in the art unless otherwise specified. Thus, all of technical terms and scientific terms used in the present specification have the same meanings as generally understood by those skilled in the art to which the present invention belongs, unless otherwise defined. If there is any conflict in meaning, the present specification (including the definitions) takes priority. The present invention is not limited by the following embodiments, and various changes or modifications can be made within the scope of claims.

[1] Definitions of terms

[1-1] "Water-absorbing resin"

The term "water-absorbing resin" in the present invention refers to a water swellable and water insoluble polymer gelling agent that satisfies the following physical properties. That is, in the present specification, the "water-absorbing resin" refers to a polymer gelling agent having a CRC (centrifuge retention capacity) (water swellable property index), which is specified in NWSP 241.0.R2(15), of 5 g/g or more and having Ext (water soluble component), which is specified in NWSP 270.0.R2(15), of 50% by mass or less. "NWSP" will be described below.
The water-absorbing resin can be designed according to its use and the purpose, and is not particularly limited. However, the water-absorbing resin is preferably a hydrophilic crosslinked polymer obtained by crosslinking and polymerizing unsaturated monomers having a carboxyl group. Moreover, the water-absorbing resin is not limited to an embodiment in which the entire water-absorbing resin is a crosslinked polymer, and can be a composition containing an additive or the like as long as the above-described physical properties (CRC and Ext) satisfy the value ranges described above.
The water-absorbing resin in the present invention may be subjected to surface crosslinking (in other words, post-crosslinking or secondary crosslinking) or may be not subjected to surface crosslinking. The water-absorbing resin is preferably subjected to surface crosslinking. In the present specification, the term "water-absorbing resin particles" (also referred to as "water-absorbing resin powder" in some cases) refers to a powdery water-absorbing resin, and the water-absorbing resin particles is preferably adjusted to a predetermined solid content ratio (moisture content) and a predetermined particle size (particle diameter). Water-absorbing resin particles that have been subjected to a predetermined surface crosslinking treatment may be separately referred to as "surface-crosslinked (post-crosslinked) water-absorbing resin particles" or a "particulate water absorbent (water absorbent)".

[1-2] "Poly(meth)acrylic acid (salt)-based water-absorbing resin"

The term "poly (meth) acrylic acid (salt)" in the present invention refers to poly(meth)acrylic acid and/or its salt, and the term "poly (meth) acrylic acid (salt)-based water-absorbing resin" means a crosslinked polymer containing, as a main component, a repeating unit of a structure derived from (meth)acrylic acid and/or its salt (hereinafter, also referred to as "(meth)acrylic acid (salt)") and containing a structure derived from an internal crosslinking agent as an optional component. The poly(meth)acrylic acid (salt)-based water-absorbing resin contains a structure derived from a (meth)acrylic acid (salt) as a repeating unit, is a crosslinked polymer of a poly(meth)acrylic acid (salt) having an internally crosslinked structure, and is preferably surface-crosslinked.
The term "main component" means that the amount of the (meth)acrylic acid (salt) used (contained) is preferably 50 mol% to 100 mol%, more preferably 70 mol% to 100 mol%, still more preferably 90 mol% to 100 mol%, and particularly preferably substantially 100 mol%, with respect to the total amount of monomers (excluding a crosslinking agent) used for polymerization.
Here, the poly(meth)acrylic acid (salt) may be unneutralized, but is preferably partially neutralized or completely neutralized, and is more preferably a monovalent salt, still more preferably an alkali metal salt or ammonium salt, still even more preferably an alkali metal salt, and particularly preferably a sodium salt.
The poly(meth)acrylic acid (salt)-based water-absorbing resin is in a particulate form (in other words, powdery form) in the particulate water absorbent. In the present specification, a particulate poly(meth)acrylic acid (salt)-based water-absorbing resin is referred to as "poly(meth)acrylic acid (salt)-based water-absorbing resin particles", but may also simply be referred to as "poly(meth)acrylic acid (salt)-based water-absorbing resin".

[1-3] "Particulate water absorbent"

In the present specification, the water absorbent includes poly(meth)acrylic acid (salt)-based water-absorbing resin particles as a main component. The particulate water absorbent in the present specification means a water absorbent in a particulate form (in other words, powdery form), and is referred to as "particulate water absorbent" regardless of whether this is one grain of particulate water absorbent or a plurality of grains of particulate water absorbent. "Particulate" refers to having a particulate form, and particle refers to a small solid or liquid particulate object with a measurable size (Glossary of Technical Terms in Japanese Industrial Standards, 4th Edition, page 2002). In the present specification, the particulate water absorbent may be simply referred to as a water absorbent.

An aqueous liquid is not limited to water, may be urine, menstrual blood, sweat, feces, waste liquid, moisture, vapor, ice, a mixture of water and an organic solvent and/or an inorganic solvent, rain water, ground water, or the like, and is not particularly limited as long as water is included. Preferred examples thereof include urine, menstrual blood, sweat, and other body fluids.

The particulate water absorbent according to the present invention is suitably used as a hygienic material for absorbing aqueous liquids. The particulate water absorbent of the present invention contains, as a main component, poly(meth)acrylic acid (salt)-based water-absorbing resin particles. That is, the particulate water absorbent includes poly(meth)acrylic acid (salt)-based water-absorbing resin particles at a content of preferably 60 to 100% by mass, 70 to 100% by mass, 80 to 100% by mass, or 90 to 100% by mass. In addition, the particulate water absorbent optionally contains additives such as other water-absorbing resin particles, water, and/or water insoluble inorganic particles. A preferable moisture content of the particulate water absorbent is 0.2 to 30% by mass. That is, water-absorbing resin compositions integrated with such components are also within the scope of the particulate water absorbent. The particulate water absorbent used in the present invention is preferably excellent in handleability under high humidity (specifically, the moisture absorption fluidity (blocking ratio after moisture absorption) described in WO 2017/170605 of the particulate water absorbent is preferably 30% or less, more preferably 20% or less, still more preferably 10% or less, and most preferably 5% or less).

The upper limit of the poly (meth) acrylic acid (salt)-based water-absorbing resin particles in the water absorbent is about 99% by mass, about 97% by mass, and particularly about 95% by mass, and the water absorbent preferably further contains water or an additive (water insoluble inorganic particles) described below.

In the particulate water absorbent of the present invention, the poly(meth)acrylic acid (salt)-based water-absorbing resin particles are contained as a main component, but the particulate water absorbent may contain another water-absorbing resin. Examples of the other water-absorbing resin include a polysulfonic acid (salt)-based water-absorbing resin, a maleic anhydride (salt)-based water-absorbing resin, a polyacrylamide-based water-absorbing resin, a polyvinyl alcohol-based water-absorbing resin, a polyethylene oxide-based water-absorbing resin, a polyaspartic acid (salt)-based water-absorbing resin, a polyglutamic acid (salt)-based water-absorbing resin, a polyalginic acid (salt)-based water-absorbing resin, a starch-based water-absorbing resin, a cellulose-based resin, and the like.

[1-4] "Absorbent body"

The "absorbent body" in the present invention has a first substrate having a liquid-absorbing surface that directly absorbs a liquid formed on a front surface side and a water absorption layer disposed on a back surface side of the first substrate, and the water absorption layer refers to a structure in which a particulate water absorbent (water-absorbing resin) is supported and/or sandwiched on one or more substrate and/or fibers (preferably, hydrophilic fibers). The water absorption layer may contain a fiber material such as a hydrophilic fiber in addition to the particulate water absorbent. When the water absorption layer is composed of the particulate water absorbent and the hydrophilic fiber, examples of the configuration of the absorbent body include a configuration in which the particulate water absorbent and the hydrophilic fiber are uniformly mixed and/or a configuration in which the particulate water absorbent is sandwiched between the hydrophilic fibers formed in a layer shape. In the configuration of the absorbent body, the water absorption layer containing the particulate water absorbent and the hydrophilic fiber may be integrated by further sandwiching the water absorption layer with a nonwoven fabric, tissue paper, or the like, and the configuration thereof is not limited to these exemplary configurations. A water absorption layer not containing a hydrophilic fiber and obtained by directly fixing the particulate water absorbent to a sheet-shaped substrate such as a nonwoven fabric or tissue paper and forming a composite body (that is, a water absorption layer including a particulate water absorbent and a sheet-shaped substrate) may also be the absorbent body of the present invention.

[1-5] Definitions of evaluation methods

"NWSP" refers to "Non-Woven Standard Procedures-Edition 2015", and EDANA (European Disposables And Nonwovens Association) and INDA (Association of the Nonwoven Fabrics Industry) jointly issued a unified evaluation method for nonwoven fabrics and products thereof in the United States and Europe, and "NWSP" indicates a standard measurement method for a water-absorbing resin. Unless otherwise specified, in the present invention, the physical properties of the water-absorbing resin are measured in accordance with "Non-Woven Standard Procedures-Edition 2015". In the case of a measurement method not described in NWSP, measurement is performed in accordance with the method under the condition described in Examples.

[1-5-1] "CRC" (NWSP 241.0.R2(15))

"CRC" is an abbreviation for "centrifuge retention capacity", and means a fluid retention capacity without pressure (also referred to also as "fluid retention capacity") of a particulate water absorbent (water-absorbing resin). Specifically, the term "CRC" refers to a fluid retention capacity (unit: g/g) measured after a procedure in which 0.2 g of a particulate water absorbent (water-absorbing resin) is put into a nonwoven fabric bag, then immersed in a large excess of a 0.9% by mass aqueous sodium chloride solution for 30 minutes so as to be allowed to freely swell, and then drained in a centrifuge (250 G) for 3 minutes. For a hydrogel after polymerization and/or after gel-crushing, the hydrogel is used in an amount of 0.4 g, the measurement time is changed to 24 hours, and solid content correction is carried out, and thus CRC is determined.

[1-5-2] "PSD" (NWSP 220.0.R2(15))

"PSD" is an abbreviation for "Particle Size Distribution", and means particle size distribution of a particulate water absorbent (water-absorbing resin) measured by sieve classification. A mass average particle size (D50) and a logarithmic standard deviation ($\sigma\zeta$) of the particle size distribution are measured with a vibration classifier (power source: 60Hz) by the same method as the method described in "(3) Mass average particle size (D50) and logarithmic standard deviation of particle size distribution" of columns 27 to 28 in U.S. Patent No. 7638570.

[1-5-3] "AAP" (NWSP 242.0.R2(15))

"AAP" is an abbreviation for "Absorption Against Pressure", and means an absorption capacity under pressure of a particulate water absorbent (water-absorbing resin).
Specifically, the term "AAP 0.3 psi (2.06 kPa)" refers to an absorption capacity (unit: g/g) measured after 0.9 g of a particulate water absorbent or a water-absorbing resin is swollen in a large excess of a 0.9% by weight of aqueous sodium chloride solution for 1 hour under a load of 2.06 kPa (21 g/cm$^2$, 0.3 psi). The absorption capacity may be performed while the load condition is changed to 4.83 kPa (49 g/cm$^2$, 0.7 psi). In this case, the absorption capacity is described as "AAP (4.83 kPa)". In the present invention, the absorption capacity (unit: g/g) is "AAP 0.3 psi (2.06 kPa)" measured under the conditions described in Examples.

[1-5-4] "Moisture Content" (NWSP 230.0.R2(15))

The term "moisture content" means the moisture content specified with the amount lost from drying a particulate water absorbent (water-absorbing resin). Specifically, the term "moisture content" refers to a value (unit:% by mass) calculated from the amount lost from drying 4.0 g of a particulate water absorbent (water-absorbing resin) at 105°C for 3 hours. In the present invention, a particulate water absorbent (water-absorbing resin) after drying is specified with the amount lost from drying 1.0 g of a particulate water absorbent (water-absorbing resin) at 180°C for 3 hours, and a hydrogel before drying is specified with the amount lost from drying 2.0 g of a hydrogel at 180°C for 24 hours.

[1-6] Others

In the present description, the phrase "X to Y" indicating a range means "X or more and Y or less". Unless otherwise specified, the term "ton (t)", which is a unit of mass, means "metric ton", and the term "ppm" means "ppm by mass" or "ppm by weight". Moreover, the terms "mass" and "weight", "parts by mass" and "parts by weight", and "% by mass" and "% by weight" are treated as synonyms for each other. Furthermore, the term "··· acid (salt)" means "··· acid and/or its salt", and the term "(meth)acrylic" means "acrylic and/or methacrylic".
The expression "l" or "L" may be used to mean "liter", and the expression "wt%" may be used to mean "% by weight". In the case of performing measurement of a trace component, or the like, the expression "N.D. (non detected)" may be used to mean a value below the detection limit.

[2] "Particulate water absorbent"

[2-1] Cavity and void

A particulate water absorbent of the present invention is a particulate water absorbent containing poly(meth)acrylic acid (salt)-based water-absorbing resin particles as a main component, the particulate water absorbent includes a cavity and a void, a cavity ratio to a total volume is 10% by volume or more, and a void ratio to a total volume is 0.5% by volume or less. The poly(meth)acrylic acid (salt)-based water-absorbing resin particles are as described in [1-2]. Hereinafter, the poly(meth)acrylic acid (salt)-based water-absorbing resin particles included in the particulate water absorbent may be simply referred to as "water-absorbing resin particles".

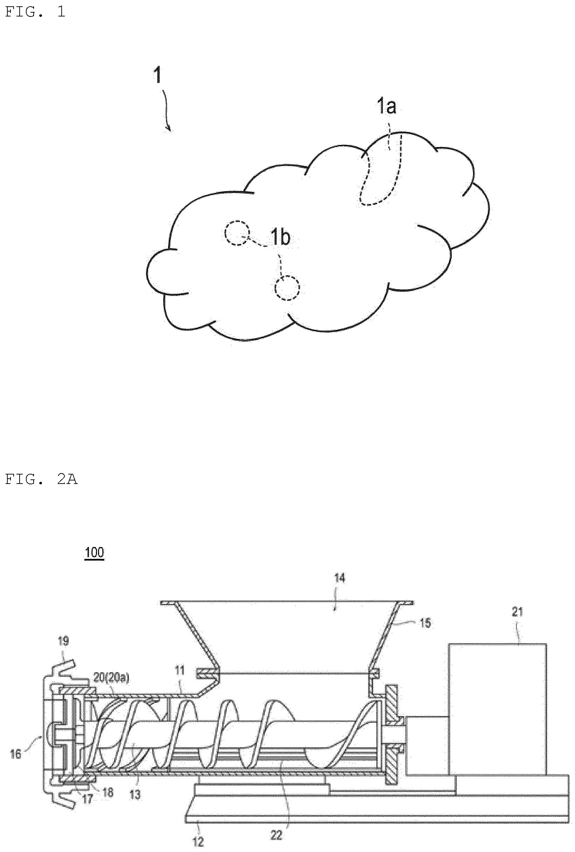

In the present invention, the term "cavity" (also referred to as "connecting hole") refers to a hollow connected to the outside of a particulate water absorbent 1 (exposed on the surface of the particulate water absorbent 1) among hollows formed in the particulate water absorbent 1, as illustrated as a cavity 1a in Fig. 1. That is, the "cavity" is a space (hollow) existing in the particulate water absorbent and connecting to the outside. The cavities also include recesses, grooves, and the like formed on the surface of the particulate water absorbent 1. Specifically, as described below, the cavity refers to a hole, a through-hole, a recess, a groove, or the like that can be confirmed to exist on the surface of the particulate water absorbent 1 when three-dimensional image data is acquired under the following conditions using a microfocus X-ray CT system (inspeXio SMX-100CT/manufactured by SHIMADZU CORPORATION) and the three-dimensional image data is analyzed under the conditions described in Examples using high-speed three-dimensional analysis software (TRI/3D-VOL-FCS64/manufactured by RATOC SYSTEM ENGINEERING CO., LTD.).

In the present invention, the term "void" (also referred to as "closed cell") refers to a hollow, such as a bubble, not connected to the outside of the particulate water absorbent 1 (existing inside the particulate water absorbent 1) among hollows formed in the particulate water absorbent 1, as illustrated as a void 1b in Fig. 1. That is, the "void" is a closed space (hollow) existing in the particulate water absorbent and not connecting to the outside. Specifically, as described below, the void refers to a hollow, such as a bubble, that can be confirmed to exist inside the particulate water absorbent 1 when three-dimensional image data is acquired under the following conditions using a microfocus X-ray CT system (inspeXio SMX-100CT/manufactured by SHIMADZU CORPORATION) and the three-dimensional image data is analyzed under the conditions described in Examples using high-speed three-dimensional analysis software (TRI/3D-VOL-FCS64/manufactured by RATOC SYSTEM ENGINEERING CO., LTD.).

In the particulate water absorbent of the present invention, particles including cavities and voids are mainly water-absorbing resin particles, but other particles included in the particulate water absorbent may further include cavities and voids. In the particulate water absorbent (in all components constituting the particulate water absorbent), the cavities and the voids occupy a volume in a predetermined range as a whole, whereby the effect of the present invention is exhibited. In Examples described below, the cavity ratio to the total volume and the void ratio to the total volume are measured using the particulate water absorbent, but in the method for measuring the cavity ratio to the total volume and the void ratio to the total volume of the present invention, even when only the water-absorbing resin particles are to be measured or the particulate water absorbent is to be measured, the numerical values of the cavity ratio to the total volume and the void ratio to the total volume are almost unchanged.

In Examples of the present application, a particulate water absorbent obtained by adding an additive (DTPA or EDTMP as a chelating agent, tricalcium phosphate, hydrotalcite, or silica particles as inorganic fine particles, or sodium sulfite as an inorganic reducing agent) to the water-absorbing resin particles and a particulate water absorbent obtained without adding the additive to the water-absorbing resin particles are produced. For example, comparison between Example 1-1 and Example 1-11 shows that the differece is the presence or absence of the additive in the particulate water absorbent, but the cavity ratio to the total volume and the void ratio to the total volume are not different. The reason why the cavity ratio to the total volume and the void ratio to the total volume are not changed regardless of the addition or non-addition of the additive is that the resolution of the X-ray CT measurement is 10 um (the resolution is 10 um because the voxel size is 0.01 (mm/voxel)), the size of inorganic fine particles is smaller than or equal to the voxel size; a chelating agent, an inorganic reducing agent, and water-absorbing resin particles are integrated since the chelating agent and the inorganic reducing agent are usually added as an aqueous solution; and the amount of the additive added is as small as 1% or less with respect to the water-absorbing resin particles.

In the following description of the cavities and the voids, the cavities and the voids of the particulate water absorbent are described, but the cavities and the voids of the water-absorbing resin particles can be similarly understood.

The "cavity ratio to the total volume" means the ratio of the total volume of the cavities to the total volume of the particulate water absorbent, and is specifically calculated by the method described in Examples below. The "void ratio to the total volume" means the ratio of the total volume of the voids to the total volume of the particulate water absorbent, and is specifically calculated by the method described in Examples below.

In the particulate water absorbent of the present embodiment, when the cavity ratio to the total volume is 10% by volume or more and the void ratio to the total volume is 0.5% by volume or less, the speed of incorporating liquid is excellent, and the release amount is reduced. That is, the particulate water absorbent of the present embodiment can quickly absorb liquid and has a small release amount after absorption. When the cavity ratio to the total volume in the particulate water absorbent is less than 10% by volume, the high-viscosity liquid absorption rate decreases, and the release amount (re-wet amount) remarkably increases (Comparative Example 1-7). When the void ratio to the total volume in the particulate water absorbent is more than 0.5% by volume, the speed of incorporating liquid and the release amount (amount of return) in the particulate water absorbent remarkably increase (Comparative Examples 1-1 to 1-9).

Regarding of actual use of an absorbent article containing a particulate water absorbent, various use situations, for example, various cases, such as a case of urinating while a body weight is applied to the absorbent article, a case where the particulate water absorbent swells without pressurization during urinating but is pressurized with motion after urinating, or a case where blood is absorbed, are assumed. The present inventors have found that the shape of the particulate water absorbent (water-absorbing resin particles), that is, the existence ratio of cavities and voids of the particulate water absorbent (water-absorbing resin particles) is important in order to solve the problem of "the absorbent body (particulate water absorbent) can quickly absorb liquid and has a small release amount after absorption", and have paid attention to the cavity ratio to the total volume and the void ratio to the total volume in the particulate water absorbent (water-absorbing resin particles).

The particulate water absorbent (water-absorbing resin particles) having a large cavity ratio to the total volume tends to have a large specific surface area. However, since the cavity ratio to the total volume cannot be sufficiently evaluated only by measuring the specific surface area, the volume of recess portions of the particle surface is evaluated. When the cavity ratio to the total volume is 10% by volume or more, the rate at which the water-absorbing resin particles themselves absorb the liquid is improved due to the capillary phenomenon, and in addition thereto, the gap between the gel particles when the water-absorbing resin particles are swollen also increases, and the amount of the liquid retained in the cavity portion of the gel particles and the gap between the gel particles increases. As a result, the absorbability of the particulate water absorbent (water-absorbing resin particles) is improved, and the speed of incorporating liquid is improved. Thus, the particulate water absorbent according to the present invention is excellent in the speed of incorporating liquid even when used in an absorbent body having a small ratio of a fiber material such as pulp and an absorbent article such as a thin disposable diaper incorporating the absorbent body. In the particulate water absorbent (water-absorbing resin particles) in which the void ratio to the total volume is 0.5% by volume or less, when the liquid is absorbed into the particulate water absorbent (water-absorbing resin particles), liquid absorption interference by the voids does not occur, so that the absorbability of the particulate water absorbent (water-absorbing resin particles) is improved and the speed of incorporating liquid is improved. In addition thereto, the particulate water absorbent has so less the voids that the less liquid is absorbed by the voids , and the liquid absorption by the water-absorbing resin itself is promoted, whereby the liquid once absorbed is prevented from returning, and the release amount is reduced. Therefore, it is considered that by setting the existence ratio of the cavities and the voids in the particulate water absorbent (water-absorbing resin particles) in a predetermined range, the liquid can be quickly absorbed, and the release amount after absorption is small.

In one embodiment, the cavity ratio to the total volume in the particulate water absorbent (water-absorbing resin particles) is preferably more than 10% by volume, more preferably 11% by volume or more, still more preferably 12% by volume or more, particularly preferably 13% by volume or more, and more preferably 14% by volume or more. The upper limit of the cavity ratio to the total volume in the particulate water absorbent (water-absorbing resin particles) is preferably 40% by volume or less, more preferably 35% by volume or less, still more preferably 30% by volume or less, and particularly preferably 25% by volume or less, because the mechanical strength of the particulate water absorbent (water-absorbing resin particles) itself and the swollen gel is significantly reduced when the cavity ratio to the total volume in the particulate water absorbent (water-absorbing resin particles) is too large. In one embodiment, the void ratio to the total volume in the particulate water absorbent (water-absorbing resin particles) may be preferably 0.5% by volume or less, more preferably 0.4% by volume or less, and still more preferably 0.3% by volume or less. The lower limit of the void ratio to the total volume in the particulate water absorbent (water-absorbing resin particles) is not particularly limited, but is preferably 0.01% by volume or more.

In the present invention, the phrase "the liquid can be quickly absorbed, and the release amount after absorption is small" descrives evaluation for an absorbent body (absorbent sheet) obtained by laminating a water absorption layer containing a particulate water absorbent, pulp, or the like with a nonwoven fabric or the like, and does not descrive evaluation for the particulate water absorbent itself. In the release amount evaluation, the particulate water absorbent (water-absorbing resin particles) contained in the absorbent body does not always become saturated.

In the present invention, the "speed of incorporating liquid" and the "release amount" are different from the "speed of incorporating liquid" (or "absorption time", "absorption rate", or the like) and the "release amount" (also referred to as "return" or "Re-wet") usually used as physical property evaluation of the particulate water absorbent (water-absorbing resin particles). In the conventional evaluation method, an absorbent body prepared using the particulate water absorbent (water-absorbing resin particles) is disposed on a flat surface, and the rate of absorption of liquid (that is, "absorption rate") and the release amount are measured for the absorbent body disposed on the flat surface. In the present invention, the time for absorbing liquid (speed of incorporating liquid) and the release amount are measured for the absorbent body disposed in a U-shape. That is, the evaluation is carried out with imitating an actual use embodiment when the absorbent body is used as hygiene products such as diapers and sanitary goods. In the present specification, the speed of incorporating liquid is represented by a time [sec] for incorporating liquid. The liquid used for measuring the speed of incorporating liquid and the release amount of the present invention is a high-viscosity solution (for example, a solution having a viscosity of 5 mPa·s at 23°C). In the present specification, the speed of incorporating liquid and the release amount obtained by U-shape evaluation (evaluation by an absorbent body disposed in a U-shape) using a high-viscosity solution are referred to as "spot absorbency". Excellent spot absorbency means that the speed of incorporating liquid is high and the release amount is low. In the present specification, the time for absorbing liquid measured for an absorbent body disposed on a flat table using a 0.9% by mass aqueous sodium chloride solution at 23°C is referred to as the "absorption rate", and the time for absorbing liquid measured for an absorbent body disposed in a U-shape using a high-viscosity solution is referred to as the "speed of incorporating liquid". However, the "speed of incorporating liquid" may be simply referred to as the "absorption rate" as evaluation of physical properties of a general absorbent body.

When liquid is locally introduced into a certain portion of the absorbent body, the introduced liquid is absorbed while diffusing on the surface and inside of the absorbent body, and thus the speed of incorporating liquid into the absorbent body is related to absorption by permeation (longitudinal direction/thickness direction) and absorption by diffusion (lateral direction/plane direction). On the other hand, by disposing the absorbent body in a U-shape, the diffusion of the liquid is restricted, and thus it is presumed that absorption by permeation is a main absorption path. That is, by using U-shape evaluation, the evaluation is performed in a state where the incorporating of liquid into the absorbent body due to the diffusion by the own weight of the liquid and the suppression of the liquid return are restricted, and thus the water absorption performance (speed of incorporating liquid and release amount) of the particulate water absorbent present in the thickness direction can be more remarkably evaluated.

In the evaluation of the present invention, a high-viscosity solution is used. Usually, an aqueous solution of about 0.5% by mass is used as physiological saline or artificial urine for evaluation of absorption performance of the water absorbent, and the viscosity thereof is about 1 mPa·s at 23°C. In the present invention, since the high-viscosity solution is used, the diffusion rate due to its own weight is low. Therefore, the liquid introduced into the absorbent body is less likely to be diffused in the lateral direction/plane direction of the absorbent body as compared with physiological saline or artificial urine, and the liquid is locally retained at the position where the liquid is introduced. Thus, it is considered that the absorbent body evaluation of the present invention can more remarkably evaluate the absorption performance of the water absorbent.

[2-2] CRC (centrifuge retention capacity)

The CRC of the particulate water absorbent of the present invention is preferably 25 g/g or more, more preferably 30 g/g or more, still more preferably 32 g/g or more, and still even more preferably 33 g/g or more. When the CRC is 25 g/g or more, the amount of liquid absorbed becomes appropriate, and performance as an absorbent body of a sanitary article such as a disposable diaper is secured. The CRC of the particulate water absorbent of the present invention is preferably 70 g/g or less, more preferably 60 g/g or less, still even more preferably 50 g/g or less, and particularly preferably 40 g/g or less. When the CRC is 70 g/g or less, a high rate at which a body fluid such as urine or blood is absorbed is maintained, and thus the particulate water absorbent is also suitable for use in disposable diapers and the like having a high water absorption speed. The CRC can be controlled by the kind and the amount of the internal crosslinking agent, and the like. Also regarding the water-absorbing resin particles included in the particulate water absorbent of the present invention, the CRC is preferably in the same numerical range as that of the particulate water absorbent.

[2-3] Absorption capacity under load (AAP)

The AAP 0.3 psi (2.06 kPa) of the particulate water absorbent of the present invention is preferably 20 g/g or more, more preferably 24 g/g or more, still more preferably 26 g/g or more, still even more preferably 28 g/g or more, particularly preferably 29 g/g or more, and most preferably 30 g/g or more. The upper limit value is not particularly limited, but is preferably 40 g/g or less. When the AAP 0.3 psi (2.06 kPa) is in the above range, the effect of the present invention is further exhibited. A disposable diaper produced using a particulate water absorbent having an AAP 0.3 psi (2.06 kPa) in the above range has an excellent ability to soak up urine from pulp, can reduce the release amount, and can suppress skin rash and urine leakage. The AAP can be controlled by, for example, adjusting the particle size or changing the surface-crosslinking agent. Also regarding the water-absorbing resin particles included in the particulate water absorbent of the present invention, the AAP 0.3 psi (2.06 kPa) is preferably in the same numerical range as that of the particulate water absorbent.

[2-4] Moisture content and solid content ratio

The moisture content of the particulate water absorbent of the present invention is preferably 1% by mass or more, more preferably 5% by mass or more, still more preferably 6% by mass or more, particularly preferably 7% by mass or more, and most preferably 8% by mass or more. The upper limit of the moisture content of the particulate water absorbent is preferably 15% by mass or less, more preferably 14% by mass or less, still more preferably 13% by mass or less, and particularly preferably 12% by mass or less. By setting the moisture content within the above range, a water absorbent is obtained that has excellent powder characteristics (for example, fluidity, transportability, and damage resistance). The solid content ratio of the particulate water absorbent of the present invention is preferably 85% by mass to 99% by mass, more preferably 86% by mass to 95% by mass, still more preferably 87% by mass to 94% by mass, particularly preferably 88% by mass to 93% by mass, and most preferably 88% by mass to 92% by mass. Also regarding the water-absorbing resin particles included in the particulate water absorbent of the present invention, the moisture content and the solid content ratio are preferably in the same numerical ranges as those of the particulate water absorbent.

[2-5] Particle size

The mass average particle size (D50) of the particulate water absorbent of the present invention is preferably 200 um or more, more preferably 200 um to 600 $\mu$m, still more preferably 230 um to 550 $\mu$m, and particularly preferably 250 um to 500 um. The proportion of particles having a particle size of less than 106 um in the particulate water absorbent is preferably 10% by mass or less, more preferably 8% by mass or less, and still more preferably 6% by mass or less. The proportion of particles having a particle size of more than 850 um in the particulate water absorbent is preferably 5% by mass or less, more preferably 3% by mass or less, and still more preferably 1% by mass or less. The particulate water absorbent includes particles having a particle size of 106 um to 850 um at a content of preferably 90% by mass or more, more preferably 95% by mass or more, still more preferably 97% by mass or more, and particularly preferably 99% by mass or more. Ideally, the particulate water absorbent includes 100% by mass of particles having a particle size of 106 um to 850 um. The particulate water absorbent according to the present invention includes particles having a particle size of 250 um to 425 um at a content of preferably 30% by mass or more, more preferably 35% by mass or more, still more preferably 36% by mass or more, and particularly preferably 37% by mass or more. The upper limit of the proportion of particles having a particle size of 250 um to 425 um in the particulate water absorbent is not particularly limited, but practically, as one embodiment, may be 90% by mass or less, 85% by mass or less, 80% by mass or less, 75% by mass or less, 70% by mass or less, or 65% by mass or less. When the proportion of particles having a particle size of 250 um to 425 um is in the above range, the effect of the present invention is further exhibited. The logarithmic standard deviation ($\sigma\zeta$) of the particle size distribution is preferably 0.20 to 0.50, more preferably 0.25 to 0.40, and still more preferably 0.27 to 0.35. Also regarding the water-absorbing resin particles included in the particulate water absorbent of the present invention, the particle size is preferably in the same numerical range as that of the particulate water absorbent.

[2-6] High-viscosity liquid absorption time

The high-viscosity liquid absorption time is an absorption time of the water-absorbing resin performed using a high-viscosity liquid instead of physiological saline. The high-viscosity liquid absorption time is measured in accordance with the standard described in "Testing method for water absorption rate of super absorbent polymers - Explanations" in JIS K 7224-1996 by changing physiological saline to be used to a high-viscosity test solution prepared by the method described in Examples.

The high-viscosity liquid absorption time of the particulate water absorbent of the present invention is preferably 140 seconds or shorter, more preferably 135 seconds or shorter, still more preferably 130 seconds or shorter, still even more preferably 120 seconds or shorter, particularly preferably 110 seconds or shorter, and most preferably 100 seconds or shorter. The lower limit is not particularly limited, but is preferably 5 seconds or more, and more preferably 10 seconds or more.

When the high-viscosity liquid absorption time is in the above range, a predetermined amount of liquid can be absorbed in a short time. When the water-absorbing resin powder is used in an absorbent body of an absorbent article such as a disposable diaper, the user feels wetting of the skin for a reduced time and thus is less likely to feel discomfort, and in addition, the amount of leaking liquid can be reduced. Also regarding the water-absorbing resin particles included in the particulate water absorbent of the present invention, the high-viscosity liquid absorption time is preferably in the same numerical range as that of the particulate water absorbent.

[2-7] Water insoluble inorganic particles

The particulate water absorbent of the present invention preferably further includes water insoluble inorganic particles.

When the particulate water absorbent includes water insoluble inorganic particles, the moisture absorption fluidity of the particulate water absorbent can be improved. By adding the water insoluble inorganic particles, the amount of liquid absorbed by the absorbent article can be improved. The water-absorbing resin particles (composition) may lose fluidity when an absorbent article is produced, by storage after production. By mixing water insoluble inorganic particles with such water-absorbing resin particles (composition) that have lost their fluidity and suitably molding an absorbent body, the fluidity of the water-absorbing resin particles (composition) is recovered while maintaining the performance, so that productivity is improved. The moisture absorption fluidity refers to the fluidity of a particulate water absorbent when stored under high-humidity conditions, and the fluidity of the particulate water absorbent containing a water-absorbing resin generally decreases due to moisture absorption.

Examples of the water insoluble inorganic particles include multicomponent metal compounds such as hydrotalcite, silicon dioxide (silica), aluminum hydroxide, titanium dioxide, aluminum oxide, magnesium oxide, zinc oxide, talc, metal phosphate (for example, calcium phosphate such as tricalcium phosphate, barium phosphate, and aluminum phosphate), metal borate (for example, titanium borate, aluminum borate, iron borate, magnesium borate, manganese borate, and calcium borate), silicic acid or its salt, clay, diatomaceous earth, zeolite, bentonite, kaolin, activated clay, and the like. Among them, from the viewpoint of remarkably obtaining the effect of the present invention, the water insoluble inorganic particles preferably include at least one selected from a multicomponent metal compound, silicon dioxide, aluminum hydroxide, talc, and tricalcium phosphate, and more preferably include at least one selected from hydrotalcite, silicon dioxide, aluminum hydroxide, and tricalcium phosphate.

[3] Method for producing particulate water absorbent

A method for producing a particulate water absorbent according to the present invention includes a polymerization step, a drying step, and a surface crosslinking step. Preferably, this production method further includes a gel-crushing step simultaneously with the polymerization step or a gel-crushing step after the polymerization step, a gel sizing step before the drying step, and a cooling step, a pulverizing step of a dried product, a classification step before the surface crosslinking step, and a step of adding an additive after the surface crosslinking step. In addition, the production method may include a step of preparing an aqueous monomer solution, a separation step, a step of adding various additives, a fine powder removing step, and a fine powder recycle step. The production method can further include various known steps according to the purpose. Hereinafter, production processes [3-1] to [3-11] of the particulate water absorbent according to the present invention will be described.

[3-1] Step of preparing aqueous monomer solution

This is a step of preparing an aqueous solution containing a monomer (for example, a (meth)acrylic acid (salt)) as a main component (hereinafter, referred to as "aqueous monomer solution"). A slurry solution of a monomer can be also used as long as the water absorption performance of the obtained water-absorbing resin does not deteriorate, but in this section, an aqueous monomer solution will be described for convenience.

Here, the term "main component" means that the amount of the (meth)acrylic acid (salt) used (contained) is usually 50 mol% or more, preferably 70 mol% or more, and more preferably 90 mol% or more (with an upper limit of 100 mol%), with respect to the total amount of monomers (excluding an internal crosslinking agent) to be subjected to a polymerization reaction of a water-absorbing resin.

((Meth)acrylic acid (salt))

In the present invention, from the viewpoint of physical properties and productivity of the resulting particulate water absorbent, a (meth)acrylic acid and/or its salt (hereinafter, referred to as "(meth)acrylic acid (salt)") is used as a monomer.

The " (meth) acrylic acid" may be a known (meth) acrylic acid, and preferably methoxyphenols and more preferably p-methoxyphenol may be contained as a polymerization inhibitor included in the (meth)acrylic acid at preferably 200 ppm or less, more preferably 10 to 160 ppm, and still more preferably 20 to 100 ppm, from the viewpoint of polymerizability of the (meth)acrylic acid or color tone of the particulate water absorbent. The compound described in US 2008/0161512 A is also applicable to the present invention for impurities in (meth)acrylic acids.

The " (meth)acrylic acid salt" is obtained by neutralization of the (meth) acrylic acid with the following basic composition. In the present invention, a partially or entirely neutralized salt of the carboxyl groups included in the (meth)acrylic acid can be used as a monomer. For example, the (meth)acrylic acid salt is preferably a salt with a monovalent cation, more preferably at least one selected from an alkali metal salt, an ammonium salt, and an amine salt, still more preferably an alkali metal salt, still even more preferably at least one selected from a sodium salt, a lithium salt, and a potassium salt, and particularly preferably a sodium salt. The (meth)acrylic acid salt may be a commercially available (meth)acrylic acid salt (for example, sodium (meth)acrylate), or may be one obtained by neutralization in a particulate water absorbent manufacturing plant.

(Basic composition)

In the present invention, the "basic composition" refers to a composition containing a basic compound, and corresponds to, for example, a commercially available aqueous sodium hydroxide solution.

Specific examples of the basic compound include carbonates and hydrogencarbonates of alkali metals, hydroxides of alkali metals, ammonia, organic amines, and the like. Among these, from the viewpoint of physical properties of the resulting particulate water absorbent, the basic compound is desirably strongly basic. That is, hydroxides of alkali metals such as sodium hydroxide, potassium hydroxide, and lithium hydroxide are preferable, and sodium hydroxide is more preferable.

(Neutralization)

As neutralization in the present invention, either neutralization of a (meth)acrylic acid (before polymerization) or neutralization of a crosslinked hydrogel polymer obtained by crosslink polymerization of a (meth)acrylic acid (after polymerization) (hereinafter, referred to as "post-neutralization") may be selected or both may be used concurrently. Such neutralization may be performed continuously or in batches, and is not particularly limited, but the continuous form is preferred from the viewpoint of production efficiency and the like.

The conditions described in WO 2009/123197 A or US 2008/0194863 A are also applicable to the present invention as conditions such as a neutralization device, a neutralization temperature, and a retention time.

The rate of neutralization in the present invention is preferably 10 to 90 mol%, more preferably 40 to 85 mol%, still more preferably 50 to 80 mol%, and particularly preferably 60 to 75 mol%, with respect to the acid group of the monomer. When the rate of neutralization is less than 10 mol%, the fluid retention capacity may be significantly reduced. On the other hand, when the rate of neutralization is more than 90 mol%, a water-absorbing resin having a high absorption capacity under load may not be obtained.

The rate of neutralization is the same even in the case of post-neutralization. The above rate of neutralization is also applicable for the rate of neutralization of the particulate water absorbent as a final product. A rate of neutralization of 75 mol% refers to a mixture of 25 mol% of a (meth)acrylic acid and 75 mol% of a (meth)acrylic acid salt. The mixture may also be called a partially neutralized (meth)acrylic acid.

(Other monomers)

In the present invention, "other monomers" refer to monomers other than the (meth)acrylic acid (salt), and a particulate water absorbent can be produced by using other monomers and an acrylic acid (salt) in combination.

Examples of the other monomers include water soluble or hydrophobic unsaturated monomers. Specifically, the compounds described in US 2005/0215734 A (excluding (meth)acrylic acids) are also applicable to the present invention.

(Internal crosslinking agent)

As an internal crosslinking agent used in the present invention, the compounds described in U.S. Patent No. 6241928 are also applicable to the present invention. One or more compounds are selected thereamong in consideration of the reactivity. In the present invention, a crosslinked polymer using an internal crosslinking agent is preferably surface-treated in consideration of water absorption performance.

From the viewpoint of the water absorption performance or the like of the resulting water-absorbing resin, a compound having two or more polymerizable unsaturated groups is preferred, a compound having a pyrolytic property at the following drying temperature is more preferred, and a compound having two or more polymerizable unsaturated groups and a (poly)alkylene glycol structural unit is still more preferred for use as an internal crosslinking agent.

The polymerizable unsaturated group is preferably an allyl group or a (meth)acrylate group and more preferably a (meth)acrylate group. The (poly)alkylene glycol structural unit is preferably polyethylene glycol, and the n number is preferably 1 to 100 and more preferably 6 to 50.

Therefore, in the present invention, (poly)alkylene glycol di(meth)acrylate or (poly)alkylene glycol tri(meth)acrylate is preferably used, and (poly)ethylene glycol di(meth)acrylate is more preferably used.

The amount of the internal crosslinking agent used is preferably 0.0001 to 10 mol% and more preferably 0.001 to 1 mol%, with respect to the total amount of monomers. By setting the amount to use thereof within the above range, a desired water-absorbing resin is obtained. When the amount to use thereof is too small, the strength of the resulting crosslinked hydrogel polymer is insufficient, and there is a concern that workability and the like become a problem, and when the amount to use thereof is too large, the fluid retention capacity tends to decrease.

In the present invention, a method of adding a predetermined amount of an internal crosslinking agent in advance to an aqueous monomer solution to perform a crosslinking reaction simultaneously with polymerization is preferably applied. Meanwhile, a method of crosslinking by adding an internal crosslinking agent during or after polymerization, a method of radical crosslinking using a radical polymerization initiator, a method of radiation crosslinking using active energy rays such as electron beams or ultraviolet rays can also be used in addition to above method. These methods can also be used in combination.

(Other substances that are added in aqueous monomer solution)

In the present invention, from the viewpoint of improving the physical properties of the resulting water-absorbing resin, the following substances can also be added during preparation of an aqueous monomer solution.

Specifically, a hydrophilic polymer such as starch, starch derivative, cellulose, cellulose derivative, polyvinyl alcohol, polyacrylic acid (salt), or crosslinked polyacrylic acid (salt) can be added into the aqueous monomer solution at preferably 50% by weight or less, more preferably 20% by weight or less, still more preferably 10% by weight or less, and particularly preferably 5% by weight or less (lower limit is 0% by weight), or a foaming agent such as a carbonate, an azo compound, and gas bubbles, a surfactant, a chelating agent such as a diethylenetriaminepentaacetic acid (salt) and an ethylenediamine tetramethylene phosphonic acid (salt), a hydroxycarboxylic acid compound such as a lactic acid (salt), a chain transfer agent, or the like can be added into the aqueous monomer solution at preferably 5% by weight or less, more preferably 1% by weight or less, and still more preferably 0.5% by weight or less (lower limit is 0% by weight).

The substance described in the previous paragraph can be added not only to the aqueous monomer solution but also added during polymerization, or these forms can also be used in combination.

When a water soluble resin or a water-absorbing resin is used as a hydrophilic polymer, a graft polymer or a water-absorbing resin composition (for example, a starch-acrylic acid polymer, a PVA-acrylic acid polymer, or the like) is obtained. These polymers and the water-absorbing resin composition are also within the scope of the present invention.

(Concentration of monomer component)

In this step, each of the above substances is added when an aqueous monomer solution is prepared. The concentration of the monomer component in the aqueous monomer solution is not particularly limited, but is preferably 10 to 80% by weight, more preferably 20 to 75% by weight, and still more preferably 30 to 70 % by weight, from the viewpoint of the physical properties of the water-absorbing resin.

When aqueous solution polymerization or reversed-phase suspension polymerization is employed, a solvent other than water can be used concurrently as necessary. In this case, the type of the solvent is not particularly limited.

The "concentration of the monomer component" is a value determined by the following (Formula i), and the weight of the aqueous monomer solution does not include the weight of a graft component, a water-absorbing resin, or a hydrophobic solvent in reversed-phase suspension polymerization.

```
(Concentration of monomer component (% by weight)) =
(weight of monomer component)/(weight of aqueous monomer
solution) × 100   (Formula i)
```

[3-2] Polymerization step

This is a step of polymerizing the aqueous monomer solution obtained in the step for preparing an aqueous monomer solution to obtain a crosslinked hydrogel polymer (hereinafter, referred to as "hydrogel").

(Polymerization initiator)

The polymerization initiator used in the present invention is appropriately selected according to the form of polymerization and the like, and thus is not particularly limited. Examples of the polymerization initiator include thermal decomposition polymerization initiators, photolytic polymerization initiators, and redox polymerization initiators to be used in combination with a reducing agent that promotes decomposition of these polymerization initiators, and the like. Specifically, one or more of the polymerization initiators disclosed in U.S. Patent No. 7265190 are used. Note that a peroxide or an azo compound is preferably used, a peroxide is more preferably used, and a persulfate is still more preferably used, from the viewpoint of the handleability of the polymerization initiator and the physical properties of the particulate water absorbent or the water-absorbing resin.

The amount of the polymerization initiator used is preferably 0.001 to 1 mol% and more preferably 0.001 to 0.5 mol%, with respect to the monomer amount. The amount of the reducing agent used is preferably 0.0001 to 0.02 mol% with respect to the monomer.

Instead of the polymerization initiator, an active energy ray such as a radiation, an electron beam, or an ultraviolet ray may be irradiated for a polymerization reaction, or such active energy rays may be used in combination with a polymerization initiator.

(Form of polymerization)

The polymerization forms applied to the present invention are not particularly limited, but are preferably spray and droplet polymerization, aqueous solution polymerization, or reversed-phase suspension polymerization, more preferably aqueous solution polymerization or reversed-phase suspension polymerization, and still more preferably aqueous solution polymerization, from the viewpoint of water absorbing properties, ease of controlling polymerization, or the like. Among these, continuous aqueous solution polymerization is particularly preferable, and either continuous belt polymerization or continuous kneader polymerization is applicable.

Regarding specific forms of polymerization, continuous belt polymerization is disclosed in U.S. Patent No. 4893999, U.S. Patent No. 6241928, US 2005/215734 A, and the like, and continuous kneader polymerization is disclosed in U.S. Patent No. 6987151, U.S. Patent No. 6710141, and the like. Using the continuous aqueous solution polymerization described above improves the production efficiency of a water-absorbing resin.

Examples of a preferable form of the continuous aqueous solution polymerization include forms of "high temperature initiation polymerization" and "high concentration polymerization". The term "high temperature initiation polymerization" refers to a form in which polymerization is initiated at a temperature of an aqueous monomer solution of preferably 30°C or higher, more preferably 35°C or higher, still more preferably 40°C or higher, and particularly preferably 50°C or higher (with an upper limit of the boiling point), and the term "high concentration polymerization" refers to a form in which polymerization is performed at a monomer concentration of preferably 30% by weight or more, more preferably 35% by weight or more, still more preferably 40% by weight or more, and particularly preferably 45% by weight or more (with an upper limit of the saturated concentration). These forms of polymerization can also be used in combination.

In the present invention, polymerization can also be performed under air atmosphere, but polymerization may be performed under an inert gas atmosphere such as nitrogen or argon, from the viewpoint of the color tone of the resulting water-absorbing resin. In this case, for example, the oxygen concentration is preferably controlled to 1% by volume or less. The dissolved oxygen in the aqueous monomer solution is also preferably replaced with inert gas (for example, dissolved oxygen; less than 1 mg/l) .

As the form of the aqueous solution polymerization, the present invention can be carried out by a static polymerization method in which an aqueous monomer solution is polymerized in a static state, a stirring polymerization method in which an aqueous monomer solution is polymerized in a stirring device, and the like. In the static polymerization method, it is preferable to use an endless belt. The belt is preferably a resin or rubber belt that hardly dissipates polymerization heat from the contact material surface.

The reversed-phase suspension polymerization can also be employed as the polymerization form applied to the present invention, and is disclosed in WO 2009/025235 A, WO 2013/018571 A, WO 2016/182082 A, WO 2020/067310 A, and the like. Although batch-type reversed-phase suspension polymerization or continuous reversed-phase suspension polymerization may be employed, from the viewpoint that each operation in each step and between steps can be continuously performed and mass production is possible by long-time operation, continuous reversed-phase suspension polymerization is preferable, and liquid phase droplet continuous polymerization is more preferable.

[3-3] Chopping step

The chopping step is an optional step of cutting or roughly crushing the crosslinked hydrogel polymer into a size such that the resulting polymer can be put into the gel-crusher after the polymerization step and before the gel-crushing step. The chopping step is preferably performed particularly in a case where belt polymerization is performed in the polymerization step to obtain a sheet-formed or block-formed hydrogel. Therefore, in one embodiment of the present invention, the crosslinked hydrogel polymer obtained after the polymerization step has a sheet form, and a chopping step of chopping the sheet-formed crosslinked hydrogel polymer before the gel-crushing step is further included. The means for cutting or roughly crushing the hydrogel in the chopping step is not particularly limited, and a rotary cutter, a roller cutter, a guillotine cutter, or the like is used. The size into which the crosslinked hydrogel polymer is chopped is not particularly limited as long as the chopped hydrogel can be put into the gel-crusher described below, but the size of the chopped hydrogel is preferably 1 mm to 3 m, more preferably 5 mm to 2.5 m, and particularly preferably 1 cm to 2 m. The chopping step may be not performed as long as an object of the present invention is achieved. For example, in the case of performing reversed-phase suspension polymerization, a crosslinked hydrogel polymer in a particulate form is obtained, and thus this step is unnecessary.

[3-4] Gel-crushing step

This is an optional step in which, after polymerization, the cross-linked hydrogel polymer obtained in the polymerization step is crushed and thereby granulated to obtain a cross-linked particulate hydrogel polymer ("particulate hydrogel"). The particle diameter of the particulate hydrogel is adjusted to the preferable range described below so as to obtain (surface-crosslinked) water-absorbing resin particles having an intended form and intended performance in a high yield. In order to obtain a particulate hydrogel having a predetermined particle size, this step may be performed twice or more. The gel-crushing step may be not performed as long as an object of the present invention is achieved. For example, in the case of performing vapor phase polymerization or reversed-phase suspension polymerization, a crosslinked hydrogel polymer in a particulate form is obtained, and thus this step is unnecessary.

In the present invention, in the gel-crushing step, the type of the gel-crusher is not particularly limited as long as the water absorption performance (speed of incorporating liquid and release amount) is not impaired. Examples of the gel-crusher include a gel-crusher including a plurality of rotary stirring blades such as a batch-type or continuous double arm kneader, a screw extruder such as a single-screw extruder, a twin-screw extruder, and a meat chopper, a multiaxial kneader having two or more axes (kneader), a gel-crusher such as a cutter mill, and the like. When the polymerization step is kneader polymerization, the polymerization step and the gel-crushing step are performed simultaneously.

In one embodiment, in the gel-crushing step, a meat chopper or a multiaxial kneader having two or more axes is preferably used. In particular, when a hydrogel is obtained by aqueous solution polymerization, in the gel-crushing step, fine particles can be formed by using a meat chopper or a multiaxial kneader having two or more axes. The fine particles forms aggregates containing many cavities and fewer voids, resulting water-absorbing resin particles are derived from these aggregates. Therefore, the existence ratio of the cavities and the voids formed in the water-absorbing resin particles can be easily controlled, and the effect of the present invention can be further exhibited. That is, in a preferred embodiment, after the aqueous solution polymerization, the gel-crushing step by a meat chopper or the gel-crushing step by a multiaxial kneader having two or more axes is performed. For gel-crushing conditions or forms other than those disclosed above, the disclosed content in WO 2011/126079 A is preferably applied to the present invention.

(Gel-fluidizing agent)

In the present embodiment, a gel-fluidizing agent may be added before the gel-crushing step and/or during the gel-crushing step. As a result, a particulate hydrogel containing the gel-fluidizing agent is obtained. By adding the gel-fluidizing agent, in the drying step described below, adhesion or attachment between hydrogel particles is suppressed, formation of cavities is promoted, and formation of voids is suppressed, so that an effect of improving the water absorption performance of the resulting water-absorbing resin is obtained. The load is reduced in the pulverizing step after the drying step described below, resulting in a further effect of reducing the amount of fine powder generated. In the case of performing stirring and drying in the drying step, since the particle size of the resulting particulate dry polymer becomes closer to the product particle size, the above effect becomes remarkable. The gel-fluidizing agent is preferably added during the gel-crushing step, from the viewpoint that particles of the resulting particulate hydrogel uniformly contain the gel-fluidizing agent. Also in the case of not requiring the gel-crushing step such as reversed-phase suspension polymerization in the polymerization step, it is preferable to add the gel-fluidizing agent to the particulate hydrogel at least before the drying step.

The amount of the gel-fluidizing agent added is appropriately set according to the moisture content of the hydrogel or the particulate hydrogel and the kind of the gel-fluidizing agent. The amount to add thereof is preferably 0.001% by mass to 0.5% by mass, more preferably 0.01% by mass to 0.3% by mass, and still more preferably 0.02% by mass to 0.2% by mass with respect to the solid content of the hydrogel.

Examples of the gel-fluidizing agent include anionic, cationic, nonionic, and amphoteric surfactants, low-molecular-weight surfactants and high-molecular-weight surfactants thereof, and polymer lubricants.

(Surfactant)

Specific examples of the surfactant used as the gel-fluidizing agent include (1) nonionic surfactants such as sucrose fatty acid esters, polyglyceryl fatty acid esters, sorbitan fatty acid esters, polyoxyethylene sorbitan fatty acid esters, polyoxyethylene glycerin fatty acid esters, sorbitol fatty acid esters, polyoxyethylene sorbitol fatty acid esters, polyoxyethylene alkyl ethers, polyoxyethylene alkyl phenyl ethers, polyoxyethylene castor oil, polyoxyethylene hydrogenated castor oil, alkyl allyl formaldehyde condensed polyoxyethylene ethers, polyoxyethylene polyoxypropylene block copolymers, polyoxyethylene polyoxypropyl alkyl ethers, polyethylene glycol fatty acid esters, alkyl glucosides, N-alkyl gluconamides, polyoxyethylene fatty acid amides, polyoxyethylene alkylamines, phosphoric acid esters of polyoxyethylene alkyl ethers, and phosphoric acid esters of polyoxyethylene alkyl allyl ethers, (2) amphoteric surfactants such as alkyl dimethylaminoacetic acid betaines such as caprylic dimethylaminoacetic acid betaine, lauryl dimethylaminoacetic acid betaine, myristyl dimethylaminoacetic acid betaine, and stearyl dimethylaminoacetic acid betaine, alkylamide propyl betaines such as lauric acid amide propyl betaine, coconut oil fatty acid amide propyl betaine, and palm kernel oil fatty acid amide propyl betaine, alkyl hydroxysulfobetaines such as lauryl hydroxysulfobetaine, and alkyl carboxymethyl hydroxyethyl imidazolinium betaines such as 2-alkyl-N-carboxymethyl-N-hydroxyethyl imidazolinium betaine, (3) anionic surfactants such as alkyl amino monoalkali metal diacetates such as lauryl amino monosodium diacetate, lauryl amino potassium diacetate, and myristyl amino sodium diacetate, and (4) cationic surfactants such as long-chain alkyl dimethylaminoethyl quaternary salts. Two or more of these may be used in combination.

(Polymer lubricant)

In the present embodiment, polymer lubricants exemplified below can be added to the aqueous monomer solution or the hydrogel as long as an object of the present invention is achieved.

Specific examples of the polymer lubricant include maleic anhydride-modified polyethylene, maleic anhydride-modified polypropylene, a maleic anhydride-modified ethylene-propylene copolymer, a maleic anhydride-modified ethylene-propylene-diene terpolymer (EPDM), maleic anhydride-modified polybutadiene, a maleic anhydride-ethylene copolymer, a maleic anhydride-propylene copolymer, a maleic anhydride-ethylene-propylene copolymer, a maleic anhydride-butadiene copolymer, polyethylene, polypropylene, an ethylene-propylene copolymer, oxidized polyethylene, oxidized polypropylene, an oxidized ethylene-propylene copolymer, an ethylene-acrylic acid copolymer, ethyl cellulose, ethyl hydroxyethyl cellulose, polyalkylene oxides such as polyethylene glycol, and the like. These polymer lubricants have a molecular weight (weight average molecular weight) appropriately selected in a range of preferably 200 to 2000000, and more preferably 400 to 1000000. Two or more of these may be used in combination.

These polymer lubricants and the above-described surfactants may be also used in combination as a gel-fluidizing agent. In the case of using a surfactant and a polymer lubricant in combination, the total amount of the surfactant and the polymer lubricant added is appropriately set according to the form of polymerization, the composition of the aqueous monomer solution, and the moisture content of the hydrogel. In the case of adding the surfactant and the polymer lubricant to the aqueous monomer solution, the amount used with respect to the monomer component is set, in the case of adding to the hydrogel, the amount used with respect to the solid content ratio of the hydrogel is set, and in the case of adding to both the aqueous monomer solution and the hydrogel, the total amount used with respect to the monomer component and the solid content ratio of the hydrogel is set. These gel-fluidizing agents may overlap with the dispersion aid used in the reversed-phase suspension polymerization.

The total amount of the surfactant and the polymer lubricant added is preferably 1.0% by mass or less and more preferably 0.5% by mass or less, and preferably 0.05% by mass or more and particularly preferably 0.1% by mass or more.

(Hydrogen peroxide)

In the present embodiment, hydrogen peroxide may be added in a step before the drying step. By adding hydrogen peroxide in a step before the drying step and heating in the drying step or the subsequent step, when heat is applied after the drying step, the crosslinked structure in the water-absorbing resin is cut by the hydrogen peroxide, and the fluid retention capacity (CRC) can be efficiently increased without affecting the formation of cavities and voids in the gel-crushing and the gel sizing step. More specifically, it is preferable to add hydrogen peroxide to the aqueous monomer solution before the polymerization step and/or to add hydrogen peroxide to the hydrogel during the gel-crushing step.

The amount of hydrogen peroxide added to the aqueous monomer solution and/or the hydrogel is appropriately set in consideration of the polymerization conditions to be selected and the amount (ppm) of hydrogen peroxide remaining before drying, but, for example, in consideration of the physical properties of the resulting water-absorbing resin, particularly, improvement of the fluid retention capacity (CRC), the total amount of hydrogen peroxide is preferably 50 ppm (0.005% by mass) or more, more preferably 50 ppm (0.005% by mass) to 10000 ppm (1.0% by mass), and still more preferably 100 ppm (0.01% by mass) to 5000 ppm (0.5% by mass), with respect to the solid content mass (%) of the aqueous monomer solution or the crosslinked hydrogel polymer.

The method of adding hydrogen peroxide is not particularly limited, but from the viewpoint of ease of addition, hydrogen peroxide is preferably added in a state of being dissolved in an aqueous solution, and the concentration thereof is not particularly limited, but is usually about 1 to 40% by mass. In the aqueous hydrogen peroxide solution, a small amount of a hydrophilic solvent such as methyl alcohol, ethyl alcohol, n-propyl alcohol, or isopropyl alcohol may be contained. The temperature at which hydrogen peroxide or a hydrogen peroxide solution is added is not particularly limited, and may be, for example, in a range of -10 to 100°C and is more preferably 0 to 30°C.

In the case of adding hydrogen peroxide, it is preferable that the crosslinked hydrogel polymer and/or the dry polymer is heated so that the maximum reaching temperature thereof exceeds 160°C after the drying step. By such heating, the crosslinked structure in the water-absorbing resin is cut by the hydrogen peroxide, and a particulate water absorbent having a high fluid retention capacity (CRC) can be obtained.

(Surface tension)

The kind and the amount of the gel-fluidizing agent added are appropriately adjusted in consideration of, for example, the fluidity of the particulate hydrogel in the gel-crushing step and the drying step. The kind and the amount of the gel-fluidizing agent are preferably such that the surface tension of the water-absorbing resin in the final product is not excessively reduced, from the viewpoint of, for example, the release amount in actual use of the resulting water-absorbing resin in an absorbent article (diaper). For example, the kind and the amount of the gel-fluidizing agent are selected so that the surface tension of the water-absorbing resin (surface tension of the dispersion of the water-absorbing resin in physiological saline) is preferably 55 mN/m or more, more preferably 60 mN/m or more, and still more preferably 65 mN/m or more. This surface tension is measured with the method described in WO 2015/129917.

(Solid content ratio of hydrogel)

The solid content ratio of the hydrogel (hereinafter, gel solid content ratio) to be subjected to the gel-crushing step is preferably 25% by mass or more. The gel solid content ratio is more preferably 25% by mass to 75% by mass, still more preferably 30% by mass to 70% by mass, even still more preferably 35% by mass to 65% by mass, and particularly preferably 40% by mass to 60% by mass, from the viewpoint of suppression of aggregation between hydrogel particles after gel-crushing, the energy required for crushing, the drying efficiency, and the absorption performance.

(Moisture content of particulate hydrogel)

The moisture content of the particulate hydrogel (hereinafter, gel moisture content) is determined by the measurement method described in the following Examples. From the viewpoint of the fluidity of the particulate hydrogel in the drying step described below, the gel moisture content is preferably 25% by mass or more, more preferably 30% by mass or more, still more preferably 35% by mass or more, particularly preferably 40% by mass or more, and extremely preferably 43% by mass or more. Excessive high concentration polymerization may lower the physical properties of the water-absorbing resin, and from the viewpoint of drying efficiency and absorption performance, the gel moisture content is preferably 75% by mass or less, more preferably 60% by mass or less, and particularly preferably 55% by mass or less.

(Particle size of particulate hydrogel)

From the viewpoint of controlling the particle size and the existence ratio of cavities and voids of the resulting water-absorbing resin, the mass average particle size of the particulate hydrogel obtained through the gel-crushing step (particulate hydrogel before drying) is preferably 10 um to 1000 $\mu$m, more preferably 20 um to 800 um, still more preferably 40 um to 500 $\mu$m, particularly preferably 50 um to 300 $\mu$m, and most preferably 60 um to 200 $\mu$m, in terms of solid content. The average particle size of the particulate hydrogel in terms of solid content (average gel particle size in terms of solid content) can be measured by the method described in "Weight average particle size ($\mu$m) of hydrogel particles in terms of dried product" of WO 2016/204302.

(Gel-crushing by meat chopper)

In one embodiment, in the gel-crushing step, gel-crushing using a meat chopper 100 (screw extruder) illustrated in Fig. 2A is preferable (see WO 2013/0023187 for details of Fig. 2A). In the gel-crushing using the conventional meat chopper 100, a die (also referred to as "die plate" or "perforated plate") is provided in an extrusion port 16, but in the case of using the meat chopper 100 in the gel-crushing step of the present invention, it is preferable to perform gel-crushing without using such a die. When the die is not provided at the extrusion port 16 of the meat chopper, the pressure applied to the gel at the time of crushing is reduced, and excessive adhesion between the crushed gel particles is suppressed, so that the cavity in the water-absorbing resin can be sufficiently held. In the present embodiment, a supporting tool 17 is provided instead of the die at the extrusion port 16 of the meat chopper 100.

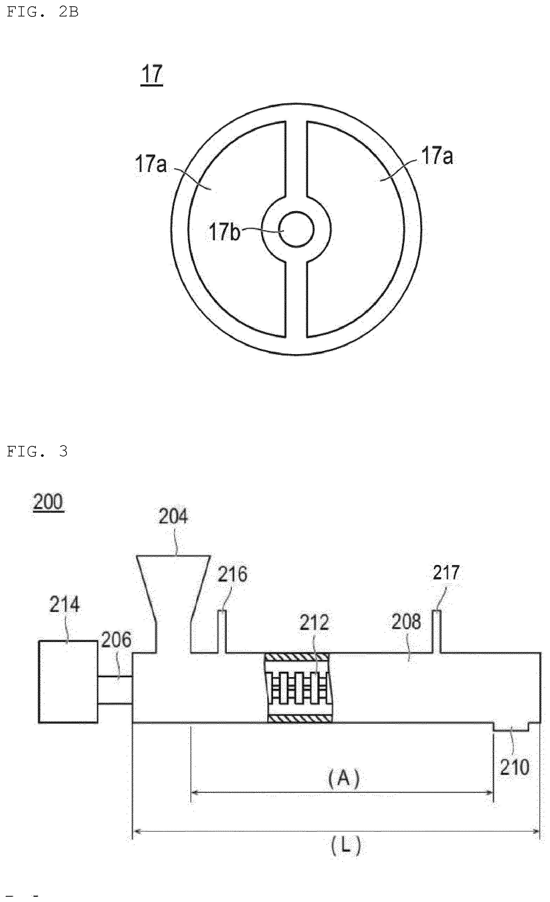

Fig. 2B illustrates one embodiment of the supporting tool 17. The supporting tool 17 is a member supporting a screw 13 in the extrusion port 16. In the supporting tool 17 illustrated in Fig. 2B, a region 17a is a portion through which the crushed particulate hydrogel passes, and a region 17b is a portion supporting the shaft of the screw 13. Therefore, the region 17b is a portion through which the shaft of the screw 13 passes, and the particulate hydrogel does not pass through the region 17b. The shape of the supporting tool 17 is not particularly limited as long as it has the minimum strength necessary for supporting the shaft of the screw 13, but the supporting tool 17 illustrated in Fig. 2B has a shape in which the aperture ratio is as large as possible (the number of holes is reduced as much as possible, and the size of one hole is increased as much as possible), which is preferable. The aperture ratio is defined as a value calculated by taking the area of the region 17a (the portion through which the crushed particulate hydrogel passes) as a numerator and taking the circular area of the outer diameter D of the supporting tool 17 as a denominator. In the present examples, a supporting tool having an aperture ratio of 56% is used.

In the crushing by a meat chopper, it is preferable to pass the meat chopper preferably twice or more and more preferably three times or more. In the present invention, the upper limit value of a gel grinding energy (GGE) for gel-crushing a hydrogel is preferably 60 [J/g] or less, more preferably 50 [J/g] or less, and still more preferably 40 [J/g] or less. The lower limit value is preferably 18 [J/g] or more, more preferably 20 [J/g] or more, and still more preferably 25 [J/g] or more. For example, in the present invention, a gel grinding energy (GGE(1)) for gel-crushing a hydrogel is 18 to 60 [J/g], preferably 20 to 50 [J/g], and more preferably 25 to 40 [J/g]. A gel grinding energy (GGE(2)) for gel-crushing a hydrogel is 18 to 60 [J/g], preferably 20 to 50 [J/g], and more preferably 25 to 40 [J/g]. By controlling the GGE(1) and the GGE(2) within the above ranges, it is possible to perform gel-crushing while giving an appropriate shear/compressive force to the hydrogel. The gel grinding energy (GGE(1)) is defined including the energy during the idle operation of the gel-crusher, and the gel grinding energy (GGE(2)) is defined by subtracting the energy during the idle operation of the gel-crusher. When gel-crushing is performed a plurality of times, the gel grinding energies given in each crushing are summed.

The gel grinding energy, which is described in WO 2011/126079 A (corresponding to US 2013/026412 A and US 2016/332141 A), means mechanical energy per unit weight (unit weight of a crosslinked hydrogel polymer) required by a gel-crusher at the time of gel-crushing the crosslinked hydrogel polymer, and is calculated by the following (Formula a-1) in the case of a gel-crusher driven by three-phase AC power.

```
Gel grinding energy GGE(1) [J/g]

= {3^(1/2) × voltage × current × power factor × motor
efficiency}/{weight of hydrogel put into gel-crusher in 1
second} ···(Formula a-1)
```

Here, the power factor and the motor efficiency are values unique to the gel-crusher that depend on, for example, operating conditions of the gel-crusher, and are values of 0 to 1. In the case of a gel-crusher driven by single-phase AC power, the value $3^{1/2}$ in the above formula is changed to 1 to calculate the gel grinding energy. In the above (Formula a-1), the unit of the voltage is [V], the unit of the current is [A], and the unit of the mass of the hydrogel is [g].

The gel grinding energy GGE(2) defined by subtracting the energy during the idle operation of the gel-crusher is calculated by the following (Formula a-2).

```
Gel grinding energy GGE(2) [J/g]

= {√3 × voltage × (current during gel-crushing - current
during idle operation) × power factor × motor
efficiency}/{weight of hydrogel put into gel-crusher in 1
second} ···(Formula a-2)
```

In the above (Formula a-2), similarly to (Formula a-1), the power factor and the motor efficiency are values unique to the gel-crusher that depend on operating conditions of the gel-crusher and the like, and are values of 0 to 1.

In the above (Formula a-2), the unit of the voltage is [V], the unit of the current is [A], and the unit of the mass of the hydrogel is [g].

As the gel-crushing using a meat chopper (screw extruder), the conditions described in WO 2013/0023187 can be applied to the present invention, except for the above-described configuration of the die (the supporting tool 17 is used instead of using the die in the extrusion port 16) and the gel grinding energy.

(Gel-crushing by multiaxial kneader having two or more axes)

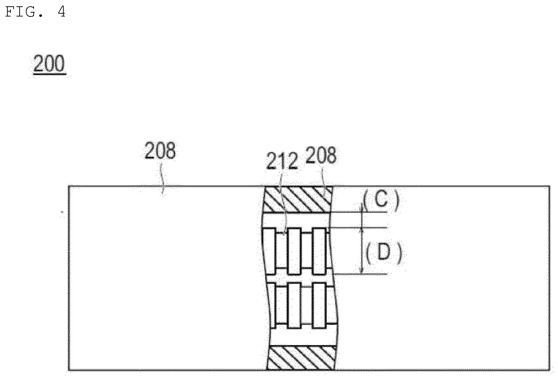

In one embodiment, in the gel-crushing step, gel-crushing using a multiaxial kneader illustrated in Figs. 3 and 4 is preferable. In the gel-crushing step after the polymerization step, a gel-crusher is used that has an input port, a main body incorporating a plurality of rotation axes, and a discharge port as illustrated in Figs. 3 and 4. Each rotation axis includes a crushing means. In this gel-crusher, the crosslinked hydrogel polymer continuously put into the main body from the input port is crushed by the crushing means included in the rotation axes at 50°C or higher, and the resulting crosslinked particulate hydrogel polymer is continuously taken out from the discharge port. That is, the crosslinked hydrogel polymer put into the main body from the input port is crushed by the crushing means included in the rotation axes while moving from the input port to the discharge port with maintaining the temperature of the crosslinked hydrogel polymer at 50°C or higher. In the present invention, the term "main body" means a body portion (reference sign 208 in Fig. 3) in which a plurality of rotation axes and crushing means are placed, which is also referred to as a barrel, a trough, a casing, or the like.

The multiaxial kneader may be set vertically (so that the hydrogel moves in the vertical direction), or may be set laterally or horizontally (so that the hydrogel moves in the lateral direction or the horizontal direction) as long as gel-crushing is continuous. The vertical gel-crusher and the horizontal gel-crusher may be inclined at 0° to 90° with respect to the horizontal direction. For example, the horizontal continuous crusher illustrated in Fig. 3 is appropriately inclined as necessary, and the inclination may be downward or upward from the input port to the discharge port (that is, with respect to the moving direction of the hydrogel). The inclination angle is usually 0° to 10°, preferably 0° to 1°, and particularly preferably 0°.

In the multiaxial kneader, the hydrogel input from the input port is crushed to an intended particle size without applying excessive pressure to the hydrogel before being discharged from the discharge port. Therefore, in the multiaxial kneader, extrusion from a die is not essential unlike in a conventional extruder (meat chopper), and a particulate hydrogel adjusted to an intended particle size is taken out from the discharge port. By using the multiaxial kneader, the pressure applied to the gel at the time of crushing is reduced, and excessive adhesion between the crushed gel particles is suppressed, so that the cavity in the water-absorbing resin can be sufficiently held.

The multiaxial kneader preferably includes a heating means and/or a temperature-keeping means from the viewpoint of continuously performing gel-crushing at 50°C or higher. The heating means and/or the temperature-keeping means is not particularly limited, but from the viewpoint of preventing adhesion and aggregation of the hydrogel and the particulate hydrogel, a heating means is preferable that uses direct heat transfer by convection heat transfer and/or indirect heat transfer by heat conduction from a heating surface (contact surface with the hydrogel, heat source portion) of the gel-crusher heated with a heat medium. More preferable heating means include ventilation heating by direct heat transfer and outer wall heating by indirect heat transfer.

The heating means and/or the temperature-keeping means, and more preferably the heating means is preferably provided on the outer surface of the main body, from the viewpoint of reducing excessive load on the hydrogel. Examples of the temperature-keeping means include a method in which a part or the whole of the outer surface of the main body (preferably 50% or more, more preferably 80% or more, and particularly preferably the whole of the outer surface of the main body) is covered with a heat insulating material. Examples of the heating means include electric tracing, steam tracing, a jacket heated by a heated medium, and the like. In order to obtain water-absorbing resin particles having a cavity required in the present invention, it has been found that the influence of changes in the adherability and fluidity of the hydrogel particles due to temperature changes is greater than that assumed in the related art. As a result, studies in the present invention have revealed that the energy required for crushing the hydrogel and the adhesion between the crushed gel particles greatly depend on the temperature. If the multiaxial kneader includes the heating means and/or the temperature-keeping means, the gel-crushing step can be performed in a further preferable temperature range. Furthermore, the quality of gel-crushing can be prevented from deterioration caused by the influence of a temperature difference between seasons or between day and night. In addition, the gel-crusher can be smoothly brought to a stable operation even at the time of start-up.

The kind of the crushing means included in each rotation axis is not particularly limited as long as an effect of the present invention can be obtained. Examples of the crushing means having a shearing action on the hydrogel include disks having various shapes. Disks are referred to as a chip, a paddle, an element, a kneading, a rotor, or the like in some cases. The shape of the disk is not particularly limited, and is appropriately selected from circular plate shapes, elliptical shapes, substantially triangular shapes, and the like. Disks having different shapes can also be used in combination, and the arrangement thereof is appropriately adjusted from the viewpoint of the intended particle diameter of the particulate hydrogel and the energy required for crushing. In addition, an arm, a vane, a blade, a cut disk (CD), or the like may be used in combination as a crushing means.

For example, in a case where each rotation axis includes a disk having a circular plate shape or an elliptical shape as a crushing means, the ratio of the effective length inside the main body, L (Length) to the maximum diameter of the disk, D (Diameter: in the case of using a plurality of disks having different diameters, the diameter of the largest disk) is defined as L/D. The value of L/D is preferably 5 to 40, more preferably 6 to 30, and still more preferably 6.5 to 20. The effective length L means the length (entire length) of the main body (barrel) portion in the axial direction including the portion from the input port to the discharge port, as illustrated in Fig. 3.

The distance (clearance) between the disk and the main body (barrel) may depend on the location. When the minimum clearance C is defined as the shortest distance between the outer periphery of the disk and the inner wall of the main body (barrel), the minimum clearance C is preferably 20% or less, more preferably 15% or less, still more preferably 10% or less, and particularly preferably 5% or less of the maximum diameter of the disk, D. If the minimum clearance C is the above-described upper limit or less, the shearing force between the barrel and the disk is strong at the time of gel-crushing, resulting in favorable gel-crushing efficiency. The minimum clearance C is preferably 0.2% or more, more preferably 0.5% or more, and still more preferably 1% or more of the maximum diameter of the disk, D. If the minimum clearance C is the above-described lower limit or more, contact between the disk and the inner wall of the main body (barrel) is suppressed, resulting in suppression of contamination with a metal foreign substance due to wear. In a preferred embodiment of the present invention, the minimum clearance C is 0.2 to 20% of the maximum diameter of the disk, D.

The rotation speeds of the plurality of rotation axes of the multiaxial kneader may be constant or not constant, and is appropriately set according to the device. The rotation speed is preferably in the range of 1 rpm to 1000 rpm, more preferably 3 rpm to 500 rpm, and still more preferably 5 rpm to 300 rpm. In a case where the rotation axes have different rotation speeds, the ratio of the rotation speed of one rotation axis to the rotation speed of the other rotation axis is usually in the range of 1 to 10, and preferably in the range of 1 to 2.

In a case where the plurality of rotation axes include a disk as a crushing means, the peripheral speed (V) of the disk defined by the following (Formula b) may be constant or not constant, and is appropriately set according to the device. The peripheral speed is preferably 0.05 m/s to 5 m/s, more preferably 0.1 m/s to 5 m/s, still more preferably 0.15 m/s to 3 m/s, and particularly preferably 0.2 m/s to 2 m/s. A peripheral speed higher than the above range makes the shearing force applied to the hydrogel excessive and thus causes deterioration of the physical properties and excessive compaction in the hydrogel particles after crushing, and therefore such a peripheral speed is not preferable. A peripheral speed lower than the above range leads to reduce the throughput (Processing amount per unit time) in the gel-crushing step, and therefore such a peripheral speed is not preferable. In a case where the peripheral speeds of each disk with each rotating axis are different, the ratio of the peripheral speed in one rotation axis to the peripheral speed in the other rotation axis is usually in the range of 1 to 10, and preferably in the range of 1 to 2.

$$\mathtt{Peripheral\ speed\ (V)\ (m/s)\ =\ \Pi D\ \times\ n/60\ \cdots (Formula\ b)}$$

In (Formula b), V represents the peripheral speed of a disk (unit: m/s), D represents the maximum diameter of the disk (unit: m), and n represents the rotation speed of the disk per unit time (unit: rpm).

The rotation directions of the plurality of rotation axes may be the same so that the rotation axes rotate in the same direction, or may be different so that the rotation axes rotate in opposite directions. In a gel-crusher with the same rotation direction, a self-cleaning property can be expected, and in a gel-crusher with different rotation directions, a strong shearing force can be expected. The rotation direction of each rotation axis is appropriately selected according to the combination with the above-described arrangement of the crushing means (disk pattern).

The multiaxial kneader preferably has a function of supplying water and/or water vapor to the inside of the main body. By gel-crushing while supplying water and/or water vapor (preferably water and water vapor), water-absorbing resin particles including sufficiently desired cavities can be obtained. Therefore, according to one embodiment of the present invention, the inside of the main body is supplied with water and/or water vapor in the gel-crushing step. The gel-crusher may include a plurality of input ports as a means for supplying water and/or water vapor. The input port of water and/or water vapor may be placed at any position, and is preferably placed on the side of the input port of the hydrogel. Water and water vapor may be supplied from different input ports.

The way of adding water vapor is not particularly limited, and for example, a gas such as air, dry air, or nitrogen may be mixed with water vapor and added as a mixed gas. The pressure of the water vapor to be added is not particularly limited, and is preferably 0.2 to 0.8 MPa. The temperature of the water and/or the water vapor (including the mixed gas) is not particularly limited, and is preferably 50°C or higher, more preferably 60°C or higher, still more preferably 70°C or higher, and particularly preferably 80°C or higher. The temperature is preferably 200°C or lower, more preferably 170°C or lower, still more preferably 150°C or lower, still even more preferably 120°C or lower, and particularly preferably 100°C or lower, from the viewpoint of suppressing excessive temperature rise and hydrogel drying. In a preferred embodiment, the water and/or the water vapor supplied to the inside of the main body has a temperature of 50 to 120°C. It is also possible to adjust the temperature of the hydrogel and the particulate hydrogel in the multiaxial kneader according to the temperature and the input amount of the water and/or the water vapor (including the mixed gas) used. In this case, the water vapor and/or the mixed gas acts as a heat medium for direct heat transfer to heat or keep the hydrogel and the particulate hydrogel inside the main body to a predetermined temperature. In the water and/or the water vapor (including the mixed gas) to be added, additives may be blended such as a gel-fluidizing agent, a crosslinking agent, an oxidizer, a reducing agent, and a polymerization initiator described below.

The amount of the water and/or the water vapor supplied is preferably 0.1% by mass to 50% by mass, more preferably 0.5% by mass to 40% by mass, and still more preferably 1% by mass to 30% by mass with respect to the mass of the hydrogel converted to a solid content.

The multiaxial kneader preferably includes the heating means and/or the temperature-keeping means on the outer surface of the main body, and a liquid heat medium such as hot water or oil may be introduced into a jacket or the like placed on the outer surface of the main body, or a heated gas (hot gas) may be introduced as a heat medium. These heat media act as heat media for indirect heat transfer. The temperature of the heat medium is preferably 50°C or higher, more preferably 60°C or higher, still more preferably 70°C or higher, and particularly preferably 80°C or higher, from the viewpoint of heating efficiency and/or temperature-keeping efficiency of indirect heat transfer. Meanwhile, from the viewpoint of suppressing excessive temperature rise and hydrogel drying, the temperature of the heat medium is preferably 200°C or lower, more preferably 170°C or lower, still more preferably 150°C or lower, still even more preferably 130°C or lower, and particularly preferably 110°C or lower. Particularly preferred heat media are hot water and water vapor. The temperature of the heat medium may be constant, or may be appropriately changed during gel-crushing.

More preferably, before the hydrogel is put into the multiaxial kneader, the temperature of the inside (inner surface) of the main body is heated to 50°C or higher, more preferably 60°C or higher, still more preferably 70°C or higher, and still even more preferably 80°C or higher. This heating reduces adhesion of the hydrogel to the inner surface of the main body. As a result, the resulting water-absorbing resin particles includes sufficient cavities, and the water absorption performance is further improved. That is, in the gel-crushing by the multiaxial kneader, the inner surface of the main body is preferably heated to the above-described temperature or higher before input of the hydrogel at the start of gel-crushing. More preferably, the inner surface of the main body, the plurality of rotation axes, and the outer surface of the crushing means equipped each rotation axis are preferably heated to the above-described temperature or higher. Meanwhile, from the viewpoint of suppressing excessive temperature rise and hydrogel drying, before the hydrogel is put into the gel-crusher, the temperature of the inside (inner surface) of the main body is preferably 200°C or lower, more preferably 170°C or lower, still more preferably 150°C or lower, still even more preferably 130°C or lower, and particularly preferably 110°C or lower. For example, the temperature of the inside (inner surface) of the main body can be adjusted to a desired range by circulating and holding a heat medium inside the jacket provided in the main body. The temperature of the inside (inner surface) of the main body is preferably kept in the above range in the gel-crushing step from the viewpoint of keeping the temperature in the gel-crushing step at 50°C or higher.

Here, the phrase "the crosslinked hydrogel polymer is continuously crushed at 50°C or higher" means that the crosslinked hydrogel polymer is continuously crushed while the temperature of the crosslinked hydrogel polymer is maintained at 50°C or higher in the section shown by (A) in Fig. 3, that is, the section from the input port to the discharge port. For example, if the temperature T1 of the crosslinked hydrogel polymer to be put into the input port of the multiaxial kneader is 50°C or higher and the temperature of the heat medium in the jacket placed outside the main body of the gel-crusher is 50°C or higher, the temperature of the crosslinked hydrogel polymer can be maintained at 50°C or higher in the section (A) in Fig. 3, and thus the crosslinked hydrogel polymer can be continuously crushed at 50°C or higher. The above definition also includes, for example, a case in which although the temperature T1 of the crosslinked hydrogel polymer to be put into the input port of the multiaxial kneader is 50°C or lower, the temperature of the crosslinked hydrogel polymer is rapidly raised, for example, by supplying high-temperature water and/or water vapor at the input port portion or by setting the temperature of the heat medium in the jacket on the main body of the gel-crusher to a high temperature and thus the crosslinked hydrogel polymer is continuously crushed at 50°C or higher in the portion (A).

The temperature at which the crosslinked hydrogel polymer is continuously crushed is preferably 50°C or higher, more preferably 60°C or higher, still more preferably 70°C or higher, and still even more preferably 80°C or higher.

The upper limit of the temperature at which the crosslinked hydrogel polymer is continuously crushed is not particularly limited, but from the viewpoint of suppressing excessive temperature rise and hydrogel drying, the upper limit is preferably 200°C or lower, more preferably 170°C or lower, still more preferably 150°C or lower, still even more preferably 130°C or lower, and particularly preferably 110°C or lower.

Figs. 3 and 4 illustrate an example of a multiaxial kneader (gel-crusher) 200 suitably used in the present invention. Fig. 3 is a partially cutaway side view of the gel-crusher 200, and Fig. 4 is an enlarged view of the gel-crusher 200 (a view of the central part of the main body as viewed from above). Hereinafter, a basic configuration and a method of use of the gel-crusher 200 will be described with reference to Figs. 3 and 4.

As illustrated in the drawing, the gel-crusher 200 includes an input port 204, a main body 208, two rotation axes 206, a discharge port 210, a drive device 214, and a gas inlet 216. The main body 208 is also referred to as a barrel. In Fig. 1, two rotation axes 206 are provided side by side in the direction perpendicular to the page. Each rotation axis 206 extends in the length direction of the main body 208. One end of the rotation axis 206 penetrates the main body 208 and is connected to the drive device 214. Although not illustrated, in the gel-crusher 200, the other end of the rotation axis 206 is rotatably supported at the rear of the main body 208 via a bearing. That is, the rotation axis 206 is held at both ends. However, the gel-crusher in the production method according to the present invention is not limited to such a both-end-supported form, and may have a so-called cantilever structure without the end of the rotation axis supported at the rear of the main body 208 via a bearing as long as an object of the present invention is achieved. The Input port 204, the gas inlet 216, a gel-fluidizing agent input port 217, and the discharge port 210 are each fixed to the main body 208 and linked to the inside of the main body 208. The left-right direction in Fig. 3 is the length direction of the main body 208 and the axial direction of the rotation axis 206. Although not illustrated, the main body 208 has a jacket structure.

Fig. 4 illustrates a part of the main body 208 of the gel-crusher 200. As illustrated in the drawing, the gel-crusher 200 has two rotation axes 206 incorporated in the main body 208. The two rotation axes 206 each have a crushing means 212 on its outer periphery. That is, the crushing means 212 and the rotation axis 206 are configured as separate bodies. In this embodiment, the rotation axis 206 includes a plurality of disks as the crushing means 212. The vertical direction in Fig. 4 is the width direction of the main body 208. The left-right direction in Fig. 4 is the length direction of the main body 208 and the axial direction of the rotation axis 206.

In a preferred embodiment in which the gel-crushing step is performed using the gel-crusher 200, first, a heat medium is circulated in the jacket, which is not illustrated, to heat the main body 208. Thereafter, each rotation axis 206 is rotated by the drive device 214 (such as a motor). As the rotation axis 206 rotates, the plurality of disks as the crushing means 212 rotate.

Next, a hydrogel is continuously put into the input port 204. At this time, water or water vapor may be simultaneously put into the input port 204. Furthermore, water vapor or water may be put into the gas inlet 216. The hydrogel and the main body 208 are heated by the water or the water vapor, and kept at a predetermined temperature.

The hydrogel put into the main body 208 moves toward the discharge port 210.

The hydrogel is in contact with the crushing means 212 (that is, a plurality of disks) in the main body 208. The hydrogel is grain-refined by shearing action of the plurality of rotating disks. The hydrogel moves toward the discharge port 210, while crushed, by the shearing action of the crushing means 212. At the discharge port 210, a particulate hydrogel adjusted to a predetermined particle size is taken out.

The rotation axis of the gel-crusher includes a plurality of disks. The plurality of disks may have the same shape or different shapes, and preferably have different shapes. The combination of the disks is appropriately changed according to the physical properties of the hydrogel, an intended size of the crushed gel, and the like with reference to, for example, Patent Literature (JP 2005-35212 A).

Examples of the gel-crusher (multiaxial kneader) having such a basic configuration include multiaxial kneaders (kneaders) having two or more axes. Specific examples of the multiaxial kneaders include biaxial, triaxial, four-axial, and eight-axial kneaders. As the gel-crusher, a continuous crusher is preferably used from the viewpoint of production efficiency. Specific examples of the gel-crusher include a CKH continuous kneader (manufactured by HONDA MACHINERY WORKS CO., LTD.), a twin-screw extruder, TEX (manufactured by The Japan Steel Works, Ltd.), a twin-screw extruder, TEX αIII (manufactured by The Japan Steel Works, Ltd.), a continuous kneader (manufactured by DALTON CORPORATION), a KRC hybrid reactor (manufactured by Kurimoto, Ltd.), a KRC kneader (KURIMOTO-READCO CONTINUOUS KNEADER manufactured by Kurimoto, Ltd.), a KEX extruder (manufactured by Kurimoto, Ltd.), a KEXD extruder (manufactured by Kurimoto, Ltd.), a double-arm kneader ruder (manufactured by MORIYAMA), a twin-screw kneading extruder, TEX-SSG (manufactured by Toshiba Machine Co., Ltd.), a twin-screw kneading extruder, TEX-CS (manufactured by Toshiba Machine Co., Ltd.), a twin-screw kneading extruder, TEX-SX (manufactured by Toshiba Machine Co., Ltd.), a twin-screw kneading extruder, TEX-DS (manufactured by Toshiba Machine Co., Ltd.), a twin-screw kneading extruder, TEX-A (manufactured by Toshiba Machine Co., Ltd.), a twin-screw kneading extruder, TEX-B (manufactured by Toshiba Machine Co., Ltd.), a twin-screw kneading extruder, TEX-BS (manufactured by Toshiba Machine Co., Ltd.), and quad/octa screw kneading extruders, WDR series (manufactured by TECHNOVEL CORPORATION). Therefore, in a preferred embodiment of the present invention, the gel-crusher is a continuous multiaxial kneader.

In the crushing by the multiaxial kneader, the upper limit value of a gel grinding energy (GGE) for gel-crushing a hydrogel is preferably 150 [J/g] or less, more preferably 130 [J/g] or less, and still more preferably 120 [J/g] or less. The lower limit value is preferably 20 [J/g] or more, more preferably 40 [J/g] or more, and still more preferably 50 [J/g] or more. For example, in the present invention, a gel grinding energy (GGE(1)) for gel-crushing a hydrogel is 20 to 150 [J/g], preferably 40 to 130 [J/g], and more preferably 50 to 120 [J/g]. The GGE(2) is 20 to 150 [J/g], preferably 40 to 130 [J/g], and more preferably 50 to 120 [J/g] . By controlling the GGE(1) and the GGE(2) within the above ranges, it is possible to perform gel-crushing while giving an appropriate shear/compressive force to the hydrogel.

(Gel temperature)

In the gel-crushing by the multiaxial kneader, in the gel-crushing step, the temperature T1 of the crosslinked hydrogel polymer to be put into the input port of the gel-crusher (hereinafter, also referred to as "gel temperature T1 at the input port" or simply "gel temperature T1") is preferably 50°C or higher from the viewpoint of continuously gel-crushing the crosslinked hydrogel polymer at 50°C or higher. The gel temperature T1 is preferably measured with a thermometer placed at the input port. The gel temperature T1 is preferably 60°C or higher from the viewpoint of preventing the gel-crushed hydrogel from adhering to the device, and is more preferably 70°C or higher and still more preferably 80°C or higher from the viewpoint of further improving the water absorption performance of the water-absorbing resin particles. The gel temperature T1 is preferably 130°C or lower, more preferably 110°C or lower, still more preferably 100°C or lower, and particularly preferably 90°C or lower, from the viewpoint of suppressing excessive drying. For the same reason, the gel temperature at the time of crushing is preferably 130°C or lower. The gel temperature T1 of the crosslinked hydrogel polymer to be put into the gel-crusher can be adjusted within a desired range by keeping the temperature of the crosslinked hydrogel polymer risen due to heat of polymerization, or by heating the obtained crosslinked hydrogel polymer.

The temperature T2 of the crosslinked particulate hydrogel polymer discharged from the gel-crusher (hereinafter, also referred to as "gel temperature T2 at the discharge port" or simply "gel temperature T2") is preferably 60°C to 140°C, more preferably 70°C to 130°C, still more preferably 80°C to 120°C, particularly preferably 80°C to 115°C, and most preferably 100 to 115°C, from the viewpoint of suppressing aggregation between the gel-crushed hydrogels. It is preferable that the temperature T2 be set in this temperature range and the temperature T1 be set in the above-described temperature range. The gel temperature T2 is preferably measured with a thermometer placed at the discharge port. The gel temperature T2 can be adjusted within a desired range by appropriately adjusting the preset temperature of the heating means and/or the temperature-keeping means of the gel-crusher, and by adjusting the retention time of the crosslinked hydrogel polymer inside the gel-crusher.

In the gel-crushing by the multiaxial kneader, it is preferable to add the above-described gel-fluidizing agent. The gel-fluidizing agent may be added once or may be added a plurality of times by dividing the gel fluidizing agent into two or more portions, and a position at which the gel-fluidizing agent is added may be any position of the kneader. When the gel-fluidizing agent is added in a plurality of portions, the gel-fluidizing agent is preferably added at different positions of the kneader. In one embodiment, in the gel-crushing by the multiaxial kneader, the gel-fluidizing agent is added twice not in a lump, in the vicinity of a gel input port (for example, the input port 204 for charging a strip-formed hydrogel in Fig. 3) and in the vicinity of a gel discharge port (the gel-fluidizing agent input port 217 in Fig. 3) of the multiaxial kneader. By adding the gel-fluidizing agent twice or more, not in a lump, adhesion and fusion between crushed gels are suppressed. Using the multiaxial kneader illustrated in Figs.3 and 4 in the gel-crushing step cause a particulate hydrogel having a small particle size, furthermore adding the gel-fluidizing agent in the gel-crushing step cause the water-absorbing resin particles to suppress excessive aggregation and clogging of the cavity. As a result, the fluctuation in the existence ratio of cavities and voids in the water-absorbing resin particles can be suppressed, and the effect of the present invention can be improved.

[3-5] Separation step

In the case of performing reversed-phase suspension polymerization in the polymerization step, the obtained crosslinked hydrogel polymer and the hydrophobic organic solvent are separated in the separation step. The type and structure of the device used in the separation step are not particularly limited as long as the water absorption performance (speed of incorporating liquid and release amount) is not impaired, but for example, a known device such as filtration, sedimentation, centrifugation, or squeezing can be used. The crosslinked hydrogel polymer may be separated from the hydrophobic organic solvent by heating under normal pressure or reduced pressure using a stirring device having a stirring blade used in the polymerization step and azeotropic dehydration. In the batch-type reversed-phase suspension polymerization, azeotropic dehydration under normal pressure or reduced pressure is suitably performed.

In the case of continuous suspension polymerization, the hydrogel formed in the polymerization step is continuously discharged from a reactor together with the hydrophobic organic solvent forming a continuous phase. As described above, the hydrophobic organic solvent and the hydrogel can be separated, for example, by a known method such as filtration, sedimentation, centrifugation, or squeezing. As a preferred embodiment, a circulation type process is preferable in which the hydrophobic organic solvent separated in this step is recovered and circulated to a dispersing device through a pipe.

[3-6] Gel sizing step

In the case of performing reversed-phase suspension polymerization in the polymerization step, the hydrogel polymer separated from the hydrophobic organic solvent in the separation step is preferably subjected to hydrogel sizing using a gel sizing device having an extrusion action portion and a perforated plate. As a result, the sized hydrogel polymer (hereinafter, the hydrogel after gel sizing is referred to as a sized gel) is obtained.

"Gel sizing device"

In the present specification, the "gel sizing" is an operation of extruding a wet mass composed of a particulate hydrogel in a cylindrical shape from small holes of a perforated plate to produce particles having a substantially uniform shape and size. That is, by using the perforated plate, the hydrogel in the shape of a coarse aggregate excessively aggregated in a solvent separation step of the preceding step is crushed, and the hydrogel in a single particle shape having a small particle size is obtained with an appropriate aggregated state. Therefore, according to this step, it is possible to obtain an aggregate which is a granulated-shaped hydrogel (sized gel) having a relatively uniform particle size and sufficiently includes cavities. The sized gel may contain a hydrogel in a single particle shape.

The "gel sizing device having an extrusion action portion and a perforated plate" used in the gel sizing step is not particularly limited as long as it is a device having an extrusion action portion and a perforated plate (die or screen) in which the extrusion action portion usually has an extrusion member extruding and supplying contents toward the perforated plate and particles of a certain size can be produced by extruding a material from the perforated plate.

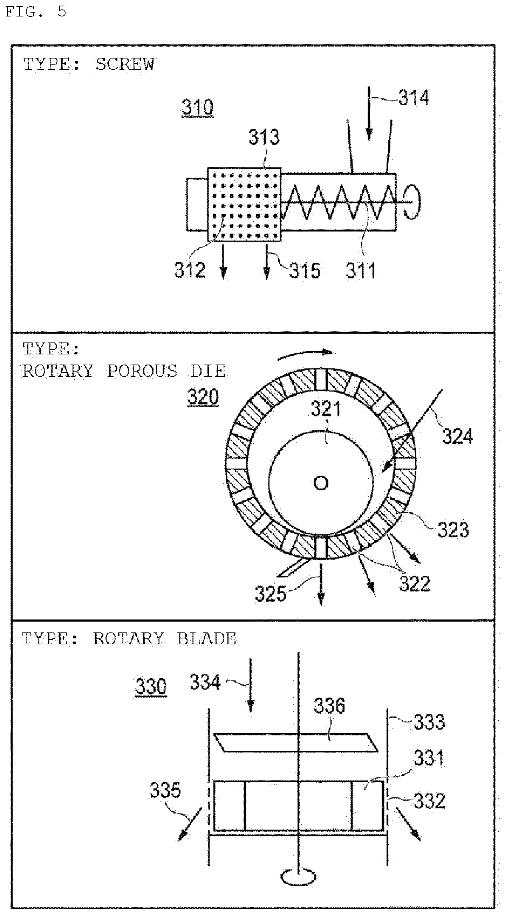

Fig. 5 is a view schematically illustrating classification of a gel sizing device having an extrusion action portion and a perforated plate. The gel sizing device having an extrusion action portion and a perforated plate is roughly classified into a screw type, a rotary porous die type, and a rotary blade type, depending on the structure of the extrusion action portion.

A screw-type gel sizing device 310 has a screw 311 (corresponding to the extrusion action portion) that is rotationally driven and a die 313 (corresponding to the perforated plate) having small holes 312 formed therein. The introduced material (see arrow 314) is extruded and supplied toward the die 313 by the rotationally driven screw 311 and is extruded from the small holes 312 of the die 313 (see arrow 315). The screw-type gel sizing device 310 is classified into a lateral extrusion type and a front extrusion type depending on a direction in which a material is extruded. In the case of lateral extrusion type, as in the illustrated example, the die 313 is disposed in a direction parallel to a direction in which the rotation axis of the screw 311 extends, and the material is extruded in a direction intersecting the rotation axis of the screw 311. In the case of front extrusion type, the die 313 is disposed in a direction orthogonal to the rotation axis of the screw 311, and the material is extruded in a direction in which the rotation axis of the screw 311 extends.

As the screw-type gel sizing device, a screw-type front extrusion type sizing machine, a screw-type lateral extrusion type sizing machine, a screw-type pretreating and extrusion type sizing machine, and the like can be used. Examples of the screw-type lateral extrusion type sizing machine include a uniaxial extrusion granulator with a kneader manufactured by AKIRA KIKO Corporation. Examples of the screw-type front extrusion type sizing machine include a twin dome granulator series manufactured by DALTON CORPORATION. Examples of the screw-type pretreating and extrusion type sizing machine include Multi Granulator manufactured by DALTON CORPORATION.

A rotary porous die type gel sizing device 320 has a roll 321 (corresponding to the extrusion action portion) and a rotary die 323 (corresponding to the perforated plate) which has small holes 322 and is rotationally driven. The roll 321 is disposed inside the rotary die 323. The material charged between the rotary die 323 and the roll 321 (see arrow 324) is extruded from the small holes 322 of the rotary die 323 by the roll 321 (see arrow 325).

As the rotary porous die type gel sizing device, a roll-type ring die type extrusion sizing machine is used. Examples of the roll-type ring die type extrusion sizing machine include a disk pelleter manufactured by DALTON CORPORATION.

A rotary blade type gel sizing device 330 has a paddle 331 (corresponding to the extrusion action portion) rotationally driven and a cylindrical die 333 (corresponding to the perforated plate) having small holes 332. The paddle 331 is disposed inside the cylindrical die 333. A push blade 336 that is rotationally driven is disposed above the paddle 331. The introduced material (see arrow 334) is extruded and supplied toward the cylindrical die 333 by the rotationally driven push blade 336 and the paddle 331 and is extruded from the small holes 332 of the cylindrical die 333 (see arrow 335).

As the rotary blade type gel sizing device, a blade type basket type extrusion sizing machine, a blade type oscillating type extrusion sizing machine, and the like can be used. Examples of the blade type oscillating type extrusion sizing machine include a cylindrical granulator manufactured by FREUND-TURBO CORPORATION. The "gel sizing device having an extrusion action portion and a perforated plate" used in the gel sizing step is preferably a screw-type front extrusion type sizing machine or a screw-type lateral extrusion type sizing machine and more preferably a screw-type pretreating and extrusion type sizing machine.

The "perforated plate" is a member provided with a large number of holes for making particles have a fixed size, and corresponds to a die or a screen. The shape of the perforated plate is not particularly limited, but a planar shape, a curved shape, a spherical shape (dome shape), or the like can be adopted. For example, in the case of a screw-type front extrusion type extrusion sizing machine, a dome-shaped die is disposed at a tip end part of the screw. In the case of a screw-type lateral extrusion type extrusion sizing machine, a curved screen is disposed on an outer peripheral portion of the screw. An extrusion blade is also preferably spherical (that is, a shape in which the contour of the edge thereof forms a part of the spherical surface) in the screw-type lateral extrusion type extrusion sizing machine. As described above, by making the die or the screen spherical and making the tip of the extrusion blade also spherical, extrusion sizing can be easily performed even in a die having a small hole diameter, the productivity is further improved, and granulated particles with higher strength can be obtained with an arbitrary particle size. The "spherical surface" widely includes a trajectory surface formed by rotation of a circle such as a perfect circle or an ellipse, a trajectory surface obtained by combining and rotating a plurality of circles, and surfaces other than the plane, such as a hemispherical surface, a curved surface, a hyperboloid, and a paraboloid.

The shape of the holes of the perforated plate (die or screen) is not particularly limited, and can be arbitrarily selected to a shape suitable for use, such as a perfect circular shape, an elliptical shape, a polygonal shape such as a hexagonal shape, or a triangular shape, but from the viewpoint of sizing strength, a perfect circular shape and an elliptical shape are preferable. The hole diameter is also not particularly limited, but is preferably 1.5 mm or less, more preferably 1.0 mm or less, and still even more preferably 0.8 mm or less. When the hole diameter is such an upper limit or less, it is possible to prevent the size of the resulting sized gel from increasing more than necessary, and to obtain water-absorbing resin particles in which the particle size and the cavity ratio to the total volume are appropriate. The hole diameter is preferably 0.3 to 1.5 mm and more preferably 0.3 to 0.8 mm. When the hole diameter of the perforated plate is 0.3 mm or more, extrusion can be efficiently performed during an extrusion operation. The hole diameter is defined as follows. First, when the hole is not a perfect circle, a geometric average value of the minor axis and the major axis of the hole is adopted as the hole diameter. When the hole diameters of the holes of the perforated plate are different from each other, the hole diameters of all the holes are calculated, and the arithmetic average value thereof is adopted as the hole diameter of the hole of the perforated plate. When the hole diameter of the perforated plate changes from the extrusion action part side of the perforated plate to the opposite side thereof (the hole diameter changes in the thickness direction of the perforated plate), a value that minimizes the hole diameter among hole diameters is adopted.

The thickness of the perforated plate (die or screen) is also not particularly limited, but due to the characteristics of the gel sizing device, when the hole diameter is small, extrusion sizing may be difficult unless the thickness of the perforated plate is reduced. Therefore, the thickness of the perforated plate (die or screen) is preferably about 0.1 to 5 times the hole diameter of the perforated plate, more preferably 0.2 to 3 times the hole diameter, and still more preferably 0.5 to 2 times the hole diameter. When the thickness of the perforated plate (die or screen) is 5 times or less the hole diameter, an increase in resistance at the hole portion is prevented, and extrusion sizing can be smoothly performed. On the other hand, when the thickness of the perforated plate is 0.1 times or more the hole diameter, a decrease in sizing strength can be prevented.

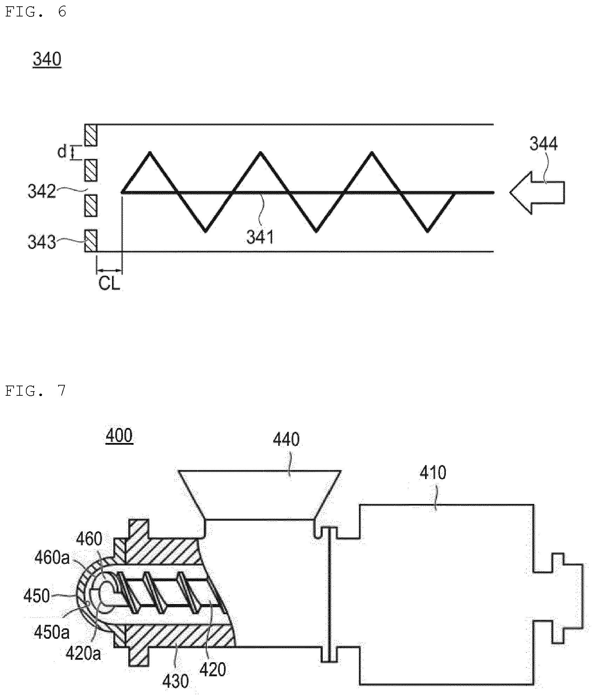

Fig. 6 is a schematical view illustrating an extruded portion in the gel sizing device. A reference sign "CL" in the drawing indicates a gap between a perforated plate 343 (die or screen) and an extrusion action portion 341 in a gel sizing device 340. In the illustrated example, the extrusion action portion 341 is configured by a screw. When the extrusion action portion 341 has an extrusion blade, the gap CL is a distance from the edge of the extrusion blade to the back surface of the perforated plate 343 of the gel sizing device 340. A reference sign "d" in the drawing indicates the hole diameter of small holes 342 of the perforated plate 343. A white arrow 344 in the drawing indicates a gel extrusion direction.

The gap CL between the perforated plate 343 (die or screen) and the extrusion action portion 341 in the gel sizing device 340 (when the extrusion action portion 341 has an extrusion blade, the distance from the extrusion blade edge to the back surface of the perforated plate 343 of the gel sizing device 340) is preferably 0.1 to 10.0 mm, more preferably, when the hole diameter d of the perforated plate 343 is 0.3 to 1.5 mm, the gap CL between the perforated plate 343 (die or screen) and the extrusion action portion 341 in the gel sizing device 340 (when the extrusion action portion 341 has an extrusion blade, the distance from the extrusion blade edge to the back surface of the perforated plate 343 of the gel sizing device 340) is preferably 0.1 mm to 10.0 mm. When the gap is 0.1 mm or more, it is possible to prevent the perforated plate 343 from being damaged and the life of the perforated plate 343 from being shortened due to excessively close contact between the perforated plate 343 and the screw 341. On the other hand, when the gap is 10.0 mm or less, it is possible to prevent the primary particles of the hydrogel from excessively adhering to each other, crushing of the cavities in the aggregate, and a decrease in the cavity ratio to the total volume due to an increase in pressure in the extrusion operation. For example, in the case of the screw-type pretreating and extrusion type sizing machine, there is a straight screw as the extrusion action portion, and a portion between the straight screw and the die is referred to as a pressure equalization portion, but the thickness of the pressure equalization portion corresponds to a "gap (clearance) between the perforated plate (die or screen) and the extrusion action portion". In the case of the lateral extrusion type extrusion sizing machine, the die is disposed around the straight screw, and the distance between the die and the straight screw corresponds to the clearance. The length (distance) of the gap is the shortest length (distance) of the gap between the perforated plate and the extrusion action portion.

In the case of the rotary blade type (a blade type basket type extrusion sizing machine and a blade type oscillating type extrusion sizing machine), a distance from the edge of the rotary blade to the back surface of the perforated plate is a gap CL between the perforated plate and extrusion action part, and the gap is preferably in the same numerical range as that of the extrusion sizing machine. In the case of the rotary porous die type (roll-type ring die type extrusion sizing machine), the gap is substantially 0, and thus the gap is not limited thereto.

Fig. 7 is a schematic view illustrating the configuration of a screw-type front extrusion type sizing machine having a spherical (dome-shaped) die as described above. In the screw-type pretreating and extrusion type sizing machine 400, a feed screw 420 as the extrusion action portion is connected to a driving portion (not illustrated) via a gear mechanism in a gear box 410 and is housed inside a screw case 430. A feed hopper 440 for inputting a raw material is provided at the top portion of the screw case 430, and a spherical die 450 is attached to the tip portion of the screw case 430. The tip end part of the feed screw 420 has a spherical shape, and a spherical tip end part 420a is provided with one or more spherical extrusion blades 460. The contour of an edge 460a of the spherical extrusion blade 460 is formed along a spherical back surface 450a of the spherical die 450, and is formed in a spiral shape on the surface of the spherical tip end part 420a. Therefore, an equispaced interval (clearance) is formed between the rotation locus of the edge 460a of the spherical extrusion blade 460 and the spherical back surface 450a over the entire surface.

(Hydrogel temperature)

The lower limit of the temperature of the hydrogel charged in the sizing device is not particularly limited, but is preferably 60°C or higher, more preferably 70°C or higher, and still more preferably 80°C or higher, from the viewpoint of sizing efficiency and suppression of damage to the hydrogel. The upper limit of the hydrogel temperature at the time of putting the hydrogel into the sizing device is not particularly limited, but is generally 100°C or lower.

In this gel sizing step, the above-described gel-fluidizing agent and the like can also be added.

The gel-fluidizing agent can be added in the gel sizing step as described above, but when a reversed-phase suspension polymerization method is adopted, examples of other addition methods include addition of the gel-fluidizing agent to the hydrogel separated from the hydrophobic organic solvent in the separation step, addition of the gel-fluidizing agent to the sized gel before the drying step, and addition of the gel-fluidizing agent to the aqueous monomer solution in the step of preparing an aqueous monomer solution. The addition of the gel-fluidizing agent may overlap with a surfactant or a polymeric additive used as a dispersion aid in a dispersion step.

The total amount of the surfactant and the polymer lubricant added, which are exemplified as the gel-fluidizing agent, is preferably 1.0% by mass or less and more preferably 0.5% by mass or less, and preferably 0.01% by mass or more and particularly preferably 0.05% by mass or more with respect to the solid content of the gel to be put into a gel sizing machine.

[3-7] Drying step

This is a step of drying the particulate hydrogel obtained in the polymerization step and/or the gel-crushing step or the sized gel obtained in the gel sizing step to solids content of the resin to obtain a dry polymer. The solids content of the resin are determined from an amount lost from drying (a change in weight when 1 g of the water-absorbing resin is heated at 180°C for 3 hours), and are preferably 80% by weight or more, more preferably 85 to 99% by weight, still more preferably 90 to 98% by weight, and particularly preferably 92 to 97% by weight.

The method of drying the particulate hydrogel is not particularly limited, and examples thereof include heat drying, hot gas drying, drying under reduced pressure, fluidized-bed drying, infrared drying, microwave drying, drum dryer drying, drying by azeotropic dehydration with a hydrophobic organic solvent, high humidity drying by use of high temperature water vapor, and the like. Among them, from the viewpoint of drying efficiency, hot gas drying is preferable, and band drying in which hot gas drying is performed on a ventilation belt (ventilation band-type dryer) is more preferable.

The drying temperature (temperature of hot gas) in the hot gas drying is preferably 120 to 250°C and more preferably 150 to 200°C, from the viewpoint of the color tone of the water-absorbing resin and drying efficiency. The drying conditions other than the drying temperature, such as the wind speed of the hot gas and the drying time, may be appropriately set according to the moisture content and total weight of the particulate hydrogel subjected to drying and intended solids content of the resin, and when band drying is performed, various conditions described in WO 2006/100300 A, WO 2011/025012 A, WO 2011/025013 A, WO 2011/111657 A, and the like are appropriately applied. By band drying, a particulate water absorbent having an appropriate existence ratio of cavities and voids of the water-absorbing resin after drying can be obtained.

In one embodiment, as the drying device in the drying step, a heating device is used. The heating device includes a rotary container rotating while storing the particulate hydrogel therein, and a plurality of heating tubes located inside the rotary container, extending in an axial direction of the rotary container, and rotating together with the rotary container. In the present specification, a heating device having this configuration may be referred to as a "rotary heating device" or a "rotary heating device equipped with a heating tube". More preferably, the heating device further includes other heating means on the outer peripheral surface of the rotary container. In the heating device, the particulate hydrogel stored in the rotary container is stirred by the rotation of the container, and heated by contact with the plurality of heating tubes or heat conduction from the heating tubes. The inner surface of the rotary container is also heated by radiant heat of the plurality of heating tubes or the like, but the particulate hydrogel is further heated by the heating means located on the outer peripheral surface of the rotary container as necessary. In the heating device, other stirring means such as a stirring blade is also used in combination as necessary, but since the particulate hydrogel mainly flows in the container by the rotation of the rotary container storing the particulate hydrogel and the action of the plurality of heating tubes rotating together with the rotary container, mechanical and thermal damage to the particulate hydrogel to be dried is small. As a result, generation of fine powder and deterioration of physical properties in the drying step are suppressed. In the heating device, since drying is performed by indirect heat transfer from the heating tube, there is an advantage that a dried product does not scatter and no need to dispose a large amount of waste gas unlike drying by hot gas (ventilation band-type dryer or ventilation heating type rotary kiln). In this heating device, since the object to be dried mainly flows by the rotation of the rotary container, there is also an advantage that a large amount of energy is not required for stirring the particulate hydrogel having adhesiveness and deterioration in physical properties (for example, a decrease in water absorption performance and an increase in soluble component) of the water-absorbing resin after drying, generation of fine powder, aggregation during drying, and the like are avoided unlike a continuous stirring dryer stirring the particulate hydrogel with a stirring blade or the like.

By using a rotary heating device in the drying step, generation of fine powder is suppressed, and blocking of the cavity in the drying step is suppressed. Therefore, it is an example of a preferred embodiment to use a rotary heating device in the drying step. As a result, water-absorbing resin particles having an appropriate existence ratio of cavities and voids can be obtained, and the effect of the present invention can be improved.

In one embodiment, the water-absorbing resin particles according to the present invention is subjected to gel-crushing a plurality of times in a meat chopper not using a die in the gel-crushing step, and a rotary heating device is used in the drying step. As a result, the compaction between the crushed gel particles is suppressed, so that the cavities are less likely to be blocked, many cavities can be formed as aggregates of fine particles in the water-absorbing resin particles, the voids can be reduced, and thus the effect of the present invention can be further improved.

In one embodiment, for the water-absorbing resin particles according to the present invention, a multiaxial kneader is used in the gel-crushing step, and a rotary heating device is used in the drying step. As a result, many cavities can be formed as aggregates of fine particles in the water-absorbing resin particles, voids can be reduced, and thus the effect of the present invention can be further improved. That is, in a preferred embodiment, after the aqueous solution polymerization, the gel-crushing step by a multiaxial kneader having two or more axes is performed, and then the drying step by a rotary heating device is performed.

Examples of the heating device used in the present embodiment include a rotary dryer equipped with a water vapor tube. Specific examples thereof include a steam tube dryer (manufactured by KURIMOTO, LTD.), a steam tube dryer (manufactured by Ube Industries, Ltd.), a steam tube dryer (manufactured by TSUKISHIMA HOLDINGS CO., LTD.), a steam tube dryer (manufactured by Mitsui Engineering & Shipbuilding Co., Ltd.), and the like.

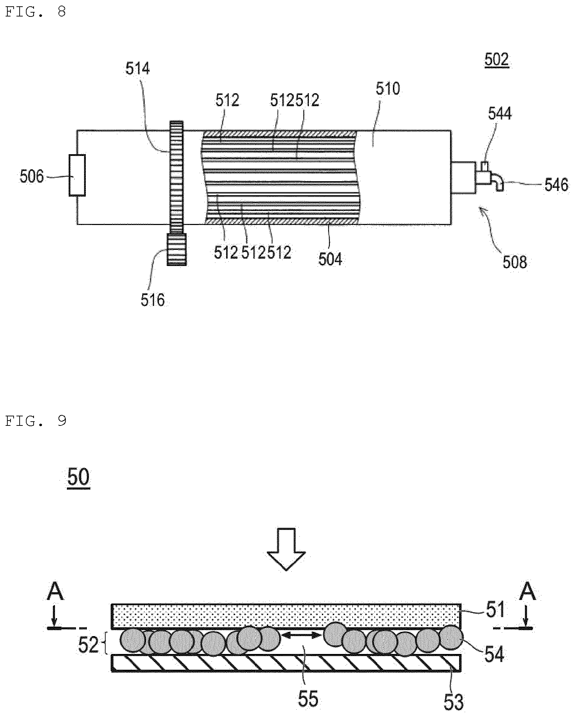

Fig. 8 illustrates an example of a rotary heating device 502 equipped with a heating tube. Hereinafter, the basic configuration of the heating device 502 will be described with reference to Fig. 8. The conditions described in WO 2018/092863 are also applicable to the present invention for the method of using the rotary heating device equipped with a heating tube, and the drying step and a surface treatment step using the rotary heating device equipped with a heating tube.

As illustrated in Fig. 8, the heating device 502 includes a main unit 504, an input portion and output portion 506, and a steam inflow and outflow portion 508. The main unit 504 includes a rotary container 510, a large number of heating tubes 512, a first gear 514, and a second gear 516. The rotary container 510 is generally cylindrical. The horizontal direction in Fig. 8 is the axial direction of the rotary container 510.

The large number of heating tubes 512 are equipped in the rotary container 510. Each heating tube 512 extends in the axial direction of the rotary container 510 and penetrates both ends of the rotary container 510. As will be described below, none of the large number of heating tubes 512 is in contact with the inner peripheral surface of the rotary container 510 in the axial direction.

The first gear 514 is fixed to the outer peripheral surface of the rotary container 510. The second gear 516 meshes with the first gear 514.

Drying, introduction of an object to be heated, and removal of a processed object are performed through the input portion and output portion 506. When a surface-crosslinking agent solution is added to the particulate hydrogel during drying, the surface-crosslinking agent solution may be spray-added with a spray or the like from the input portion and output portion 506.

The steam inflow and outflow portion 508 has a steam inlet 544 and a drain 546. The steam inlet 544 connects with the large number of heating tubes 512. The drain 546 also connects with the large number of heating tubes 512.

In order to perform the drying step by the heating device 502, steam is introduced from the steam inlet 544 toward the heating tube 512. This steam increases the temperature inside the rotary container 510. A part of the steam is cooled by heat exchange. The cooled steam becomes water and is discharged from the drain 546. Steam is continuously introduced from the steam inlet 544 so as to compensate the steam which has become water and has been discharged, whereby the temperature inside the rotary container 510 is controlled.

A gas is introduced into the rotary container 510. The rotary container 510 is filled with the gas. Excess gas is discharged from the rotary container 510.

The second gear 516 is rotated by a driving means (for example, a motor) (not illustrated). The rotation of the second gear 516 rotates the first gear 514, and further rotates the rotary container 510. Along with the rotary container 510, the large number of heating tubes 512 also rotates. Although not illustrated, since the rotary container 510 and the steam inflow and outflow portion 508 are separated from each other by packing, the steam inflow and outflow portion 508 does not rotate even when the rotary container 510 rotates.

[3-8] Pulverizing step and classification step

This is a step of pulverizing the dry polymer obtained in the drying step (pulverizing step) and adjusting the particle size to a predetermined range (classification step) to obtain a water-absorbing resin (a powdery water-absorbing resin before surface crosslinking is referred to as "water-absorbing resin" for convenience).

Examples of the device used in the pulverizing step of the present invention include high-speed rotary pulverizers such as roll mills, hammer mills, screw mills, and pin mills, vibrating mills, knuckle pulverizers, cylindrical mixers, and the like, and these devices are used in combination as necessary.

The method for adjusting the particle size in the classification step of the present invention is not particularly limited, and examples thereof include sieve classification using JIS standard sieves (JIS Z8801-1 (2000)) and air flow classification. The particle size adjustment of the water-absorbing resin is not limited to the pulverizing step and the classification step, and can be appropriately performed in the polymerization step (particularly, reversed-phase suspension polymerization or spray and droplet polymerization) and other steps (for example, a granulating step and a fine powder recycling step).

The weight average particle size (D50) of the water-absorbing resin obtained in the above step (the water-absorbing resin before the surface crosslinking step, so-called base polymer) is preferably 200 to 600 $\mu$m, more preferably 200 to 550 $\mu$m, and still more preferably 250 to 500 um. The proportion of particles having a particle size of less than 106 um is preferably 10% by weight or less, more preferably 5% by weight or less, and still more preferably 1% by weight or less, and the proportion of particles having a particle size of 850 um or more is preferably 5% by weight or less, more preferably 3% by weight or less, and still more preferably 1% by weight or less. The lower limit value of the proportion of these particles is preferably as small as possible in any case, and is desirably 0% by weight, but may be about 0.1% by weight. The logarithmic standard deviation ($\sigma\zeta$) of the particle size distribution is preferably 0.20 to 0.50, more preferably 0.25 to 0.40, and still more preferably 0.27 to 0.35. These particle sizes are measured using a standard sieve according to the measurement method disclosed in U.S. Patent No. 7638570 and EDANA ERT420.2-02.

The particle size described above is applied not only to the water-absorbing resin after surface crosslinking (hereinafter, referred to as "water-absorbing resin particles" or "water-absorbing resin powder" for convenience in some cases) but also to a particulate water absorbent as a final product. Therefore, in the water-absorbing resin particles, it is preferable to perform a surface crosslinking treatment (surface crosslinking step) so as to maintain the particle size in the above range, and it is more preferable to adjust the particle size by providing a sizing step after the surface crosslinking step.

[3-9] Surface crosslinking step

This is a step of providing a portion having a higher crosslinking density in the surface layer (portion of several 10 um from the surface of the water-absorbing resin particles) of the water-absorbing resin particles obtained through the above step, and includes a mixing step, a heat treatment step, and a cooling step (optional).

In the surface crosslinking step, a surface-crosslinked water-absorbing resin (water-absorbing resin particles) is obtained by radical crosslinking or surface polymerization on the surface of the water-absorbing resin particles, a crosslinking reaction with a surface-crosslinking agent, or the like.

(Surface-crosslinking agent)

The surface-crosslinking agent used in the present invention is not particularly limited, and examples thereof include organic or inorganic surface-crosslinking agents. Among them, from the viewpoint of the physical properties of the water-absorbing resin and the handleability of the surface-crosslinking agent, an organic surface-crosslinking agent reacting with a carboxyl group is preferable. For example, one or two or more surface-crosslinking agents disclosed in U.S. Patent No. 7183456 are mentioned. More specific examples thereof include polyhydric alcohol compounds, epoxy compounds, haloepoxy compounds, polyamine compounds or condensates thereof with haloepoxy compounds, oxazoline compounds, oxazolidinone compounds, polyvalent metal salts, alkylene carbonate compounds (for example, ethylene carbonate), cyclic urea compounds, and the like.

Specific examples of the organic surface-crosslinking agent include polyalcohol compounds such as (di-, tri-, tetra-, or poly-)ethylene glycol, (di- or poly-)propylene glycol, 1,3-propanediol, 2,2,4-trimethyl-1,3-pentanediol, (poly)glycerin, 2-butene-1,4-diol, 1,4-butanediol, 1,3-butanediol, 1,5-pentanediol, 1,6-hexanediol, trimethylolpropane, di- or triethanolamine, pentaerythritol, and sorbitol; epoxy compounds such as ethylene glycol diglycidyl ether, (poly)ethylene glycol diglycidyl ether, (di- or poly-)glycerol polyglycidyl ether, and glycidol; 2-oxazolidone, N-hydroxyethyl-2-oxazolidone, oxazoline compounds such as 1,2-ethylene bisoxazoline; alkylene carbonate compounds such as 1,3-dioxolan-2-one (ethylene carbonate), 4-methyl-1,3-dioxolan-2-one, 4,5-dimethyl-1,3-dioxolan-2-one, 4,4-dimethyl-1,3-dioxolan-2-one, 4-ethyl-1,3-dioxolan-2-one, 4-hydroxymethyl-1,3-dioxolan-2-one, 1,3-dioxane-2-one, 4-methyl-1,3-dioxane-2-one, 4,6-dimethyl-1,3-dioxane-2-one, and 1,3-dioxepan-2-one; haloepoxy compounds such as epichlorohydrin, epibromohydrin, and $\alpha$-methylepichlorohydrin, and polyvalent amine adducts thereof (for example, Kaimen manufactured by Hercules Inc.; registered trademark); silane coupling agents such as $\gamma$-glycidoxypropyltrimethoxysilane and $\gamma$-aminopropyltriethoxysilane; oxetane compounds such as 3-methyl-3-oxetane methanol, 3-ethyl-3-oxetane methanol, 3-butyl-3-oxetane methanol, 3-methyl-3-oxetane ethanol, 3-ethyl-3-oxetane ethanol, 3-butyl-3-oxetane ethanol, 3-chloromethyl-3-methyloxetane, 3-chloromethyl-3-ethyloxetane, and a polyvalent oxetane compound, cyclic urea compounds such as 2-imidazolidinone, and the like.

As the polyhydric alcohol, a polyhydric alcohol having 2 to 8 carbon atoms is preferable, a polyhydric alcohol having 3 to 6 carbon atoms is more preferable, and a polyhydric alcohol having 3 or 4 carbon atoms is still more preferable. A diol is preferable, examples thereof include ethylene glycol, propylene glycol, 1,3-propanediol, and 1,4-butanediol, and a polyhydric alcohol selected from propylene glycol (1,2-propanediol), 1,3-propanediol, and 1,4-butanediol is preferable.

As the epoxy compound, a polyglycidyl compound is preferable, and ethylene glycol diglycidyl ether is suitably used.

In addition to the organic surface-crosslinking agent, from the viewpoint of more effectively performing surface crosslinking, a polyvalent cationic polymer such as a polyamine polymer may be used as an ion-bonding surface-crosslinking agent in combination.

The amount of the surface-crosslinking agent used (total amount used in the case of using a plurality of surface-crosslinking agents) is preferably 0.01 to 10 parts by mass and more preferably 0.01 to 5 parts by mass, with respect to 100 parts by mass of the water-absorbing resin particles. The surface-crosslinking agent is preferably added as an aqueous solution, and in this case, the amount of water used is preferably 0.1 to 20 parts by mass and more preferably 0.5 to 10 parts by mass, with respect to 100 parts by mass of the water-absorbing resin particles. In the case of using a hydrophilic organic solvent as necessary, the amount of the hydrophilic organic solvent used is preferably 10 parts by mass or less and more preferably 5 parts by mass or less, with respect to 100 parts by mass of the water-absorbing resin particles.

(Mixing step)

This is a step of mixing the water-absorbing resin particles and the surface-crosslinking agent. The method of mixing the surface-crosslinking agent is not particularly limited, and examples thereof include a method in which a surface-crosslinking agent solution is prepared in advance, and the solution is preferably sprayed or added dropwise onto the water-absorbing resin and more preferably sprayed and mixed.

The device for the mixing is not particularly limited, but a high-speed stirring type mixer is preferable, and a high-speed stirring type continuous mixer is more preferable. In the case of employing reversed-phase suspension polymerization in the polymerization step, a surface-crosslinking agent may be added when the organic solvent is distilled off or azeotropically dehydrated in the separation step, and surface crosslinking may be performed simultaneously with solvent separation.

(Heat treatment step)

This is a step of applying heat to the mixture obtained by the mixing step to cause a crosslinking reaction on the surface of the water-absorbing resin particles.

The device for performing the crosslinking reaction is not particularly limited, but a paddle dryer is preferable. The reaction temperature in the crosslinking reaction is appropriately set according to the type of the surface-crosslinking agent to be used, and is preferably 50 to 300°C and more preferably 100 to 200°C.

(Cooling step)

This is an optional step performed as necessary after the heat treatment step.

The device for performing the cooling is not particularly limited, but is preferably a device having the same specification as the device used in the heat treatment step, and more preferably a paddle dryer. This is because the paddle dryer can be used as a cooling device by changing the heat medium to a refrigerant. The water-absorbing resin particles obtained in the heat treatment step are forcibly cooled to preferably 40 to 80°C and more preferably 50 to 70°C as necessary in the cooling step.

[3-10] Additive adding step

This is a step of adding additives such as a polyvalent metal salt, a cationic polymer, a chelating agent, an inorganic reducing agent, a hydroxycarboxylic acid compound, water insoluble inorganic particles, a surfactant, and a water-soluble non-polymer compound to the water-absorbing resin particles obtained in the surface crosslinking step. As described above, the additive can be mixed with the water-absorbing resin particles simultaneously with the surface-crosslinking agent (aqueous solution).

(Polyvalent metal salt and/or cationic polymer)

From the viewpoint of improving liquid permeability, moisture absorption fluidity, and the like of the resulting water-absorbing resin, a polyvalent metal salt and/or a cationic polymer may be added.

As the polyvalent metal salt and/or the cationic polymer, specifically, the compound and the amount to use thereof disclosed in "[7] Polyvalent metal salt and/or cationic polymer" of WO 2011/040530 A are applied to the present invention.

(Chelating agent)

From the viewpoint of the color tone (discoloration prevention), deterioration prevention of the resulting water-absorbing resin, and the like, a chelating agent may be added.

As the chelating agent, specifically, the compound and the amount to use thereof disclosed in "[2] Chelating agent" of WO 2011/040530 A are applied to the present invention.

(Inorganic reducing agent)

From the viewpoint of the color tone (discoloration prevention), deterioration prevention, reduction of monomer residue of the resulting water-absorbing resin, and the like, an inorganic reducing agent may be added.

As the inorganic reducing agent, specifically, the compound and the amount to use thereof disclosed in "[3] Inorganic reducing agent" of WO 2011/040530 A are applied to the present invention.

(a-Hydroxycarboxylic acid compound)

From the viewpoint of the color tone (discoloration prevention) of the resulting water-absorbing resin, and the like, $\alpha$-hydroxycarboxylic acid may be added. The "$\alpha$-hydroxycarboxylic acid compound" refers to a carboxylic acid having a hydroxyl group at the $\alpha$-position in the molecule or its salt.

As the $\alpha$-hydroxycarboxylic acid compound, specifically, the compound and the amount to use thereof disclosed in "[6] $\alpha$-Hydroxycarboxylic acid compound" of WO 2011/040530 A are applied to the present invention.

(Water insoluble inorganic particles)

From the viewpoint of improving the fluidity of the water-absorbing resin particles, water insoluble inorganic particles may be added. Specific examples thereof include the water insoluble inorganic particles described in the section [2-7].

(Surfactant)

From the viewpoint of improving the physical properties (for example, water absorption speed) of the resulting water-absorbing resin, a surfactant may be added.

Specific examples of the surfactant include surfactants disclosed in WO 97/017397 A and U.S. Patent No.

6107358, that is, nonionic surfactants, anionic surfactants, cationic surfactants, amphoteric surfactants, and the like.

(Water-soluble non-polymer compound)

From the viewpoint of reducing dust in the water-absorbing resin, a water-soluble non-polymer compound may be added. The compound and the amount to use thereof disclosed in "Water-soluble non-polymer compound" of WO 2014/034667 A are applied to the present invention.

In the present invention, additives other than the above-described additives may be added in order to add various functions to the water-absorbing resin. Specific examples of the additive include a compound having a phosphorus atom, an oxidizing agent, an organic reducing agent, an organic powder such as metal soap, a deodorant, an antibacterial agent, pulp, thermoplastic fibers, and the like.

The amount of the additive used (added) is not particularly limited since it is appropriately determined according to the use, but is preferably 3 parts by weight or less and more preferably 1 part by weight with respect to 100 parts by weight of the water-absorbing resin particles. The additive can also be added in a step different from the above step.

[3-11] Other steps

In the present invention, in addition to the above-described steps, a granulating step, a sizing step, a fine powder removing step, a fine powder reusing step, and the like can be provided as necessary. One or more steps such as a transporting step, a storing step, a packaging step, and a reserving step may be further included. The "sizing step" includes a fine powder removing step after the surface crosslinking step and a step of performing classification and pulverization when the water-absorbing resin aggregates and exceeds a desired size. The "fine powder reusing step" includes a step of forming a large hydrogel and adding the hydrogel to any step in the production process of the water-absorbing resin, in addition to the embodiment of adding the fine powder as it is as in the present invention.

[4] Use of particulate water absorbent

The particulate water absorbent of the present invention is used for the purpose of water absorption, and is widely used as an absorbent body. The particulate water absorbent is used as an absorbent article including the absorbent body. In particular, since release amount of the particulate water absorbent of the present invention is reduced under pressure, the particulate water absorbent is suitably used as an absorbent body suitable for a sanitary article for absorbing a body fluid such as urine or blood used by humans or animals (that is, "wearable type absorbent body") among absorbent articles. The particulate water absorbent is also suitably used as an absorbent body (that is, "disposed-type absorbent body" described below) suitable for a sanitary article for absorbing a body fluid such as urine or blood of humans or animals, which is disposed and used on a certain object (for example, a floor, a bed sheet, or the like) . Examples of the wearable type absorbent body include disposable diapers, incontinence pads, sanitary napkins, and the like, and examples of the disposed-type absorbent body include pet sheets, waterproof sheets for nursing care, portable toilets for disaster, and the like. Examples of other absorbent articles include cat sand, drip absorbent materials, freshness keeping materials, anti-condensation sheets, and the like. Examples of other use applications of the water-absorbing resin include a soil humectant, a seedling growing sheet, a seed coating material, a disposable warmer, a cooling bandana, a refrigerant, a medical waste liquid solidifying agent, a residual soil solidifying agent, a gelling agent for waste liquid to prevent damage by water , an absorbent soil, a poultice material, a cosmetic thickener, a water sealant for electric and electronic material communication cables, a gasket packing, a sustained release agent for fertilizers, various sustained release agents (such as a space sterilizing agent and fragrance), a wound protection dressing material, a building material for preventing dew condensation, a moisture-removing agent in oil, and the like. The particulate water absorbent of the present invention can also be used as a paint, an adhesive, an anti-blocking agent, a light diffuser, a matting agent, an additive for cosmetic plates, an additive for artificial marble, an additive for toner, or the like, in a use application in which the particulate water absorbent with water-absorbed or swelled is mixed with a resin or a substrate.

That is, a preferred embodiment of the present invention is an absorbent body containing the particulate water absorbent of the above embodiment.

Another preferred embodiment of the present invention is a sanitary article including the absorbent body of the above embodiment.

Examples of the absorbent body include an absorbent material molded using the particulate water absorbent and a fiber substrate (for example, a hydrophilic fiber) as main components. It is still more preferable that the content (core concentration) of the particulate water absorbent is 20 to 100% by weight, more preferably 25 to 90% by weight, particularly preferably 30 to 80% by weight, and most preferably 40 to 80% by weight, with respect to the total weight of the particulate water absorbent and the hydrophilic fiber in the absorbent body. As the core concentration in the absorbent body is higher, the water absorption performance of the particulate water absorbent more greatly affect the performance of an absorbent body, an absorbent article produced by the particulate water absorbent. Such an absorbent body is molded by, for example, blending or sandwiching a fiber substrate such as a hydrophilic fiber and a particulate water absorbent. Examples of the fiber substrate to be used include a hydrophilic fiber such as a pulverized wood pulp, a cotton linter, a crosslinked cellulose fiber, rayon, cotton, wool, acetate, vinylon, and the like. These fiber substrates may be preferably produced by air-laid.

The absorbent body may be a (pulpless) absorbent sheet in which a water-absorbing resin is fixed between two sheets (for example, nonwoven fabrics).

The absorbent article includes the absorbent body, a surface sheet having liquid permeability, and a back sheet having liquid impermeability. In the absorbent article, an absorbent body (absorbent core) is produced, and the absorbent core is sandwiched between a surface sheet having liquid permeability and a back sheet having liquid impermeability. Thereafter, an absorbent article such as a disposable diaper for adults or a sanitary napkin is obtained by providing an elastic member, a diffusion layer, an adhesive tape, and the like as necessary. At this time, for example, the absorbent core is compression-molded in a range of a density of 0.06 to 0.50 [g/cm$^3$] and a basis weight of 0.01 to 0.20 [g/cm$^2$].

Hereinafter, a preferred embodiment of the absorbent body containing the particulate water absorbent of the above embodiment will be described.

[4-1] Wearable type absorbent body (wearable type)

In one embodiment, the absorbent body containing the particulate water absorbent of the present invention is used as an absorbent body constituting an absorbent article to be worn on humans or animals. In the present embodiment, an absorbent body includes a first substrate having a liquid-absorbing surface that directly absorbs a liquid formed on a front surface side and a water absorption layer disposed on a back surface side of the first substrate, in which the water absorption layer contains a particulate water absorbent including poly(meth)acrylic acid (salt)-based water-absorbing resin particles as a main component, the particulate water absorbent includes a cavity that is a space connecting to outside and a void that is a closed space not connecting to outside, a cavity ratio to the total volume is 10% by volume or more, a void ratio to the total volume is 0.5% by volume or less, and the absorbent body satisfies at least one of the following (a) and (b): (a) a region containing the particulate water absorbent in the water absorption layer is disposed with a gap substantially not containing the particulate water absorbent and the gap is formed to extend in a longitudinal direction of the absorbent body; and (b) the first substrate is a liquid permeable sheet having a porosity of 95% or more.

First, the absorbent body of the present embodiment has a feature that a specific particulate water absorbent, that is, the particulate water absorbent of the above embodiment is used. Therefore, in the absorbent body according to the present embodiment, the particulate water absorbent is a particulate water absorbent containing polyacrylic acid (salt)-based water-absorbing resin particles as a main component and has a cavity and a void, a cavity ratio to the total volume is 10% by volume or more, and a void ratio to the total volume is 0.5% by volume or less. Hereinafter, the particulate water absorbent containing polyacrylic acid (salt)-based water-absorbing resin particles as a main component and having a form including a cavity and a void, in which a cavity ratio to the total volume is 10% by volume or more, and a void ratio to the total volume is 0.5% by volume or less, may be referred to as "specific particulate water absorbent". The configuration of the specific particulate water absorbent is as described above. By using the specific particulate water absorbent in the water absorption layer, an absorbent body having a high speed of incorporating liquid and a reduced release amount can be obtained. In the present embodiment, the present inventors have found a configuration in which even more excellent absorption performance can be exhibited in an absorbent body by using the specific particulate water absorbent having excellent absorption performance.

In the present specification, the absorption rate of liquid indicates a time during which a predetermined amount of liquid is absorbed in the absorbent body, and the time is preferably short. The release amount (also referred to as "amount of return" or "Re-wet") refers to the amount of the liquid absorbed in the absorbent body released by applying pressure to the absorbent body, and a small release amount is considered to be favorable.

The absorbent body of the present embodiment preferably satisfies, in addition to the water absorption layer containing a specific particulate water absorbent, at least one of the following (a) and (b): (a) a region containing the particulate water absorbent in the water absorption layer is disposed with a gap substantially not containing the particulate water absorbent and the gap is formed to extend in a longitudinal direction of the absorbent body; and (b) the first substrate is a liquid permeable sheet having a porosity of 95% or more.

With such a configuration, it is possible to obtain an absorbent body having a high speed of incorporating liquid and a reduced release amount, that is, an absorbent body which is significantly excellent in the speed of incorporating liquid and the release amount. In the absorbent body of the present embodiment, the surface of the first substrate forms a liquid-absorbing surface that directly absorbs a liquid. In the present specification, the term "directly" means that the liquid comes into contact with the substrate or permeates the substrate before coming into contact with the water absorption layer. In the present embodiment, even when a part of the particulate water absorbent contained in the water absorption layer permeates the first substrate, moves onto the first substrate, and is partially exposed, it is not considered that the water absorption layer is disposed. The factor of the movement of the particulate water absorbent is assumed to be, for example, vibration generated by transportation or conveyance of the absorbent body as a final product. A case where the particulate water absorbent is intentionally sprayed or disposed on the first substrate is not within the scope of the present embodiment.

In another embodiment of the present embodiment, since the surface of the first substrate is a liquid-absorbing surface that directly absorbs a liquid, the water absorption layer is not disposed on the first substrate. Therefore, the absorbent body according to the present embodiment includes a first substrate having a liquid-absorbing surface that directly absorbs a liquid formed on a front surface side and a water absorption layer disposed on a back surface side of the first substrate, in which the water absorption layer is not disposed on the front surface side, the water absorption layer contains a particulate water absorbent including poly(meth)acrylic acid (salt)-based water-absorbing resin particles as a main component, the particulate water absorbent includes a cavity that is a space connecting to outside and a void that is a closed space (a closed cell) not connecting to outside, a cavity ratio to the total volume is 10% by volume or more, a void ratio to the total volume is 0.5% by volume or less, and the absorbent body satisfies at least one of the following (a) and (b): (a) a region containing the particulate water absorbent in the water absorption layer is disposed with a gap substantially not containing the particulate water absorbent and the gap is formed to extend in a longitudinal direction of the absorbent body; and (b) the first substrate is a liquid permeable sheet having a porosity of 95% or more.

The present inventors have found that in the conventional absorbent body, the release amount is remarkably large in the measurement of the release amount in Examples of the present application. That is, when the liquid is intermittently introduced a plurality of times (In particular, three or more times), the liquid amount becomes equal to or larger than the set absorption amount and excessive "reversion" occurs in the normal configuration. On the other hand, in the present embodiment, by satisfying at least one of the configurations (a) and (b), the liquid introduced from the liquid-absorbing surface can be efficiently sent to the lower water absorption layer having a water absorbing function without staying on the liquid-absorbing surface (furthermore, without the introduced liquid being locally stayed).

According to the configuration (a), the region containing the particulate water absorbent in the water absorption layer is disposed with a gap substantially not containing the particulate water absorbent, and the gap is formed to extend in the longitudinal direction of the absorbent body. Here, the gap existing between regions containing the particulate water absorbent can function as a liquid passage through which the liquid is introduced from the first substrate into the water absorption layer in the introduction of the liquid. That is, since the liquid passage exists, the liquid introduced from the liquid-absorbing surface can be efficiently sent to the water absorption layer without staying on the liquid-absorbing surface (furthermore, without the introduced liquid being locally stayed). Specifically, the liquid (for example, urine) having passed through the first substrate is introduced into the entire surface of the water absorption layer and the gap. The liquid introduced into the gap is easily diffused than the liquid introduced into the region containing the particulate water absorbent since the gap does not contain a particulate water absorbent that hinders liquid flow. As a result of the liquid diffusing, it is possible to prevent occurrence of deviation in the absorption amount of the liquid such as a large liquid absorption amount of the particulate water absorbent at the portion where the liquid is introduced and a small liquid absorption amount of the particulate water absorbent at the portion away from the liquid introduction portion. For this reason, it is possible to prevent generating a portion where the particulate water absorbent is saturated and swollen, that is, generating a portion where the liquid cannot be absorbed and increasing the release amount. Therefore, as a result, it is considered that the release amount can be reduced.

Since the gap has a shape extending in the longitudinal direction of the absorbent body, the liquid reaching the water absorption layer is easily diffused in the plane direction even when the liquid is locally introduced into the liquid-absorbing surface. In the absorbent body of the present embodiment, a specific particulate water absorbent having excellent absorption performance is used for the water absorption layer. By providing the gap having a shape extending in the longitudinal direction of the absorbent body in the water absorption layer containing a specific particulate water absorbent, diffusion when the liquid is locally introduced to the liquid-absorbing surface is efficiently exhibited. That is, since the specific particulate water absorbent has excellent absorption performance (speed of incorporating liquid), it is possible to immediately absorb a locally introduced liquid, furthermore due to the configuration in which the liquid is also introduced into the particulate water absorbent in the periphery thereof (that is, by providing the gap extending in the longitudinal direction of the absorbent body), the absorption performance of the particulate water absorbent in the periphery thereof can also be sufficiently utilized. Therefore, according to the present configuration, the absorption performance of the specific particulate water absorbent can be further demonstrated.

For example, when the particulate water absorbent swells by absorbing the liquid, the volume of the region containing the particulate water absorbent increases, so that the particulate water absorbent swollen up to the region serving as the gap may enter and the volume of the gap may decrease. In this case, when the liquid is intermittently introduced a plurality of times, it is conceivable that the liquid absorption capacity gradually decreases according to the decrease in the volume of the gap. With the decrease in the volume of the gap, the liquid is less likely to pass through the gap, and the particulate water absorbent is likely to be partially saturated and swollen, so that the amount of the liquid returning to the liquid-absorbing surface of the first substrate gradually increases when the liquid is released from the water absorption layer. As a result, the returned liquid reaches the skin (comes into contact with the skin), which causes discomfort.

On the other hand, the present inventors have found that, in the absorbent body of the present embodiment, the specific particulate water absorbent is used in the water absorption layer as described above, and the gap extending in the longitudinal direction of the absorbent body is provided in the water absorption layer, so that the absorption performance of the particulate water absorbent can be utilized to the maximum, and thus such returning can be significantly reduced. That is, according to the present embodiment, it has been found that an excellent absorbent body is obtained by the specific particulate water absorbent and the configuration (a).

According to the configuration (b), the first substrate is a liquid permeable sheet having a porosity of 95% or more. In the present specification, the "porosity of the substrate" means the porosity of the "fiber substrate constituting the substrate" and is represented by the following (Formula 1).

$$\text{Porosity } (\%) = [1 - (M/(A \times T \times D))] \times 100 \quad \text{(Formula 1)}$$

M: mass (g) of substrate (fiber substrate)
A: area ($cm^2$) of substrate (fiber substrate)
T: thickness (cm) of substrate (fiber substrate)
D: density ($g/cm^3$) of fibers forming substrate (fiber substrate)

In the case of a liquid permeable sheet in which the porosity of the first substrate is 95% or more, there are many pores in the first substrate, and a flow path is easy to be formed when liquid is introduced. As a result, the liquid introduced from the liquid-absorbing surface (the upper surface of the first substrate) can be efficiently sent to the entire surface of the water absorption layer without staying on the liquid-absorbing surface (furthermore, without the introduced liquid being locally stayed). Specifically, this is considered to be because the diffusibility of the liquid in the plane direction is high when the liquid passes through the first substrate, and the diffused liquid (for example, urine) moves (migrates) over the entire surface of the water absorption layer. That is, when the absorbed liquid reaches the water absorption layer, the liquid is diffused in the plane direction, and thus the water absorption layer absorbs even a large amount of the liquid spreading in the plane direction instead of being local. Therefore, the liquid can be sufficiently absorbed and retained in the water absorption layer. Once the liquid is absorbed into the water absorption layer, the excellent absorption performance of the specific particulate water absorbent can significantly reduce the return of the liquid absorbed in the water absorption layer to the liquid-absorbing surface of the first substrate, thereby suppressing the return of the liquid to the skin (contact with the skin).

The absorbent body according to the present embodiment is suitable as, for example, an absorbent article (for example, diapers) used in a time zone when a baby who starts to learn to run and whose bladder is still small actively moving around such as daytime, but of course, the use form is not limited thereto. The mechanism and the like described in the present specification do not limit the technical scope of the claims of the present application.

Hereinafter, the present embodiment will be described with reference to the accompanying drawings. In the description of the drawings, the same elements are denoted by the same reference numerals, and redundant description will be omitted. Dimensional ratios in the drawings are exaggerated for convenience of description, and may be different from actual ratios.

First embodiment: "Absorbent body having configuration (a)"

An absorbent body according to the first embodiment of the present invention includes a first substrate having a liquid-absorbing surface that directly absorbs a liquid formed on a front surface side and a water absorption layer disposed on a back surface side of the first substrate, in which the water absorption layer contains a specific particulate water absorbent, and the absorbent body satisfies that (a) a region containing the particulate water absorbent in the water absorption layer is disposed with a gap substantially not containing the particulate water absorbent and the gap is formed to extend in a longitudinal direction of the absorbent body.

In one embodiment, the absorbent body according to the first embodiment has a first substrate, a second substrate, and a water absorption layer located between the first substrate and the second substrate. That is, in one embodiment, the absorbent body further includes a second substrate, and the water absorption layer is located between the first substrate and the second substrate.

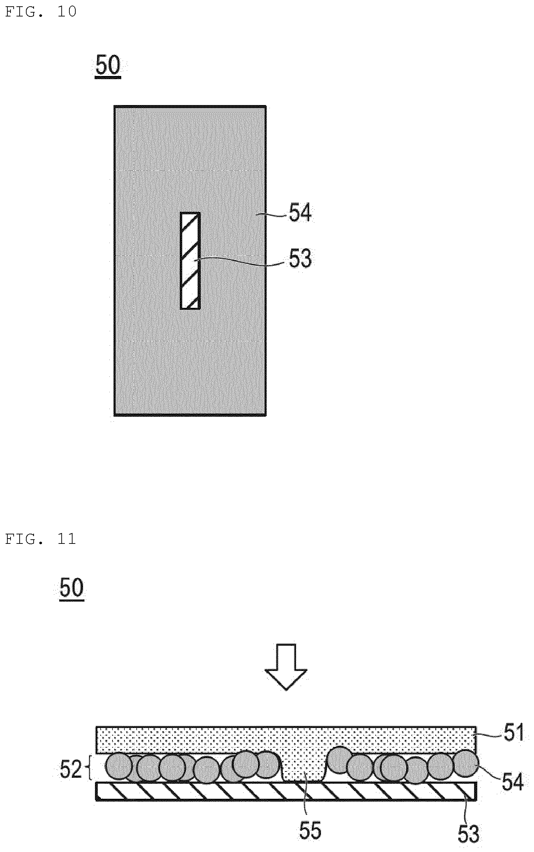

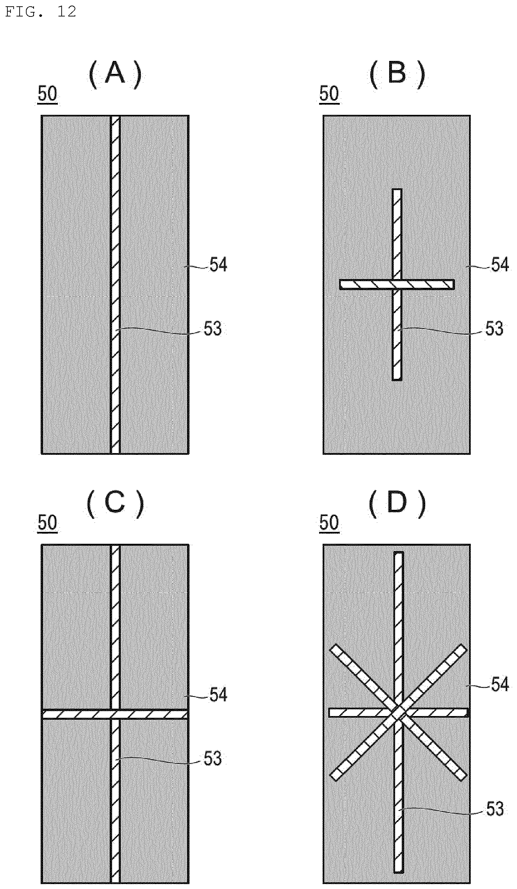

The first embodiment will be described with reference to Figs. 9 to 14. Fig. 9 is a schematic view illustrating a cross-section of an absorbent body according to the first embodiment of the present invention taken along a short-side direction of the absorbent body. Fig. 10 is a schematic horizontal section of the absorbent body taken along line A-A in Fig. 9 from above. Fig. 11 is a schematic view illustrating another embodiment of the gap in the absorbent body according to the first embodiment. Figs. 12 to 14 are schematic horizontal section of the absorbent body taken along line A-A in Fig. 9 from above and are schematic views illustrating another embodiment of the gap. In Figs. 9 and 11, arrows indicate directions in which liquid to be absorbed proceeds.

As illustrated in Fig. 9, an absorbent body 50 includes a first substrate 51, a water absorption layer 52, and a second substrate 53. The water absorption layer 52 has a structure of being sandwiched between the first substrate 51 and the second substrate 53. The first substrate 51 is located on a side to which a liquid (liquid to be absorbed) is introduced with respect to the water absorption layer 52. That is, the first substrate 51 is disposed on the liquid discharge side (for example, the skin side in the case of a disposable diaper). The water absorption layer 52 is disposed between the first substrate 51 and the second substrate 53.

A particulate water absorbent 54 is contained in the water absorption layer 52. In Fig. 9, it is shown the water absorption layer 52 with the particulate water absorbent 54 present between the first substrate 51 and the second substrate 53. A part of the particulate water absorbent 54 may be desorbed from each of the substrates 51 and 53. The particulate water absorbent 54 (a region containing the particulate water absorbent 54) is disposed with a gap 55 substantially not containing the particulate water absorbent 54. The gap 55 is formed between the first substrate 51 and the second substrate 53. Therefore, the water absorption "layer" does not refer only to a continuous body such as a sheet, and may have any form as long as the water absorption layer exists between the first substrate 51 and the second substrate 53 with a certain thickness and length. For example, the water absorption layer 52 may be intermittently present between the first substrate 51 and the second substrate 53 with a certain thickness and length.

The water absorption layer 52 contains the particulate water absorbent 54 in contact with (alternatively, fixed to) the first substrate 51 and the particulate water absorbent 54 in contact with (alternatively, fixed to) the second substrate 53. Some of the particulate water absorbents 54 may not be in contact with the substrates 51 and 53 (alternatively, may not be fixed; may be detached from the substrates 51 and 53). When the particulate water absorbent 54 is fixed to each of the substrates 51 and 53, for example, an adhesive may be used.

The particulate water absorbent 54 may be present in the first substrate 51. The particulate water absorbent 54 in the first substrate 51 may be, for example, the particulate water absorbent 54 in contact with (alternatively, fixed to) the first substrate 51 or the particulate water absorbent 54, which has been in contact with (alternatively, fixed to) the second substrate 53, desorbed and captured in the first substrate 51.

In the present embodiment, the first substrate 51 and the particulate water absorbent 54 in the water absorption layer 52 are preferably in contact with each other directly or with an adhesive, and/or the second substrate 53 and the particulate water absorbent 54 in the water absorption layer 52 are preferably in contact with each other directly or with an adhesive.

The gap 55 may be formed in a part of the water absorption layer, or the region containing the particulate water absorbent may be disposed apart by the gap 55 substantially not containing the particulate water absorbent in a part of the water absorption layer.

As illustrated in Fig. 10, the gap 55 is formed to extend in the longitudinal direction of the absorbent body 50. In Fig. 10, the gap 55 is disposed at the center in the longitudinal direction and the short-side direction of the absorbent body 50. For example, when the absorbent body 50 has a size of 160 mm long × 80 mm wide, the gap 55 has a size of 60 mm long × 10 mm wide.

In the absorbent body 50 according to the present embodiment, since the particulate water absorbent 54 is not sprayed and disposed in the region of the gap 55, the region of the gap 55 does not substantially contain the particulate water absorbent 54. Additives and the like other than the particulate water absorbent 54 may be contained in the region of the gap 55. For example, the gap 55 may be formed by bringing the first substrate 51 and the second substrate 53 into contact with each other directly or with an adhesive interposed therebetween. Alternatively, the gap 55 may have a shape in which the first substrate 51 follows the particulate water absorbent 54 (the region containing the particulate water absorbent 54). In this case, as illustrated in Fig. 11, the first substrate 51 has a shape that covers the region containing the particulate water absorbent 54 on the region containing the particulate water absorbent 54, and has a shape that sinks toward the second substrate 53 on the gap 55 and extends along the upper surface of the region containing the particulate water absorbent 54. Alternatively, the gap 55 may have a shape in which the second substrate 53 follows the particulate water absorbent 54 (the region containing the particulate water absorbent 54). In this case, the second substrate 53 has a shape that covers the region containing the particulate water absorbent 54 under the region containing the particulate water absorbent 54, and has a shape that is lifted toward the first substrate 51 under the gap 55 and extends along the lower surface of the region containing the particulate water absorbent 54 (not illustrated).

When the first substrate 51 and/or the second substrate 53 have a shape following the particulate water absorbent 54, the first substrate 51 and the second substrate 53 are in contact with each other, so that the regions containing the particulate water absorbent 54 are separated from each other. In the present embodiment, the first substrate 51 and the second substrate 53 are in contact with each other, but that regions can act as the liquid passage, so that even such a configuration is regarded as the gap 55. As the first substrate 51 (in some cases, the first substrate 51 and the second substrate 53) penetrate the water absorption layer 52, the water absorption layer 52 is separated, so that the water absorption layer 52 is intermittently present in this embodiment. By overlapping the end of the first substrate 51 and the end of the second substrate 53, the end of the absorbent body 50 may be closed by the first substrate 51 and the second substrate 53 (not illustrated) . Also in this case, the first substrate 51 (the first substrate 51 and the second substrate 53 in some cases) penetrates the end of the water absorption layer 52, so that a region where the water absorption layer 52 does not exist at the end of the water absorption layer 52 is created.

In the absorbent body 50, the gap 55 is formed by providing a region where the particulate water absorbent 54 does not exist on a part of the second substrate 53. In the absorbent body 50 of the present embodiment, the gap 55 (that is, the region where the particulate water absorbent 54 does not exist) is provided to extend along the longitudinal direction of the absorbent body 50. As a result, the function as the liquid passage can be effectively exhibited. The shape in which the gap 55 is provided along the longitudinal direction may be, for example, a linear shape, a curved shape, or a wave shape. The position where the gap 55 is provided is not limited as long as it has a continuous shape, but is preferably the center in the short-side direction of the absorbent body 50, from the viewpoint of absorbability. The length (length in the longitudinal direction) of the gap 55 is not limited as long as the effect of the present embodiment can be exhibited, but is preferably 1/50 to 1/1, more preferably 1/20 to 1/1, and still more preferably 1/10 to 1/1 with respect to the length (length in the longitudinal direction) of the absorbent body 50, from the viewpoint of absorbability. The width (length in the short-side direction) of the gap 55 is not limited as long as the effect of the present embodiment can be exhibited, but is preferably 1/50 to 1/1, more preferably 1/20 to 1/1, and still more preferably 1/10 to 1/1 with respect to the width (length in the short-side direction) of the absorbent body 50, from the viewpoint of absorbability. The number of gaps 55 may be one or more. An example of the form of the gap 55 is illustrated in Figs. 7 to 9.

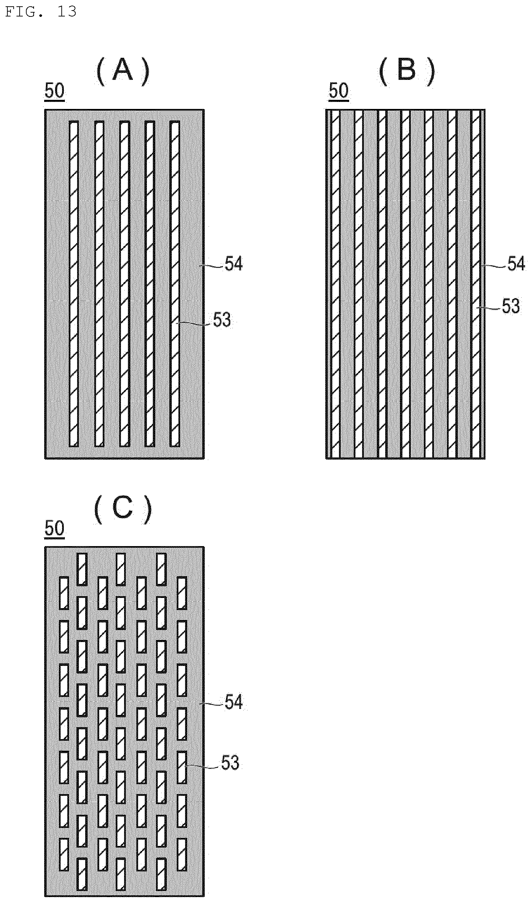

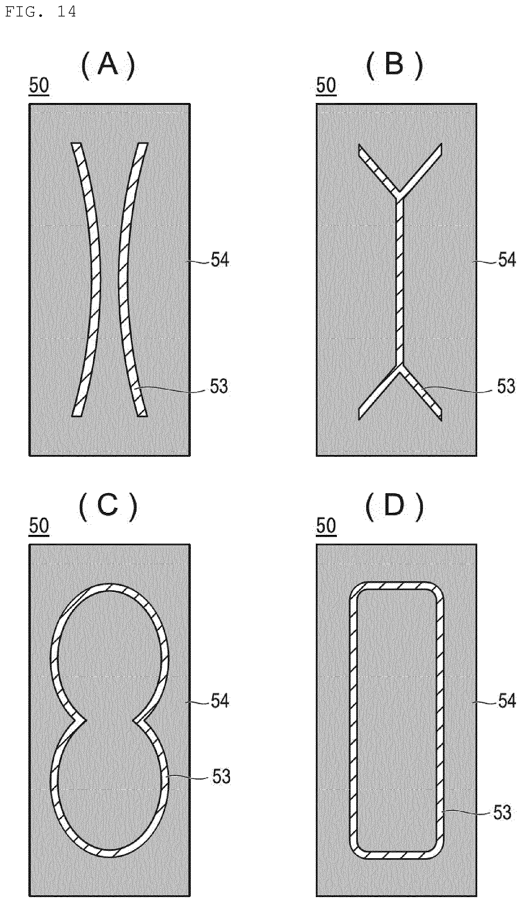

The gap 55 may have a portion extending in the longitudinal direction. For example, as illustrated in Fig. 12(A), the gap 55 may be formed from one end to the other end in the longitudinal direction of the absorbent body 50. As illustrated in Figs. 12(B) to 12(D), one or more gaps 55 orthogonal to or intersecting with an angle with respect to the gap 55 extending in the longitudinal direction may be further provided. As illustrated in Figs. 13(A) to 13(C), a plurality of gaps 55 extending in the longitudinal direction may be provided, and the gaps 55 may be intermittently provided. As illustrated in Figs. 14(A) to 14(D), the gap 55 may have a waveform, a V-shape, an O-shape, or a combination thereof.

Second embodiment: "Absorbent body having configuration (b)"

An absorbent body according to a second embodiment of the present embodiment includes a first substrate having a liquid-absorbing surface that directly absorbs a liquid formed on a front surface side and a water absorption layer disposed on a back surface side of the first substrate, in which the water absorption layer contains a specific particulate water absorbent, and the absorbent body satisfies that (b) the first substrate is a liquid permeable sheet having a porosity of 95% or more.

In one embodiment, the absorbent body according to the second embodiment has a first substrate, a second substrate, and a water absorption layer located between the first substrate and the second substrate. That is, in one embodiment, the absorbent body further includes a second substrate, and the water absorption layer is located between the first substrate and the second substrate.

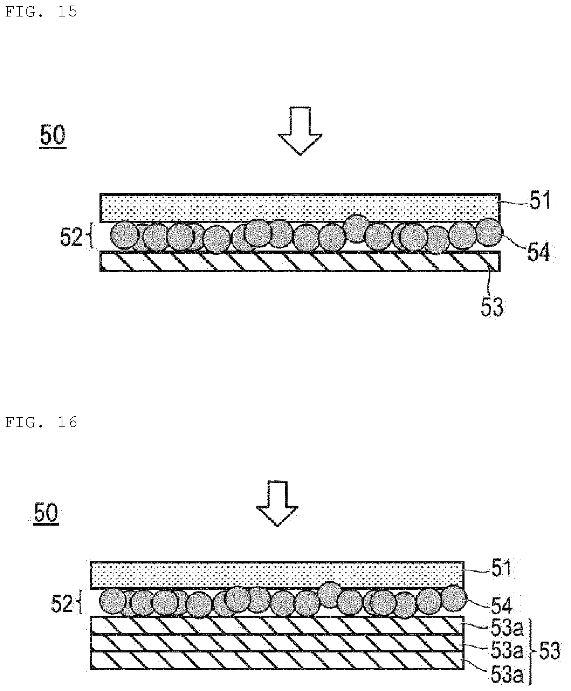

The second embodiment will be described with reference to Figs. 15 and 16. Fig. 15 is a schematic cross-sectional view of an absorbent body 50 according to a second embodiment of the present invention taken along a short-side direction of the absorbent body 50. Fig. 16 is a schematic view of another embodiment in the absorbent body according to the second embodiment of the present invention and a cross-sectional view of the absorbent body taken along the short-side direction of the absorbent body. The second embodiment is the same as the first embodiment except that the gap 55 is not provided in the water absorption layer 52, the porosity of the first substrate is in a specific range, and the second substrate has a laminated structure. In the second embodiment, the same configuration as that of the first embodiment will be omitted. That is, the descriptions (reference signs) in Figs. 9 to 14 can be similarly applied to the descriptions in Figs. 15 and 16.

As illustrated in Fig. 15, the absorbent body 50 includes a first substrate 51, a water absorption layer 52, and a second substrate 53. The water absorption layer 52 has a structure of being sandwiched between the first substrate 51 and the second substrate 53. The first substrate 51 is located on a side to which a liquid (liquid to be absorbed) is introduced with respect to the water absorption layer 52. That is, the first substrate 51 is disposed on the liquid introduction side (for example, the skin side in the case of a disposable diaper). The water absorption layer 52 is disposed between the first substrate 51 and the second substrate 53. A particulate water absorbent 54 is contained in the water absorption layer 52. In Fig. 15, it is shown that the water absorption layer 52 with the particulate water absorbent 54 present between the first substrate 51 and the second substrate 53.

In the second embodiment, the first substrate 51 is a liquid permeable sheet having a porosity of 95% or more, and the first substrate 51 is a liquid permeable sheet having a porosity of preferably 95.5% or more, more preferably 96% or more, still more preferably 96.5% or more, particularly preferably 97.5% or more, and most preferably 98% or more. As the porosity of the first substrate, a value calculated according to the method described above is adopted. The porosity of the first substrate can be controlled by a bulk density, a basis weight, a material, a network structure, production process conditions, and the like.

In the second embodiment, the second substrate 53 may be formed by stacking third substrates 53a. For example, as illustrated in Fig. 16, the second substrate 53 is formed by laminating a plurality of (for example, three) third substrates 53a. As a result, the absorbed liquid is diffused when reaching the second substrate 53, and the liquid retention amount in the second substrate increases, so that the absorption rate and the suppress of the release amount can be further improved. The third substrate 53a is preferably laminated in two or more layers, and more preferably laminated in three or more layers. The upper limit of the number of the third substrates 53a to be laminated is practically 10 or less.

The present embodiment is not limited to the above-described embodiments, and various modifications can be made within the scope of claims.

Hereinafter, each member constituting the absorbent body according to the present embodiment will be described in detail. In the following description, unless otherwise specified, the present invention is applied to both the first embodiment and the second embodiment.

[1] First substrate

The first substrate is a liquid permeable substrate located on a side to which a liquid to be absorbed is introduced. A liquid to be absorbed is not limited to water, may be urine, blood, sweat, feces, waste fluid, moisture, steam, ice, a mixture of water and an organic solvent and/or an inorganic solvent, rain water, ground water, or the like, and is not particularly limited as long as water is included. Preferred examples thereof include urine, menstrual blood, sweat, and other body fluids.

In the absorbent body according to the first embodiment of the present embodiment, the liquid permeable substrate as the first substrate is not particularly limited as long as a material, a configuration, and a shape enable liquid to permeate. For example, the liquid permeable substrate may be a liquid permeable sheet (for example, nonwoven fabric) obtained by mixing hydrophilic fibers with a heat-sealable resin, an adhesive, or the like and processing the mixture into a sheet shape, or may be a layered molded product (for example, a pad made of pulp) obtained by simply compressing hydrophilic fibers without using a heat-sealable resin, an adhesive, or the like. In the present specification, the material, configuration, and shape of the "liquid permeable substrate" are not particularly limited as long as they enable liquid to permeate. The "liquid permeable sheet" is limited to a sheet obtained by mixing hydrophilic fibers with a heat-sealable resin, an adhesive, or the like and processing the mixture into a sheet shape. Therefore, the term "liquid permeable sheet" refers to a liquid permeable substrate limited to a sheet that is not formed only of hydrophilic fibers and has a sheet shape.

In the absorbent body according to the second embodiment of the present embodiment, the liquid permeable substrate as the first substrate preferably has high shape retainability in addition to liquid permeability from the viewpoint of liquid diffusibility and a release amount. Therefore, the first substrate in the second embodiment is preferably a liquid permeable sheet (for example, nonwoven fabric) obtained by mixing hydrophilic fibers with a heat-sealable resin, an adhesive, or the like and processing the mixture into a sheet shape.

When the first substrate is a liquid permeable substrate and is located on a liquid absorbing side, the performance (amount of return, leakage in the plane direction, or the like) of the absorbent body, which is the effect of the present embodiment can be sufficiently exhibited. The water permeability of the liquid permeable substrate is preferably a coefficient of water permeability (JIS A1218:2009) of $1\times10^{-5}$ cm/sec or more. The coefficient of water permeability is more preferably $1\times10^{-4}$ cm/sec or more, still more preferably $1\times10^{-3}$ cm/sec or more, particularly preferably $1\times10^{-2}$ cm/sec or more, and most preferably $1\times10^{-1}$ cm/sec or more.

In the first embodiment, the basis weight of the first substrate is preferably 3 to 100 $g/m^2$, more preferably 5 to 90 $g/m^2$, and still more preferably 10 to 80 $g/m^2$. When the basis weight of the first substrate is in such a range, as a result, the absorption rate of the absorbent body is further increased, and the release amount can be further reduced. In the second embodiment, the basis weight of the first substrate 51 is preferably 3 to 100 $g/m^2$, more preferably 5 to 90 $g/m^2$, and still more preferably 10 to 80 $g/m^2$. When the basis weight of the first substrate is in such a range, the liquid can be efficiently diffused in the first substrate, and as a result, the absorption rate of the absorbent body is further increased, and the release amount can be further reduced.

In the first embodiment and the second embodiment, the thickness of the first substrate is preferably 0.01 mm or more and 10 mm or less, more preferably 0.03 mm or more and 9 mm or less, still more preferably 0.05 mm or more and 8 mm or less, particularly preferably 0.07 mm or more and 7 mm or less, and most preferably 0.09 mm or more and 6 mm or less, for example, at 40% RH to 50% RH. When the thickness of the first substrate is in such a range, the distance between the liquid-absorbing surface of the first substrate and the water absorption layer and the second substrate can be sufficiently secured, and the liquid once reaching the water absorption layer and the second substrate can be significantly reduced from returning. The thickness of the first substrate in the second embodiment is as described above.

The thicknesses of the first substrate, the second substrate, and the absorbent body in the present application were measured using a caliper. The number of measurement points was set to five different points in the sheet to be measured, measurement was performed twice for each point, and the measurement value was an average value of five points in total. At the time of thickness measurement, the thickness was measured so that pressure was not applied to the sheet to be measured as much as possible.

The thickness and basis weight of the first substrate can be controlled by the material constituting the first substrate, the production method of the first substrate, and the like, and the thickness and basis weight of the first substrate are determined by the balance thereof.

"Material constituting substrate"

Examples of the material constituting the first substrate include paper (sanitary paper, for example, tissue paper, toilet paper, and towel paper), cellulose fibers such as mechanical pulp, chemical pulp, semi-chemical pulp, and dissolving pulp obtained from wood, hydrophilic fibers such as artificial cellulose fibers such as rayon and acetate, nets, nonwoven fabrics, woven fabrics, films, and the like. In the first embodiment of the present embodiment, from the viewpoint of water permeability, as the first substrate, a hydrophilic fiber such as pulp or a nonwoven fabric is preferably used. In the second embodiment of the present embodiment, from the viewpoint of water permeability and shape retainability, as the first substrate, a nonwoven fabric is preferably used.

The hydrophilic fiber or nonwoven fabric to be used is not particularly limited, and examples thereof include polyolefin fibers such as polyethylene (PE) and polypropylene (PP), polyester fibers such as polyethylene terephthalate (PET), polytrimethylene terephthalate (PTT), and polyethylene naphthalate (PEN), polyamide fibers such as nylon, rayon fibers, other synthetic fibers, cotton, silk, hemp, pulp (cellulose fibers), and the like, from the viewpoint of liquid permeability, flexibility, and strength as an absorbent body.

The material for the nonwoven fabric that can be used as the first substrate is preferably a rayon fiber, a polyolefin fiber, a polyester fiber, a pulp fiber, a fiber obtained by mixing these fibers, and the like, and is more preferably a polyolefin fiber. These fibers may be subjected to a hydrophilization treatment.

The nonwoven fabric that can be used as the first substrate is not particularly limited, and may be obtained by any method such as an air-through method; an air-laid method; a spunbond method; or a spunlace method.

The air-through method refers to processing of blowing hot gas to a heat-sealable composite fiber such as PE/PP or PE/PET to perform thermal fusion, increasing the amount of air contained between fibers, increasing the volume, and decreasing the density. The air-laid method is a method in which fibers are uniformly dispersed on a flow of air and absorbed on a wire mesh to form a nonwoven fabric, and since air is used to disperse pulp fibers, the volume can be increased and the density can be reduced. When the first substrate is an air-through nonwoven fabric, liquid to be absorbed is easily introduced into the first substrate quickly after coming into contact with the liquid-absorbing surface of the first substrate. That is, by using an air-through nonwoven fabric as the first substrate, the first substrate having low water absorption power and high liquid permeability can be obtained, and the amount of return in the absorbent body can be significantly reduced.

In the first embodiment, the first substrate is preferably a substrate formed only of hydrophilic fibers such as pulp or a nonwoven fabric obtained by an air-through method or an air-laid method (an air-laid nonwoven fabric or an air-through nonwoven fabric) and is more preferably an air-through nonwoven fabric. In one embodiment of the first embodiment, the first substrate includes at least one selected from the group consisting of an air-laid nonwoven fabric and pulp. In the second embodiment, the first substrate is preferably an air-through nonwoven fabric.

[2] Second substrate

When the second substrate is a liquid permeable substrate and is located on a side opposite to the liquid absorbing side, the performance (amount of return, leakage in the plane direction, or the like) of the absorbent body, which is the effect of the present embodiment can be sufficiently exhibited. In the absorbent bodies according to the first embodiment and the second embodiment of the present embodiment, the liquid permeable substrate as the second substrate is not particularly limited as long as a material, a configuration, and a shape can permeate liquid. For example, the liquid permeable substrate may be a liquid permeable sheet (for example, nonwoven fabric) obtained by mixing hydrophilic fibers with a heat-sealable resin, an adhesive, or the like and processing the mixture into a sheet shape, or may be a layered molded product (for example, a pad made of pulp) obtained by simply compressing hydrophilic fibers without using a heat-sealable resin, an adhesive, or the like. The water permeability of the liquid permeable substrate is preferably a coefficient of water permeability (JIS A1218:2009) of $1\times10^{-5}$ cm/sec or more. The coefficient of water permeability is more preferably $1\times10^{-4}$ cm/sec or more, still more preferably $1\times10^{-3}$ cm/sec or more, particularly preferably $1\times10^{-2}$ cm/sec or more, and most preferably $1\times10^{-1}$ cm/sec or more.

In the first embodiment and the second embodiment, the thickness of the second substrate is preferably 0.01 mm or more and 50 mm or less, more preferably 0.05 mm or more and 45 mm or less, still more preferably 0.1 mm or more and 40 mm or less, particularly preferably 0.15 mm or more and 35 mm or less, and most preferably 0.2 mm or more and 30 mm or less, for example, at 40% RH to 50% RH. In the second embodiment, when the second substrate is formed by laminating a plurality of the third substrates, the thickness of the second substrate means the total thickness of the plurality of the third substrates.

In the first embodiment, the basis weight of the second substrate is preferably 5 to 500 $g/m^2$, more preferably 10 to 400 $g/m^2$, and still more preferably 15 to 350 $g/m^2$. When the basis weight of the second substrate is in such a range, as a result, the absorption rate of the absorbent body is further increased, and the release amount can be further reduced. In the second embodiment, the basis weight of the second substrate is preferably 5 to 750 $g/m^2$, more preferably 10 to 650 $g/m^2$, and still more preferably 15 to 550 $g/m^2$. When the basis weight of the second substrate is in such a range, the liquid can be efficiently diffused in the first substrate, and as a result, the absorption rate of the absorbent body is further increased, and the release amount can be further reduced.

The thickness and basis weight of the second substrate can be controlled by the material constituting the second substrate, the production method of the second substrate, and the like, and the thickness and bulk density of the second substrate are determined by the balance thereof.

"Material constituting substrate"

As the material constituting the second substrate, the same material as that of the first substrate can be applied. In the first embodiment and the second embodiment, from the viewpoint of water permeability, as the second substrate, a hydrophilic fiber such as pulp or a nonwoven fabric is preferably used. As the material for the nonwoven fabric, the same material as that of the first substrate can be applied, and for example, a rayon fiber, a polyolefin fiber, a polyester fiber, a pulp fiber, a fiber obtained by mixing these fibers, and the like are preferable, and a polyolefin fiber is more preferable.

The nonwoven fabric that can be used as the second substrate is not particularly limited, and may be obtained by any method such as an air-through method; an air-laid method; a spunbond method; or a spunlace method. The spunlace method is a method of entangling fibers by a high-pressure water jet and does not use an adhesive. The air-laid method is a method in which a pulverized pulp is dispersed by air and received with a suction cage roll or a screen mesh belt to form a web, and the web is hot-pressed on the surface using an adhesive, a heat-sealable fiber, or the like.

The second substrate is preferably a substrate formed only of hydrophilic fibers such as pulp or a substrate obtained by an air-laid method (air-laid nonwoven fabric) or a spunlace method (spunlace nonwoven fabric), more preferably a substrate formed only of hydrophilic fibers such as pulp or an air-laid nonwoven fabric, and still more preferably an air-laid nonwoven fabric. In one embodiment, the second substrate includes at least one selected from the group consisting of an air-laid nonwoven fabric and pulp. When the second substrate is a substrate formed only of hydrophilic fibers such as pulp, an air-laid nonwoven fabric, or a spunlace nonwoven fabric, the absorption rate in the absorbent body can be improved, and the release amount can be significantly reduced.

In the second embodiment, when the second substrate is formed by stacking the third substrates, the second substrate is preferably a substrate formed by stacking the third substrates. In this case, the absorption rate in the absorbent body can be improved, and the release amount can be significantly reduced.

[3] Water absorption layer

The water absorption layer in the absorbent body according to the present embodiment contains a specific particulate water absorbent. In the first embodiment and the second embodiment, the content of the particulate water absorbent (preferably, a specific particulate water absorbent) contained in the absorbent body is preferably 50 to 400 $g/m^2$, more preferably 75 to 380 $g/m^2$, and still more preferably 100 to 350 $g/m^2$.

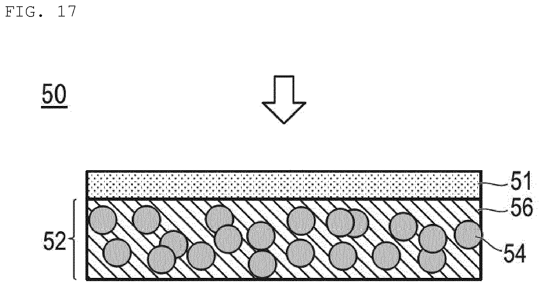

The absorbent body according to the present embodiment may contain, in the water absorption layer, other particulate water absorbents, pulp, deodorants, antibacterial agents, fragrances, various inorganic powders, pigments, dyes, water-absorbent fibers, oxidizing agents, reducing agents, and the like, in addition to the specific particulate water absorbent. In the absorbent body according to the present embodiment, the water absorption layer may be a water absorption layer obtained by mixing a particulate water absorbent and a hydrophilic fiber such as pulp, and the like. In this case, for example, the water absorption layer can be produced by a method in which a particulate water absorbent and pulverized hydrophilic fibers are dry-mixed using a mixing machine such as a mixer, and the obtained mixture is formed into a web by, for example, air papermaking or the like, and then compression molding is performed as necessary, and the like. An example of such a water absorption layer is shown in Fig. 17.

Fig. 17 is a schematic cross-sectional view of the absorbent body 50 according to the second embodiment of the present embodiment taken along the short-side direction of the absorbent body 50. The form of Fig. 17 is the same as those of Figs. 15 and 16 except that the form of the water absorption layer is different and the second substrate is not essential because the form of the water absorption layer is different. As illustrated in Fig. 17, the water absorption layer 52 of the absorbent body 50 contains a particulate water absorbent 54 and a hydrophilic fiber 56. The form of the water absorption layer is similarly applied to the first embodiment. Therefore, also in the first embodiment, in the case of the absorbent body 50 including the water absorption layer containing the particulate water absorbent 54 and the hydrophilic fiber 56, the absorbent body 50 may not include the second substrate 53.

In one embodiment of the second embodiment, as in the first embodiment, the region containing the particulate water absorbent in the water absorption layer may be disposed with a gap substantially not containing the particulate water absorbent, and the gap may be formed to extend in the longitudinal direction of the absorbent body. Therefore, in the second embodiment, the embodiments of Figs. 9 to 14 can be similarly applied. In one embodiment of the second embodiment, the region containing the particulate water absorbent in the water absorption layer is disposed with a gap substantially not containing the particulate water absorbent, the gap is formed to extend in the longitudinal direction of the absorbent body, and the second substrate is formed by stacking the third substrates. In this case, the absorption rate in the absorbent body can be improved, and the release amount can be significantly reduced.

(Particulate water absorbent)

The water absorption layer contains a specific particulate water absorbent. Unless otherwise specified, when the water absorbent is a mixture of a plurality of particulate water absorbents, the following description relates to the physical properties of the mixture. That is, the physical properties of the particulate water absorbent are the physical properties of the mixture of all the particulate water absorbents contained in the water absorption layer. The physical properties of the particulate water absorbent may be measured by taking out only the particulate water absorbent from the absorbent body so that the fluff pulp or the like is not mixed.

In the absorbent body according to the present embodiment, the water absorption layer contains a specific particulate water absorbent containing polyacrylic acid (salt)-based water-absorbing resin particles as a main component and having a form including a cavity and a void, in which a cavity ratio to the total volume is 10% by volume or more, and a void ratio to the total volume is 0.5% by volume or less. Such a specific particulate water absorbent is as described above.

[4-2] Disposed-type absorbent body

In one embodiment, the absorbent body containing the particulate water absorbent of the present invention is suitable for an absorbent article disposed and used on a certain object (for example, a bed, a floor, or the like). Similarly to the wearable type absorbent body, the absorbent body of the present embodiment also has a feature that a specific particulate water absorbent, that is, the particulate water absorbent of the above embodiment is used. Therefore, the disposed-type absorbent body incudes a water absorption layer, the water absorption layer contains a particulate water absorbent including poly(meth)acrylic acid (salt)-based water-absorbing resin particles as a main component, the particulate water absorbent includes a cavity that is a space connecting to outside and a void that is a closed space not connecting to outside, a cavity ratio to the total volume is 10% by volume or more, and a void ratio to the total volume is 0.5% by volume or less. By using the specific particulate water absorbent in the water absorption layer, an absorbent body having a high speed of incorporating liquid and a reduced release amount can be obtained. In the present embodiment, the present inventors have found a configuration in which even more excellent absorption performance can be exhibited by using the specific particulate water absorbent having excellent absorption performance.

As the disposed-type absorbent body, the water absorption layer containing a specific particulate water absorbent may be used as an absorbent body as it is. In this case, an absorbent article described below (see [4-3]) may be obtained by an absorbent body (water absorption layer), a liquid permeable sheet disposed to cover the absorbent body (water absorption layer), and a liquid impermeable sheet disposed to sandwich the absorbent body (water absorption layer) together with the liquid permeable sheet. As the absorbent body (water absorption layer), one obtained by wrapping a specific particulate water absorbent with paper, tissue, or nonwoven fabric, or one obtained by wrapping a mixture of pulp, cotton, or the like and a specific particulate water absorbent with paper, tissue, nonwoven fabric, or the like can be used. The absorbent body (water absorption layer) is disposed near the center of the liquid permeable sheet and the liquid impermeable sheet, and absorbs excreta such as urine excreted by humans or animals.

In this case, grooves may be formed in the absorbent body (water absorption layer). The grooves can be formed by a method such as pressing the absorbent body (water absorption layer) with a roll or reducing the thickness of a component (particulate water absorbent, pulp, cotton, or the like) constituting the absorbent body. The grooves may be continuous or intermittent. The entire surface of the absorbent body (water absorption layer) may be embossed. In this case, a plurality of recesses are formed on the absorbent body (water absorption layer) on the entire surface or a part of the absorbent body (water absorption layer). The recesses can be formed by a so-called embossing process of pressing the absorbent body (water absorption layer) with a roll. The shape of the recess is not particularly limited, and may be a square, a triangle, another polygon, a circle, an ellipse, or the like. The width and depth of the groove and the recess are not particularly limited, and are appropriately adjusted.

In one embodiment, the disposed-type absorbent body may be an absorbent body including a first substrate and a water absorption layer disposed on the back surface side of the first substrate. That is, in one embodiment, the disposed-type absorbent body includes a first substrate having a liquid-absorbing surface that directly absorbs a liquid formed on a front surface side and a water absorption layer disposed on a back surface side of the first substrate, in which the water absorption layer contains a particulate water absorbent including poly(meth)acrylic acid (salt)-based water-absorbing resin particles as a main component, the particulate water absorbent includes a cavity that is a space connecting to outside and a void that is a closed space not connecting to outside, a cavity ratio to the total volume is 10% by volume or more, a void ratio to the total volume is 0.5% by volume or less, and the absorbent body satisfies at least one of the following (a) and (b): (a) a region containing the particulate water absorbent in the water absorption layer is disposed with a gap substantially not containing the particulate water absorbent and the gap is formed to extend in a longitudinal direction of the absorbent body; and (b) the first substrate is a liquid permeable sheet having a porosity of 95% or more. In the present embodiment, the absorbent body is preferably an absorbent body satisfying the above (b). In the present embodiment, more preferably, the absorbent body has a first substrate, a second substrate, and a water absorption layer located between the first substrate and the second substrate. That is, in one embodiment, the absorbent body further includes a second substrate, and the water absorption layer is located between the first substrate and the second substrate.

In the present embodiment, as the first substrate, the second substrate, and the water absorption layer, the same materials as those of the above-described wearable type absorbent body can be used except for the basis weight of the particulate water absorbent in the following water absorption layer. The disposed-type absorbent body is used in a relatively large area (for example, 20 cm × 20 cm or more). In this case, the basis weight of the particulate water absorbent is preferably 5 to 100 g/m$^2$.

[4-3] Absorbent article

An absorbent article according to one embodiment of the present invention has a structure in which the absorbent body described in [4-1] and [4-2] is sandwiched between a liquid permeable sheet and a liquid impermeable sheet. The liquid permeable sheet is located on the first substrate side, and the liquid impermeable sheet is located on the second substrate side. That is, the absorbent article according to one embodiment of the present invention is obtained by sandwiching the absorbent body of the present invention between a liquid permeable sheet and a liquid impermeable sheet, the liquid permeable sheet is located on the first substrate side, and the liquid impermeable sheet is located on the second substrate side. The liquid permeable sheet in the absorbent article is prepared separately from the liquid permeable sheet used in the first substrate described above. Specific examples of the absorbent article include disposable diapers, incontinence pads, sanitary napkins, pet sheets, waterproof sheets for nursing care, portable toilets for disaster, drip sheets for food, water sealants for power cables, and the like.

As the liquid permeable sheet and the liquid impermeable sheet, those known in the technical field of absorbent articles can be used without particular limitation. The absorbent article can be produced by a known method.

Examples

The present invention will be described more specifically with reference to the following Experimental Examples, but the present invention is not to be construed as being limited to these descriptions, and experimental examples obtained by appropriately combining the technical means disclosed in Experimental Examples are also included in the scope of the present invention. In Examples, the expression "part(s)" or "%" may be used, but unless otherwise specified, the expression represents "part(s) by mass" or "% by mass". Unless otherwise specified, each operation is performed at room temperature (25°C).

[Example 1-1]

(Step for preparing aqueous monomer solution)

An aqueous monomer solution was prepared by mixing 300 parts by mass of acrylic acid, 100 parts by mass of a 48% by mass aqueous sodium hydroxide solution, 0.65 parts by mass of polyethylene glycol diacrylate (average n number: 9), 16.4 parts by mass of a 0.1% by mass aqueous pentasodium ethylenediamine tetramethylene phosphonate solution, and 273.2 parts by mass of deionized water together.

The aqueous monomer solution adjusted to a temperature of 38°C was continuously quantitatively pumped, and then 150.6 parts by mass of a 48% by mass aqueous sodium hydroxide solution was further continuously mixed with the aqueous monomer solution by line mixing. At this time, the liquid temperature of the aqueous monomer solution was raised to 87°C by the heat of neutralization.

(Polymerization step of aqueous monomer solution)

Furthermore, 14.6 parts by mass of a 4% by mass aqueous sodium persulfate solution was continuously mixed with the aqueous monomer solution by line mixing, and then the resulting solution was continuously supplied to a continuous polymerizer having a planar polymerization belt provided with weirs at both ends so as to have a thickness of 10 mm. Thereafter, polymerization was continuously performed for a polymerization time of 3 minutes to obtain a belt-formed crosslinked hydrogel polymer (1-1a). The obtained belt-formed hydrogel (1-1a) was continuously cut at equal length in the width direction with respect to the moving direction of the polymerization belt to obtain a strip-formed hydrogel (1-1b) having a cutting length of 300 mm.

(Gel-crushing step of hydrogel)

The obtained strip-formed hydrogel (1-1b) was put into a screw extruder and subjected to gel-crushing. The gel-crushing (first gel-crushing) was performed using, as the screw extruder, the meat chopper 100 illustrated in Fig. 2A having an outer diameter of a screw shaft of 86 mm and provided a supporting tool (see Fig. 2B) having a diameter of 100 mm and a thickness of 10 mm at the tip end part of the screw shaft(extrusion port), while hot water at 80°C, water vapor, and an aqueous lauryl dimethylaminoacetic acid betaine solution having a concentration of 10% by mass were supplied simultaneously with the hydrogel (1-1b). With respect to the solid content of the hydrogel (1-1b), 1% by mass of hot water at 80°C, 1% by mass of water vapor, and 0.05% by mass of lauryl dimethylaminoacetic acid betaine as an active ingredient were supplied. Subsequently, the crushed gel obtained by the first gel-crushing was further subjected to gel-crushing (second gel-crushing) while similarly supplying hot water, water vapor, and an aqueous lauryl dimethylaminoacetic acid betaine solution. Subsequently, the crushed gel obtained by the second gel-crushing was further subjected to gel-crushing (third gel-crushing) while similarly supplying hot water, water vapor, and an aqueous lauryl dimethylaminoacetic acid betaine solution. Subsequently, the crushed gel obtained by the third gel-crushing was further subjected to gel-crushing (fourth gel-crushing) while similarly supplying hot water, water vapor, and an aqueous lauryl dimethylaminoacetic acid betaine solution. All of the first gel-crushing, the second gel-crushing, the third gel-crushing, and the fourth gel-crushing were performed at a screw shaft rotation speed of 65 rpm. The GGE(2) was 35 J/g in total for the first gel-crushing, the second gel-crushing, the third gel-crushing, and the fourth gel-crushing.

The solid content ratio of the obtained particulate hydrogel (1-1c) was 49% by mass (moisture content: 51% by mass) and the average gel particle size in terms of solid content thereof was 135 $\mu$m.

(Drying step of particulate hydrogel)

The obtained particulate hydrogel (1-1c) was dried using a hot-gas dryer. This dryer is provided with a basket (size of bottom surface: 30 cm $\times$ 20 cm) made of a wire mesh having a mesh opening of 1.2 mm. On the bottom surface of the basket, 500 g of the particulate hydrogel (1-1c) was spread so as to be substantially uniform, and a hot gas at 190°C was blown from below for 30 minutes to obtain a dried product (1-1A').

(Pulverizing and classification step of dried product)

After cooling, the dried product (1-1A') was supplied to a roll mill, pulverized, and classified using JIS standard sieves having mesh openings of 850 um and 150 um. Components passing through the 850 um sieve but not passing through the 150 um sieve were collected to obtain a water-absorbing resin (1-1A).

(Surface crosslinking step of water-absorbing resin)

Next, to 100 parts by mass of the water-absorbing resin (1-1A), a surface-crosslinking agent solution including 0.025 parts by mass of ethylene glycol diglycidyl ether, 0.3 parts by mass of ethylene carbonate, 0.5 parts by mass of propylene glycol, and 2.0 parts by mass of deionized water was added by spraying and mixed. The resulting mixture was heated at 200°C for 30 minutes to obtain surface-crosslinked water-absorbing resin particles (1-1B).

(Step of adding additive)

To 100 parts by weight of the surface-crosslinked water-absorbing resin particles (1-1B), 10 parts by weight of a 0.1% by weight aqueous pentasodium ethylenediamine tetramethylene phosphonate solution was added as a chelating agent under stirring and mixed for 1 minute.

Next, the mixture was left to stand in a hot-gas dryer at 60°C for 30 minutes, passed through a wire mesh having a mesh opening of 850 $\mu$m, and mixed with 0.5 parts by weight of tricalcium phosphate. In the mixing, 30 g of the surface-crosslinked water-absorbing resin particles (1B) was put in a mayonnaise bottle having a capacity of 225 ml together with tricalcium phosphate, and shaken for 3 minutes using a paint shaker to obtain a particulate water absorbent (EX-1-1).

[Example 1-2]

(Step for preparing aqueous monomer solution)

An aqueous monomer solution was prepared in the same manner as in Example 1-1, except that pentasodium ethylenediamine tetramethylene phosphonate was changed to trisodium diethylenetriaminepentaacetate.

(Polymerization step of aqueous monomer solution)

A strip-formed hydrogel (1-2b) was obtained in the same manner as in (Polymerization step of aqueous monomer solution) of Example 1-1.

(Gel-crushing step of hydrogel)

A particulate hydrogel (1-2c) was obtained in the same manner as in (Gel-crushing of hydrogel) of Example 1.

(Drying step of particulate hydrogel)

A dried product (1-2A') was obtained in the same manner as in (Drying step of particulate hydrogel) of Example 1-1.

(Pulverizing and classification step of dried product)

A water-absorbing resin (1-2A) was obtained in the same manner as in (Pulverizing and classification step of dried product) of Example 1-1.

(Surface crosslinking step of water-absorbing resin)

To 100 parts by mass of the obtained water-absorbing resin (1-2A), a surface-crosslinking agent solution including 0.025 parts by mass of ethylene glycol diglycidyl ether, 0.3 parts by mass of ethylene carbonate, 0.5 parts by mass of propylene glycol, and 2.0 parts by mass of deionized water was added by spraying and mixed with a continuous high-speed stirring dryer (TURBULIZER manufactured by HOSOKAWA MICRON CORPORATION) to obtain a humidified product (1-2B').

The obtained humidified product (1-2B') was heat-treated using a drying device (rotary heating device equipped with a heating tube) having a basic configuration illustrated in Fig. 8. This dryer includes a cylindrical rotary container (volume: 35 L) having 10 heating tubes extending in the rotation axis direction inside the dryer.

First, water vapor having a gauge pressure of 1.8 MPa (temperature: 210°C) was introduced into each heating tube of the rotary heating device, the inner surface of the rotary container was heated to higher than 180°C in advance, and the outer wall of the rotary container was sufficiently heated by tracing. Next, 4.0 kg of the humidified product (1-2B') was put into the dryer, the rotary container was rotated so that the Froude number Fr was 0.07, and the heat treatment was performed for 30 minutes. After the heat treatment, the water-absorbing resin taken out of the dryer was cooled to 80°C or lower to obtain surface-crosslinked water-absorbing resin particles (1-2B).

(Step of adding additive)

A particulate water absorbent (EX-1-2) was obtained in the same manner as in (Step of adding additive) of Example 1-1, except that pentasodium ethylenediamine tetramethylene phosphonate was changed to trisodium diethylenetriaminepentaacetate, and 0.5 parts by mass of tricalcium phosphate was changed to 0.2 parts by weight of hydrotalcite (DHT-6, manufactured by Kyowa Chemical Industry Co., Ltd.).

[Example 1-3]

(Step for preparing aqueous monomer solution)

An aqueous monomer solution was prepared in the same manner as in (Step for preparing aqueous monomer solution) of Example 1-2.

(Polymerization step of aqueous monomer solution)

A strip-formed hydrogel (1-3b) was obtained in the same manner as in (Polymerization step of aqueous monomer solution) of Example 1-1.

(Gel-crushing step of hydrogel)

A particulate hydrogel (1-3c) was obtained in the same manner as in (Gel-crushing step of hydrogel) of Example 1-1.

(Drying step of particulate hydrogel)

The obtained particulate hydrogel (1-3c) was dried using a drying device (rotary heating device equipped with a heating tube) having a basic configuration illustrated in Fig. 8. This drying device includes a cylindrical rotary container (volume: 35 L) having 10 heating tubes extending in the rotation axis direction inside the drying device. First, water vapor of 2.7 MPa (temperature: 228.1°C) was introduced into each heating tube, the inside of the rotary container (defined by a contact thermometer) was heated to higher than 200°C in advance, and the outer wall of the rotary container was also sufficiently heated by tracing. Next, 4.0 kg of the particulate hydrogel (1-3c) at 95°C was input, the rotary container was rotated so that the Froude number Fr was 0.07, carrier air at 140°C was supplied into the rotary container at 65 L/hr, and drying was performed for 40 minutes. After drying, a dried product (1-3A') taken out of the outlet had a solid content ratio of 98.5% by mass.

(Pulverizing and classification step of dried product)

Subsequently, the dried product (1-3A') discharged from the outlet of the heating device was forcibly cooled to 80°C or lower by cold air, the cooled product was supplied to a single stage roll mill (pulverizer) and pulverized, and components passing through the 850 um sieve but not passing through the 150 um sieve were collected to obtain a water-absorbing resin (1-3A).

(Surface crosslinking step of water-absorbing resin particles)

To 100 parts by mass of the obtained water-absorbing resin (1-3A), a surface-crosslinking agent solution containing 0.2% by mass of ethylene glycol diglycidyl ether and 3% by mass of water was added by spraying and then the resulting mixture was heated at 150°C for 30 minutes to obtain surface-crosslinked water-absorbing resin particles (1-3B).

(Step of adding additive)

A particulate water absorbent (EX-1-3) was obtained in the same manner as in Example 1-1, except that in (Step of adding additive) of Example 1-1, pentasodium ethylenediamine tetramethylene phosphonate was changed to trisodium diethylenetriaminepentaacetate, and 0.3 parts by mass of hydrophobic silica (AEROSIL R-972, manufactured by Nippon Aerosil Co., Ltd.) was mixed instead of 0.5 parts by weight of tricalcium phosphate.

[Example 1-4]

(Step for preparing aqueous monomer solution)

An aqueous monomer solution was prepared in the same manner as in (Step for preparing aqueous monomer solution) of Example 1-1.

(Polymerization step of aqueous monomer solution)

A strip-formed hydrogel (1-4b) was obtained in the same manner as in (Polymerization step of aqueous monomer solution) of Example 1-1.

(Gel-crushing step of hydrogel)

A particulate hydrogel (1-4c) was obtained in the same manner as in (Gel-crushing step of hydrogel) of Example 1-1.

(Drying particulate hydrogel and surface crosslinking step)

Surface-crosslinked water-absorbing resin particles (1-4B) were obtained in the same manner as in (Drying step of particulate hydrogel) of Example 3, except that after 10 minutes from the input of the particulate hydrogel (1-4c) at 95°C to the drying device of Example 1-3, a surface-crosslinking agent solution containing 0.16% by mass of ethylene glycol diglycidyl ether and 2% by mass of water with respect to the solid content of the particulate hydrogel (1-4c) during drying was spray-added by inserting a nozzle into the drying device.

(Step of adding additive)

A particulate water absorbent (EX'-1-4) was obtained in the same manner as in Example 1-1, except that in (Step of adding additive) of Example 1-1, 0.6 parts by mass of hydrotalcite was mixed instead of 0.5 parts by weight of tricalcium phosphate.

(Pulverizing and classification step)

The obtained particulate water absorbent (EX'-1-4) was supplied to a single stage roll mill (pulverizer), pulverized, and classified using JIS standard sieves having mesh openings of 850 um and 150 um. Components passing through the 850 um sieve but not passing through the 150 um sieve were collected to obtain a particulate water absorbent (EX-1-4).

[Example 1-5]

(Step for preparing aqueous monomer solution)

An aqueous monomer solution was prepared in the same manner as in Example 1-1, except that the amount of polyethylene glycol diacrylate (average n number: 9) was changed to 1.19 parts by mass, pentasodium ethylenediamine tetramethylene phosphonate was changed to trisodium diethylenetriaminepentaacetate, and 3.1 parts by mass of an aqueous sodium lactate solution having a concentration of 60% by mass was added.

(Polymerization step of aqueous monomer solution)

A strip-formed hydrogel (1-5b) was obtained in the same manner as in (Polymerization step of aqueous monomer solution) of Example 1-1.

(Gel-crushing step of hydrogel)

The obtained strip-formed hydrogel (1-5b) was put into a screw extruder and subjected to gel-crushing. The gel-crushing (first gel-crushing) was performed using, as the screw extruder, the meat chopper 100 illustrated in Fig. 2A having an outer diameter of a screw shaft of 86 mm and provided a supporting tool (see Fig. 2B) having a diameter of 100 mm and a thickness of 10 mm at the tip end part of the screw shaft (extrusion port), while hot water at 80°C, water vapor, an aqueous lauryl dimethylaminoacetic acid betaine solution having a concentration of 10% by mass, and ab aqueous hydrogen peroxide solution having a concentration of 5% by mass were supplied simultaneously with the hydrogel (1-5b). With respect to the solid content of the hydrogel (1-5b), 1% by mass of hot water at 80°C, 1% by mass of water vapor, 0.05% by mass of lauryl dimethylaminoacetic acid betaine as an active ingredient, 0.09% by mass of hydrogen peroxide as an active ingredient and were supplied. Subsequently, the crushed gel obtained by the first gel-crushing was further subjected to gel-crushing (second gel-crushing) while similarly supplying hot water, water vapor, an aqueous lauryl dimethylaminoacetic acid betaine solution, and an aqueous hydrogen peroxide solution. Subsequently, the crushed gel obtained by the second gel-crushing was further subjected to gel-crushing (third gel-crushing) while similarly supplying hot water, water vapor, an aqueous lauryl dimethylaminoacetic acid betaine solution, and an aqueous hydrogen peroxide solution. Subsequently, the crushed gel obtained by the third gel-crushing was further subjected to gel-crushing (fourth gel-crushing) while similarly supplying hot water, water vapor, an aqueous lauryl dimethylaminoacetic acid betaine solution, and an aqueous hydrogen peroxide solution. All of the first gel-crushing, the second gel-crushing, the third gel-crushing, and the fourth gel-crushing were performed at a screw shaft rotation speed of 65 rpm. The GGE(2) was 32 J/g in total for the first gel-crushing, the second gel-crushing, the third gel-crushing, and the fourth gel-crushing.

The solid content ratio of the obtained particulate hydrogel (1-5c) was 48.0% by mass (moisture content: 52.0% by mass) and the average gel particle size in terms of solid content thereof was 149 um.

(Drying particulate hydrogel and surface crosslinking step)

Surface-crosslinked water-absorbing resin particles (1-5B) were obtained in the same manner as in (Drying particulate hydrogel and surface crosslinking step) of Example 1-4.

(Step of adding additive)

To 100 parts by weight of the surface-crosslinked water-absorbing resin particles (1-5B), an aqueous solution obtained by mixing 10 parts by weight of a 0.1% by weight aqueous trisodium diethylenetriaminepentaacetate solution and 0.1 parts by mass of sodium sulfite was added under stirring and mixed for 1 minute.

Next, the mixture was left to stand in a hot-gas dryer at 60°C for 30 minutes, passed through a wire mesh having a mesh opening of 850 um, and mixed with 0.3 parts by weight of tricalcium phosphate. In the mixing, 30 g of the surface-crosslinked water-absorbing resin particles (5B) was put in a mayonnaise bottle having a capacity of 225 ml together with tricalcium phosphate, and shaken for 3 minutes using a paint shaker to obtain a particulate water absorbent (EX'-1-5).

(Pulverizing and classification step)

The obtained particulate water absorbent (EX'-1-5) was supplied to a single stage roll mill (pulverizer), pulverized, and classified using JIS standard sieves having mesh openings of 850 um and 106 um. Components passing through the 850 um sieve but not passing through the 106 um sieve were collected to obtain a particulate water absorbent (EX-1-5).

[Example 1-6]

(Step for preparing aqueous monomer solution)

An aqueous monomer solution was prepared by mixing 300 parts by mass of acrylic acid, 100 parts by mass of a 48% by mass aqueous sodium hydroxide solution, 0.65 parts by mass of polyethylene glycol diacrylate (average n number: 9), 16.4 parts by mass of a 0.1% by mass aqueous trisodium diethylenetriaminepentaacetate solution, and 273.2 parts by mass of deionized water together.

The aqueous monomer solution adjusted to a temperature of 38°C was continuously quantitatively pumped, and then 150.6 parts by mass of a 48% by mass aqueous sodium hydroxide solution was further continuously mixed with the aqueous monomer solution by line mixing. At this time, the liquid temperature of the aqueous monomer solution was raised to 87°C by the heat of neutralization.

(Polymerization step of aqueous monomer solution)

Furthermore, 14.6 parts by mass of a 4% by mass aqueous sodium persulfate solution was continuously mixed with the aqueous monomer solution by line mixing, and then the resulting solution was continuously supplied to a continuous polymerizer having a planar polymerization belt provided with weirs at both ends so as to have a thickness of 10 mm. Thereafter, polymerization was continuously performed for a polymerization time of 3 minutes to obtain a belt-formed crosslinked hydrogel polymer (1-6a). The obtained belt-formed hydrogel (1-6a) was continuously cut at equal length in the width direction with respect to the moving direction of the polymerization belt to obtain a strip-formed hydrogel (1-6b) having a cutting length of 300 mm.

(Gel-crushing step of hydrogel)

The strip-formed hydrogel (1-6b) was gel-crushed using, as a gel-crusher, a biaxial kneader provided with a main body (barrel) incorporating two rotation axes that rotate in the same direction. Each rotation axis is provided with a disk having a circular plate shape that mainly serves as a crushing means. The barrel had a jacket, and had a gas inlet for introduction of water vapor through the jacket into the main body. The barrel had a solution input port for introduction of a gel-fluidizing agent into the main body through the jacket at a position near the discharge port of the crushed particulate hydrogel (1-6c).

First, a heat medium at 105°C was circulated in the jacket, and the inside of the main body (barrel) was maintained at a temperature of 105°C. Thereafter, the rotation speed was set to 50 rpm, and the strip-formed hydrogel (1-6b) heated to 80°C was put into the input port of the biaxial kneader at a speed of 0.25 kg/min (pace of one strip-formed hydrogel (1-6b) every 2.5 seconds). At this time, simultaneously with the hydrogel (1-6b), water at 90°C and an aqueous lauryl dimethylaminoacetic acid betaine solution having a concentration of 10% by mass as a gel-fluidizing agent were supplied, an aqueous hydrogen peroxide solution having a concentration of 1% by mass was further supplied from the input port, and water vapor of 0.6 MPa was further supplied from the gas inlet. The amount of the water at 90°C supplied was 11.8% by mass with respect to the solid content of the strip-formed hydrogel (1-6b). The input amount of the water vapor of 0.6 MPa was 9.7% by mass with respect to the solid content of the strip-formed hydrogel (1-6b). The input amount of the lauryl dimethylaminoacetic acid betaine as an active ingredient was 0.08% by mass with respect to the solid content of the strip-formed hydrogel (1-6b). The input amount of the hydrogen peroxide as an active ingredient was 0.01% by mass with respect to the solid content of the strip-formed hydrogel (1-6b). An aqueous lauryl dimethylaminoacetic acid betaine solution having a concentration of 10% by mass was supplied near the outlet. The input amount of the lauryl dimethylaminoacetic acid betaine as an active ingredient was 0.08% by mass with respect to the solid content of the strip-formed hydrogel (1-6b). The disks used for gel-crushing had a diameter D was 50 mm, and the minimum clearance between the barrel and the disk was 1 mm (2% of the disk diameter D). The GGE(2) in the gel-crushing step was 89 J/g.

The solid content ratio of the obtained particulate hydrogel (1-6c) was 45% by mass (moisture content: 55% by mass) and the average gel particle size in terms of solid content thereof was 132 um.

(Drying step of particulate hydrogel)

The obtained particulate hydrogel (1-6c) was dried using a hot-gas dryer. This dryer is provided with a basket (size of bottom surface: 30 cm × 20 cm) made of a wire mesh having a mesh opening of 1.2 mm. On the bottom surface of the basket, 500 g of the particulate hydrogel (1-6c) was spread so as to be substantially uniform, and a hot gas at 190°C was blown from below for 30 minutes to obtain a dried product (1-6A').

(Pulverizing and classification step of dried product)

After cooling, the dried product (1-6A') was supplied to a roll mill, pulverized, and classified using JIS standard sieves having mesh openings of 850 um and 150 um. Components passing through the 850 um sieve but not passing through the 150 um sieve were collected to obtain a water-absorbing resin (1-6A).

(Surface crosslinking step of water-absorbing resin)

Next, to 100 parts by mass of the water-absorbing resin (1-6A), a surface-crosslinking agent solution including 0.025 parts by mass of ethylene glycol diglycidyl ether, 0.3 parts by mass of ethylene carbonate, 0.5 parts by mass of propylene glycol, and 2.0 parts by mass of deionized water was added by spraying and mixed. The resulting mixture was heat-treated at 200°C for 30 minutes to obtain surface-crosslinked water-absorbing resin particles (1-6B).

(Step of adding additive)

To 100 parts by weight of the surface-crosslinked water-absorbing resin particles (1-6B), 10 parts by weight of a 0.1% by weight aqueous DTPA (trisodium diethylenetriaminepentaacetate) solution was added as a chelating agent under stirring and mixed for 1 minute.

Next, the mixture was left to stand in a hot-gas dryer at 60°C for 30 minutes, passed through a wire mesh having a mesh opening of 850 um, and mixed with 0.5 parts by weight of tricalcium phosphate. In the mixing, 30 g of the surface-crosslinked water-absorbing resin particles (6B) was put in a mayonnaise bottle having a capacity of 225 ml together with tricalcium phosphate, and shaken for 3 minutes using a paint shaker to obtain a particulate water absorbent (EX-1-6).

[Example 1-7]

(Step for preparing aqueous monomer solution)

An aqueous monomer solution was prepared in the same manner as in (Step for preparing aqueous monomer solution) of Example 1-6, except that trisodium diethylenetriaminepentaacetate was changed to pentasodium ethylenediamine tetramethylene phosphonate.

(Polymerization step of aqueous monomer solution)

A strip-formed hydrogel (1-7b) was obtained in the same manner as in (Polymerization step of aqueous monomer solution) of Example 1-6.

(Gel-crushing step of hydrogel)

A particulate hydrogel (1-7c) was obtained in the same manner as in (Gel-crushing step of hydrogel) of Example 1-6.

(Drying step of particulate hydrogel)

A dried product (1-7A') was obtained in the same manner as in (Drying step of particulate hydrogel) of Example 1-6.

(Pulverizing and classification step of dried product)

A water-absorbing resin (1-7A) was obtained in the same manner as in (Pulverizing and classification step of dried product) of Example 1-6.

(Surface crosslinking step of water-absorbing resin)

To 100 parts by mass of the obtained water-absorbing resin (1-7A), a surface-crosslinking agent solution including 0.025 parts by mass of ethylene glycol diglycidyl ether, 0.3 parts by mass of ethylene carbonate, 0.5 parts by mass of propylene glycol, and 2.0 parts by mass of deionized water was added by spraying and mixed by a continuous high-speed stirring dryer (TURBULIZER manufactured by HOSOKAWA MICRON CORPORATION) to obtain a humidified product (1-7B').

The obtained humidified product (1-7B') was heat-treated using a drying device (rotary heating device equipped with a heating tube) having a basic configuration illustrated in Fig. 8. This dryer includes a cylindrical rotary container (volume: 35 L) having 10 heating tubes extending in the rotation axis direction inside the dryer.

First, water vapor having a gauge pressure of 1.8 MPa (temperature: 210°C) was introduced into each heating tube of the rotary heating device, the inner surface of the rotary container was heated to higher than 180°C in advance, and the outer wall of the rotary container was sufficiently heated by tracing. Next, 4.0 kg of the humidified product (1-7B') was put into the dryer, the rotary container was rotated so that the Froude number Fr was 0.07, and the heat treatment was performed for 30 minutes. After the heat treatment, the water-absorbing resin taken out of the dryer was cooled to 80°C or lower to obtain surface-crosslinked water-absorbing resin particles (1-7B).

(Step of adding additive)

A particulate water absorbent (EX-1-7) was obtained in the same manner as in (Step of adding additive) of Example 1-6, except that trisodium diethylenetriaminepentaacetate was changed to pentasodium ethylenediamine tetramethylene phosphonate.

[Example 1-8]

(Step for preparing aqueous monomer solution)

An aqueous monomer solution was prepared in the same manner as in Example 1-6, except that the amount of polyethylene glycol diacrylate (average n number: 9) was changed to 0.85 parts by mass, and 1.8 parts by mass of an aqueous sodium lactate solution having a concentration of 60% by mass was added.

(Polymerization step of aqueous monomer solution)

A strip-formed hydrogel (1-8b) was obtained in the same manner as in (Polymerization step of aqueous monomer solution) of Example 1-6.

(Gel-crushing step of hydrogel)

A particulate hydrogel (1-8c) was obtained in the same manner as in (Gel-crushing step of hydrogel) of Example 1-6.

(Drying step of particulate hydrogel)

The obtained particulate hydrogel (1-8c) was dried using a drying device (rotary heating device equipped with a heating tube) having a basic configuration illustrated in Fig. 8. This drying device includes a cylindrical rotary container (volume: 35 L) having 10 heating tubes extending in the rotation axis direction inside the drying device. First, water vapor of 2.7 MPa (temperature: 228.1°C) was introduced into each heating tube, the inside of the rotary container (defined by a contact thermometer) was heated to higher than 200°C in advance, and the outer wall of the rotary container was also sufficiently heated by tracing. Next, 4.0 kg of the particulate hydrogel (1-8c) at 95°C was input, the rotary container was rotated so that the Froude number Fr was 0.07, carrier air at 140°C was supplied into the rotary container at 65 L/hr, and drying was performed for 40 minutes. After drying, a dried product (1-8A') taken out of the outlet had a solid content ratio of 98.5% by mass.

(Pulverizing and classification step of dried product)

Subsequently, the dried product (1-8A') discharged from the outlet of the heating device was forcibly cooled to 80°C or lower by cold air, the cooled product was supplied to a single stage roll mill (pulverizer) and pulverized, and components passing through the 850 um sieve but not passing through the 150 um sieve were collected to obtain a water-absorbing resin (1-8A).

(Surface crosslinking step of water-absorbing resin)

To 100 parts by mass of the obtained water-absorbing resin (1-8A), a surface-crosslinking agent solution containing 0.2% by mass of ethylene glycol diglycidyl ether and 3% by mass of water was sprayed and the resulting mixture was heated at 150°C for 30 minutes to obtain surface-crosslinked water-absorbing resin particles (1-8B) .

(Step of adding additive)

To 100 parts by weight of the surface-crosslinked water-absorbing resin particles (1-8B), an aqueous solution obtained by mixing 10 parts by weight of a 0.1% by weight aqueous trisodium diethylenetriaminepentaacetate solution and 0.1 parts by mass of sodium sulfite was added under stirring and mixed for 1 minute.
Next, the mixture was left to stand in a hot-gas dryer at 60°C for 30 minutes, passed through a wire mesh having a mesh opening of 850 um, and mixed with 0.2 parts by weight of hydrotalcite. In the mixing, 30 g of the surface-crosslinked water-absorbing resin particles (1-8B) was put in a mayonnaise bottle having a capacity of 225 ml together with hydrotalcite, and shaken for 3 minutes using a paint shaker to obtain a particulate water absorbent (EX-1-8).

[Example 1-9]

(Step for preparing aqueous monomer solution)

An aqueous monomer solution was prepared in the same manner as in (Step for preparing aqueous monomer solution) of Example 1-6, except that trisodium diethylenetriaminepentaacetate was changed to pentasodium ethylenediamine tetramethylene phosphonate.

(Polymerization step of aqueous monomer solution)

A strip-formed hydrogel (1-9b) was obtained in the same manner as in (Polymerization step of aqueous monomer solution) of Example 1-6.

(Gel-crushing step of hydrogel)

A particulate hydrogel (1-9c) was obtained in the same manner as in (Gel-crushing step of hydrogel) of Example 1-6.

(Drying particulate hydrogel and surface crosslinking step)

Surface-crosslinked water-absorbing resin particles (1-9B) were obtained in the same manner as in (Drying step of particulate hydrogel) of Experimental Example 1-8, except that after 10 minutes from the input of the particulate hydrogel (1-9c) at 95°C to the drying device of Example 1-8, a surface-crosslinking agent solution containing 0.16% by mass of ethylene glycol diglycidyl ether and 2% by mass of water with respect to the solid content of the particulate hydrogel (1-9c) during drying was spray-added by inserting a nozzle into the drying device.

(Step of adding additive)

A particulate water absorbent (EX'-1-9) was obtained in the same manner as in (Step of adding additive) of Example 1-6, except that trisodium diethylenetriaminepentaacetate was changed to pentasodium ethylenediamine tetramethylene phosphonate.

(Pulverizing and classification step)

The obtained particulate water absorbent (EX'-1-9) was supplied to a single stage roll mill (pulverizer), pulverized, and classified using JIS standard sieves having mesh openings of 850 um and 150 um. Components passing through the 850 um sieve but not passing through the 150 um sieve were collected to obtain a particulate water absorbent (EX-1-9).

[Example 1-10]

(Step for preparing aqueous monomer solution)

An aqueous monomer solution was prepared in the same manner as in Example 1-6, except that the amount of polyethylene glycol diacrylate (average n number: 9) was changed to 0.85 parts by mass.

(Polymerization step of aqueous monomer solution)

A strip-formed hydrogel (1-10b) was obtained in the same manner as in (Polymerization step of aqueous monomer solution) of Example 1-6.

(Gel-crushing step of hydrogel)

A particulate hydrogel (1-10c) was obtained in the same manner as in (Gel-crushing step of hydrogel) of Example 1-6, except that the concentration of the aqueous hydrogen peroxide solution to be supplied was set to 5% by mass, and the input amount of hydrogen peroxide as an active ingredient was set to 0.1% by mass with respect to the solid content of the strip-formed hydrogel (1-10b) . The solid content ratio of the obtained particulate hydrogel (1-10c) was 45.2% by mass (moisture content: 54.8% by mass) and the average gel particle size in terms of solid content thereof was 148 um. The GGE(2) in the gel-crushing step was 75 J/g.

(Drying particulate hydrogel and surface crosslinking step)

Surface-crosslinked water-absorbing resin particles (1-10B) were obtained in the same manner as in (Drying particulate hydrogel and surface crosslinking step) of Example 1-9.

(Step of adding additive)

A particulate water absorbent (EX'-1-10) was obtained in the same manner as in (Step of adding additive) of Example 1-6, except that 0.5 parts by mass of tricalcium phosphate was changed to 0.3 parts by mass of hydrotalcite.

(Pulverizing and classification step)

The obtained particulate water absorbent (EX'-1-10) was supplied to a single stage roll mill (pulverizer), pulverized, and classified using JIS standard sieves having mesh openings of 850 um and 106 um. Components passing through the 850 um sieve but not passing through the 106 um sieve were collected to obtain a particulate water absorbent (EX-1-10).

[Example 1-11]

(Step for preparing aqueous monomer solution)

An aqueous monomer solution was prepared in the same manner as in (Step for preparing aqueous monomer solution) of Example 1-1.

(Polymerization step of aqueous monomer solution)

A strip-formed hydrogel (1-11b) was obtained in the same manner as in (Polymerization step of aqueous monomer solution) of Example 1-1.

(Gel-crushing step of hydrogel)

A particulate hydrogel (1-11c) was obtained in the same manner as in (Gel-crushing step of hydrogel) of Example 1-1.

(Drying step of particulate hydrogel)

A dried product (1-11A') was obtained in the same manner as in (Drying step of particulate hydrogel) of Example 1-1.

(Pulverizing and classification step of dried product)

A water-absorbing resin (1-11A) was obtained in the same manner as in (Pulverizing and classification step of dried product) of Example 1-1.

(Surface crosslinking step of water-absorbing resin)

Surface-crosslinked water-absorbing resin particles (1-11B) were obtained in the same manner as in (Surface crosslinking step of water-absorbing resin) of Example 1-1.

(Step of adding additive)

To 100 parts by weight of the surface-crosslinked water-absorbing resin particles (1-11B), 10 parts by weight of deionized water was added under stirring and mixed for 1 minute.
Next, the mixture was left to stand in a hot-gas dryer at 60°C for 30 minutes and passed through a wire mesh having a mesh opening of 850 um to obtain a particulate water absorbent (EX-1-11).

[Example 1-12]

According to the production process illustrated in Fig. 1 of WO 2020/067310 A, a series of steps were operated to prepare a hydrogel polymer (1-12c).
First, n-heptane as an organic solvent was put into a dispersing device 12, a polymerization device 14, the separation device 16, and a pipe (including a joint) connecting these devices. Subsequently, a liquid feeding pump 18 was operated to start circulation of the hydrophobic organic solvent at a flow rate of 300 mL/min. The entire amount of the organic solvent was put into the polymerization device 14 via the dispersing device 12. A heat exchanger 20 was operated to perform heating so that the temperature of the circulating organic solvent was 90°C. Next, a maleic anhydride-modified ethylenepropylene copolymer (trade name: Hi-wax (registered trademark) 1105A/Mitsui Chemicals, Inc.) as a dispersion aid was added in an amount of 0.005% by mass with respect to 100% by mass of the hydrophobic organic solvent.

Acrylic acid, a 48.5% by mass aqueous sodium hydroxide solution, and ion-exchanged water were mixed, and polyethylene glycol diacrylate (average polymerization degree: 9) as internal crosslinking agents and trisodium diethylenetriaminepentaacetate were further blended to prepare a monomer solution (1-12a). Sodium persulfate as a polymerization initiator and ion-exchanged water were mixed to prepare a 6% by mass aqueous sodium persulfate solution (1-12a').

Subsequently, the monomer solution (1-12a) and the aqueous sodium persulfate solution (1-12a') obtained by the above operation were supplied to a mixing device 10 and mixed to prepare an aqueous monomer solution (1-12b). The monomer concentration of the aqueous monomer solution (1-12b) was 43% by mass, and the rate of neutralization was 75 mol%. The amount of polyethylene glycol diacrylate was 0.020 mol% with respect to 100 mol% of the monomer (acrylic acid), the amount of trisodium diethylenetriaminepentaacetate was 200 ppm with respect to the monomer (acrylic acid), and the amount of sodium persulfate was 0.1 g/mol with respect to the monomer (acrylic acid).

The aqueous monomer solution (1-12b) was fed to the pipe of the dispersing device at a flow rate of 40 mL/min (47.2 g/min). The supplied aqueous monomer solution (1-12b) was dispersed in the form of droplets in the hydrophobic organic solvent by the dispersing device.

Next, the dispersion obtained as described above was supplied to the polymerization device 14. The droplet composed of the aqueous monomer solution (1-12b) was polymerized while moving in the circulation direction of the hydrophobic organic solvent in the polymerization device filled with the hydrophobic organic solvent as the continuous phase. The hydrogel polymer (1-12c) obtained by the series of operations was continuously supplied together with the hydrophobic organic solvent from the polymerization device to the separation device 16 through the joint, and the hydrogel polymer (1-12c) and the organic solvent were separated in the separation device.

A hydrogel polymer (1-12d') was obtained by adding and mixing the hydrogel polymer (1-12c) with 3.5% by mass of an aqueous lauryl dimethylaminoacetic acid betaine solution (0.20% by mass with respect to the solid content ratio of the hydrogel polymer (1-12c)) as a gel-fluidizing agent. Next, the hydrogel polymer (1-12d') (gel temperature: 90°C) was put into a gel sizing device (Dome Granulator DG-L1, hole diameter of dome die: 0.5 mm, gap from the extrusion action portion: 1.2 mm, manufactured by DALTON CORPORATION), and discharged from the gel sizing device to obtain a sized gel (1-12d).

Subsequently, the sized gel (1-12d) obtained above was supplied to a stirring dryer and dried in the stirring dryer at a jacket temperature of 200°C for 50 minutes to obtain a dry polymer (1-12A'). The dry polymer (1-12A') was classified using a sieve with a mesh opening particle size of 850 um, non-passable component of the sieve with a mesh opening particle size of 850 um were pulverized, particles passing through the sieve after pulverizing and particles passing through the sieve with a mesh opening particle size of 850 um before pulverizing were mixed, and the mixture was classified using a sieve with a mesh opening particle size of 150 um. Fractions passing through the sieve with a mesh opening particle size of 850 um but not passing through the sieve with a mesh opening particle size of 150 um were collected to obtain a water-absorbing resin (1-12A).

Finally, to 100 parts by mass of the water-absorbing resin (1-12A), a surface-crosslinking agent solution including 0.015 parts by mass of ethylene glycol diglycidyl ether, 1.0 part by mass of propylene glycol, and 3.0 parts by mass of ion-exchanged water was added by spraying and mixed uniformly using a high-speed continuous mixer.

The obtained mixture was introduced into a heat treatment machine adjusted to an atmospheric temperature of 195°C ± 2°C, subjected to a heat treatment for 30 minutes, and then forcibly cooled to a powder temperature of 60°C to obtain surface-crosslinked water-absorbing resin particles (1-12B).

A mixed liquid including 0.1 parts by weight of trisodium diethylenetriaminepentaacetate and 10 parts by weight of ion-exchanged water with respect to 100 parts by weight of the water-absorbing resin particles (1-12B) was added dropwise and uniformly mixed. Thereafter, the mixture was left to stand still in a hot-gas dryer at 60°C and sized by passing through a JIS standard sieve having a mesh opening of 1000 um to obtain a particulate water absorbent (EX-1-12) having a moisture content of 10%.

[Example 1-13]

(Step for preparing aqueous monomer solution)

An aqueous monomer solution was prepared in the same manner as in (Step for preparing aqueous monomer solution) of Example 1-1.

(Polymerization step of aqueous monomer solution)

A strip-formed hydrogel (1-13b) was obtained in the same manner as in (Polymerization step of aqueous monomer solution) of Example 1-1.

(Gel-crushing step of hydrogel)

A particulate hydrogel (1-13c) was obtained in the same manner as in (Gel-crushing step of hydrogel) of Example 1-1, except that the fourth gel-crushing was not performed in (Gel-crushing step of hydrogel) of Example 1-1. The GGE(2) was 25 J/g in total for the first gel-crushing, the second gel-crushing, and the third gel-crushing.

The solid content ratio of the obtained particulate hydrogel (1-13c) was 50% by mass (moisture content: 50% by mass) and the average gel particle size in terms of solid content thereof was 321 um.

(Drying particulate hydrogel and surface crosslinking step)

Surface-crosslinked water-absorbing resin particles (1-13B) were obtained in the same manner as in (Drying step of particulate hydrogel) of Example 1-3, except that after 10 minutes from the input of the particulate hydrogel (1-13c) at 95°C to the drying device of Example 1-3, a surface-crosslinking agent solution containing 0.16% by mass of ethylene glycol diglycidyl ether and 2% by mass of water with respect to the solid content of the particulate hydrogel (1-13c) during drying was spray-added by inserting a nozzle into the drying device.

(Step of adding additive)

A particulate water absorbent (EX'-1-13) was obtained in the same manner as in Example 1-1, except that in (Step of adding additive) of Example 1-1, 0.6 parts by mass of hydrotalcite was mixed instead of 0.5 parts by weight of tricalcium phosphate.

(Pulverizing and classification step)

The obtained particulate water absorbent (EX'-1-13) was supplied to a single stage roll mill (pulverizer), pulverized, and classified using JIS standard sieves having mesh openings of 850 um and 106 um. Components passing through the 850 um sieve but not passing through the 106 um sieve were collected to obtain a particulate water absorbent (EX-1-13).

[Example 1-14]

(Step for preparing aqueous monomer solution)

An aqueous monomer solution was prepared in the same manner as in (Step for preparing aqueous monomer solution) of Example 1-6.

(Polymerization step of aqueous monomer solution)

A strip-formed hydrogel (1-14b) was obtained in the same manner as in (Polymerization step of aqueous monomer solution) of Example 1-6.

(Gel-crushing step of hydrogel)

A particulate hydrogel (1-14c) was obtained in the same manner as in (Gel-crushing step of hydrogel) of Example 1-6, except that the minimum clearance between the barrel and the disk of the gel-crusher was changed to 2.5 mm (5% of the disk diameter D) in (Gel-crushing step of hydrogel) of Example 1-6. The GGE(2) in the gel-crushing step was 32 J/g.

The solid content ratio of the obtained particulate hydrogel (1-14c) was 45% by mass (moisture content: 55% by mass) and the average gel particle size in terms of solid content thereof was 297 um.

(Drying step of particulate hydrogel)

A dried product (1-14A') was obtained in the same manner as in (Drying step of particulate hydrogel) of Example 1-6.

(Pulverizing and classification step of dried product)

A water-absorbing resin (1-14A) was obtained in the same manner as in (Pulverizing and classification step of dried product) of Example 1-6.

(Surface crosslinking step of water-absorbing resin)

Surface-crosslinked water-absorbing resin particles (1-14B) were obtained in the same manner as in (Surface crosslinking step of water-absorbing resin) of Example 1-6.

(Step of adding additive)

A particulate water absorbent (EX-1-14) was obtained in the same manner as in (Step of adding additive) of Example 1-6.

[Comparative Example 1-1]

In Comparative Example 1-1, the "particulate water absorbent (EX-12)" disclosed in Example 12 of WO 2016/204302 A was used as a particulate water absorbent (CE-1-1).

[Comparative Example 1-2]

In Comparative Example 1-2, a particulate water absorbent (CE-1-2) was obtained in the same manner as in Example 1 disclosed in International Application PCT/JP2020/047821. Specifically, this is as follows.

(Step for preparing aqueous monomer solution)

Into a polypropylene container having a capacity of 2 L, 422.0 parts by mass of acrylic acid, 173.9 parts by mass of a 48.5% by mass aqueous sodium hydroxide solution, 2.5 parts by mass of polyethylene glycol diacrylate (average molecular weight: 523), 2.6 parts by mass of a 1.0% by mass aqueous trisodium diethylenetriaminepentaacetate solution, and 403.3 parts by mass of deionized water were put and mixed to prepare an aqueous monomer solution. The liquid temperature of the aqueous monomer solution exceeded 40°C due to the heat of neutralization and dissolution heat generated during the mixing.

(Polymerization step)

Next, the aqueous monomer solution was cooled under stirring, and when the liquid temperature reached 40°C, 178.7 parts by mass of a 48.5% by mass aqueous sodium hydroxide solution adjusted to a temperature of 40°C was put into the aqueous monomer solution over about 20 seconds in an atmosphere open state and mixed (neutralization in the second stage was started). As a result, an aqueous monomer solution (1-22a) was prepared. At this time, the liquid temperature of the aqueous monomer solution (1-22a) was increased to about 78°C due to the heat of neutralization and dissolution heat generated during the mixing. Immediately after the aqueous sodium hydroxide solution was started to be mixed with the aqueous monomer solution, a precipitate was observed but was gradually dissolved, and thus the prepared aqueous monomer solution (1-22a) became a transparent homogeneous solution.
Nitrogen gas was introduced into the aqueous monomer solution (1-22a) in a stirred state for 5 seconds under the conditions of a pressure of 0.1 MPa and a flow rate of 0.1 L/min using Kinoshita-type glass ball filter (filter particle No.4/manufactured by Kinoshita Rika Kogyo Co. Ltd.). Subsequently, 18.4 parts by mass of a 4.5% by mass aqueous sodium persulfate solution was added to the aqueous monomer solution (1-22a). Thereafter, the aqueous monomer solution (1-22a) was immediately poured into a stainless steel tray-type container (340 × 340 mm bottom, 25 mm height, inner surface: Teflon (registered trademark) coating) in an atmosphere open state. The time from the start of the neutralization in the second stage to the pouring of the aqueous monomer solution (1-22a) into the tray-type container was 65 seconds. The tray-type container was heated using a hot plate (NEO HOTPLATE HI-1000/manufactured by Iuchi Seieido Co., Ltd.) until the surface temperature reached 50°C.
The aqueous monomer solution (1-22a) was poured into the tray-type container, and then a polymerization reaction was initiated within 1 minute. In the polymerization reaction, polymerization of the aqueous monomer solution (1-22a) proceeded while expanding and foaming in all directions while generating water vapor. Thereafter, the obtained polymer shrank to a size slightly larger than the bottom surface of the tray-type container. After a lapse of 2 minutes from the start of the polymerization reaction, the hydrogel (1-22b) was taken out from the tray-type container. These series of operations were performed in an atmosphere open state.

(Gel-crushing step)

Next, the hydrogel (1-22b) obtained by the polymerization reaction was cut so as to have a mass of about 60 g per one hydrogel, and then gel-crushed using a meat chopper (HL-G22SN, plate hole diameter: 6.0 mm, manufactured by REMACOM) to obtain a particulate hydrogel (1-1). The input amount of the hydrogel (1-1) was about 360 g/min, and in parallel with the input of the hydrogel (1-22b), while deionized water adjusted to a temperature of 90°C was added to the meat chopper at 25 g/min, gel-crushing was performed to obtain a particulate hydrogel (1-22c).

The D50 (mass average particle size) of the particulate hydrogel (1-22c) was 320 pm, and σζ (logarithmic standard deviation of the particle size distribution) was 0.91.

(Drying step)

Next, the particulate hydrogel (1-22c) was spread and placed on a wire mesh having a mesh opening of 300 um, and placed in a hot-gas dryer. Thereafter, the particulate hydrogel (1-22c) was dried by passing hot gas of 190°C for 30 minutes to obtain a dry polymer (1-22A'). There was no undried product in the dry polymer (1-22A').

(Classification step)

Next, the dry polymer (1-22A') was put into a roll mill (WML type roll pulverizer, manufactured by Inokuchi Giken Co., Ltd.) and pulverized and then classified using two types of JIS standard sieves having a mesh opening of 710 um and 150 um. Through this operation, an irregularly shaped pulverized water-absorbing resin (1-22A) not subjected to surface-crosslinking, which passed through a sieve with the mesh opening of 710 um and remained on the sieve with a mesh opening of 150 um, was obtained.

(Surface crosslinking step)

Next, to 100 parts by mass of the water-absorbing resin (1-22A) not subjected to surface-crosslinking, a surface-crosslinking agent aqueous solution including 0.4 parts by mass of ethylene carbonate, 0.7 parts by mass of propylene glycol, 2.9 parts by mass of deionized water, and 0.001 parts by mass of polyoxyethylene(20) sorbitan monostearate (manufactured by Kao Corporation) was added by spraying and uniformly mixed. Thereafter, the obtained mixture was heat-treated at 200°C for 40 minutes to perform surface-crosslinking. Next, the mixture was classified using two types of JIS standard sieves having a mesh opening of 710 um and 150 um. Through this operation, a particulate water absorbent (CE-1-2), which passed through the sieve with a mesh opening of 710 um and remained on the sieve with a mesh opening of 150 um, was obtained.

[Comparative Example 1-3]

In Comparative Example 1-3, the "water-absorbing resin particles (C1)" described in Example 1 of WO 2019/221154 were obtained in the same manner as in Example 1 disclosed in WO 2019/221154. This was used as a particulate water absorbent (CE-1-3) in the present application.

[Comparative Example 1-4]

In Comparative Example 1-4, the "surface-crosslinked water-absorbing resin powder (28)" described in Experimental Example 28 of WO 2018/092863 was obtained in the same manner as in Experimental Example 28 disclosed in WO 2018/092863. This was used as a particulate water absorbent (CE-1-4) in the present application.

[Comparative Example 1-5]

In Comparative Example 1-5, the "water-absorbing resin (18)" described in Experimental Example 18 of WO 2018/092863 was obtained in the same manner as in Experimental Example 18 disclosed in WO 2018/092863. This was used as a particulate water absorbent (CE-1-5) in the present application.

[Comparative Example 1-6]

In Comparative Example 1-6, a particulate water absorbent (CE-1-6) was obtained in the same manner as in Experimental Example 3 disclosed in International Application PCT/JP2021/034800. Specifically, this is as follows.

(Step for preparing aqueous monomer solution)

An aqueous monomer solution was prepared by mixing 300 parts by mass of acrylic acid, 100 parts by mass of a 48% by mass aqueous sodium hydroxide solution, 0.61 parts by mass of polyethylene glycol diacrylate (average n number: 9), 16.4 parts by mass of a 0.1% by mass aqueous trisodium diethylenetriaminepentaacetate solution, and 273.2 parts by mass of deionized water together.

Next, the aqueous monomer solution adjusted to a temperature of 38°C was continuously supplied with a quantitative pump, and then 150.6 parts by mass of a 48% by mass aqueous sodium hydroxide solution was further continuously mixed with the aqueous monomer solution by line mixing. At this time, the liquid temperature of the aqueous monomer solution was raised to 87°C by the heat of neutralization.

(Polymerization step of aqueous monomer solution)

Furthermore, 14.6 parts by mass of a 4% by mass aqueous sodium persulfate solution was continuously mixed with the aqueous monomer solution by line mixing, and then the resulting solution was continuously supplied to a continuous polymerizer having a planar polymerization belt provided with weirs at both ends so as to have a thickness of 10 mm. Thereafter, polymerization was continuously performed for a polymerization time of 3 minutes to obtain a belt-formed (sheet-formed) crosslinked hydrogel polymer (1-26a). The obtained belt-formed hydrogel (1-26a) was cut according to the treatment speed and the input interval in the gel-crusher described below to obtain a strip-formed hydrogel (1-26b) having a width of several cm. For example, in a case where the treatment speed of the gel-crusher is set to 0.64 kg/min and the strip-formed hydrogel is put into the gel-crusher at intervals of 2.5 seconds, the mass of one strip-formed hydrogel is set to 0.0267 kg. The strip-formed hydrogel (1-26b) had a rate of polymerization of 98.5% by mass and a solid content ratio of 53% by mass.

(Gel-crushing step of hydrogel)

The strip-formed hydrogel (1-26b) was gel-crushed using, as a gel-crusher, a biaxial kneader provided with a main body (barrel) incorporating two rotation axes that rotate in the same direction. Each rotation axis is provided with a disk having a circular plate shape that mainly serves as a crushing means. The barrel had a jacket structure, and had a gas inlet for introduction of water vapor through the jacket into the main body.

First, a heat medium at 105°C was circulated in the jacket, and the inside of the main body (barrel) was maintained at a temperature of 105°C. Thereafter, the rotation speed was set to 100 rpm, and the strip-formed hydrogel (1-26b) heated to 80°C was put into the input port of the biaxial kneader at a speed of 0.64 kg/min (pace of one strip-formed hydrogel (1-26b) every 2.5 seconds). At this time, simultaneously with the hydrogel (1-26b), water at 90°C was supplied from the input port, water vapor of 0.6 MPa was further supplied from the gas inlet, and an aqueous lauryl dimethylaminoacetic acid betaine solution having a concentration of 10% by mass was further supplied from the input port. The amount of the water at 90°C supplied was 11.8% by mass with respect to the solid content of the strip-formed hydrogel (1-26b). The input amount of the water vapor of 0.6 MPa was 9.7% by mass with respect to the solid content of the strip-formed hydrogel (1-26b). The input amount of the lauryl dimethylaminoacetic acid betaine in terms of a solid content was 0.15% by mass with respect to the solid content of the strip-formed hydrogel (1-26b). The disks used for gel-crushing had a diameter D was 50 mm, and the minimum clearance between the barrel and the disk was 1 mm (2% of the disk diameter D). The GGE(2) in the gel-crushing step was 125 J/g.

The solid content ratio of the obtained particulate hydrogel (1-26c) was 48.2% by mass (moisture content: 51.8% by mass) and the average gel particle size in terms of solid content thereof was 141 um.

(Drying step of particulate hydrogel)

The obtained particulate hydrogel (1-26c) was dried using a hot-gas dryer. This dryer is provided with a basket (size of bottom surface: 30 cm × 20 cm) made of a wire mesh having a mesh opening of 1.2 mm. On the bottom surface of the basket, 500 g of the particulate hydrogel (1-26c) was spread so as to be substantially uniform, and a hot gas at 190°C was blown from below for 30 minutes to obtain a dried product (1-26A').

(Pulverizing and classification step of dried product)

After cooling, the dried product (1-26A') was supplied to a roll mill, pulverized, and classified using JIS standard sieves having mesh openings of 850 um and 150 um. Components passing through the 850 um sieve but not passing through the 150 um sieve were collected to obtain a water-absorbing resin (1-26A).

(Surface crosslinking step of water-absorbing resin)

Next, a surface-crosslinking agent solution including 0.025 parts by mass of ethylene glycol diglycidyl ether, 0.3 parts by mass of ethylene carbonate, 0.5 parts by mass of propylene glycol, and 2.0 parts by mass of deionized water was sprayed to 100 parts by mass of the water-absorbing resin (1-26A) and mixed. The resulting mixture was heat-treated at 200°C for 35 minutes to obtain a particulate water absorbent (CE-1-6).

[Comparative Example 1-7]

In Comparative Example 1-7, the "particulate water absorbent (10)" described in Example 12 of JP 2006-057075 A was obtained in the same manner as in Example 12 disclosed in JP 2006-057075 A. This was used as a particulate water absorbent (CE-1-7) in the present application.

[Comparative Example 1-8]

In Comparative Example 1-8, the "particulate water absorbent (EX-1)" described in Example 1 of WO 2015/129917 was obtained in the same manner as in Example 1 disclosed in WO 2015/129917. This was used as a particulate water absorbent (CE-1-8) in the present application.

[Comparative Example 1-9]

In Comparative Example 1-9, the "water-absorbing resin" described in Example 5 of WO 2009/025235 was obtained in the same manner as in Example 5 disclosed in WO 2009/025235. This was used as a particulate water absorbent (CE-1-9) in the present application.

[Evaluation method]

For the particulate water absorbents (EX-1-1) to (EX-1-14) obtained in Examples 1-1 to 1-14 and particulate water absorbents (CE-1-1) to (CE-1-9) obtained in Comparative Examples 1-1 to 1-9, the "cavity ratio to the total volume [% by volume]", the "void ratio to the total volume [% by volume]", the "high-viscosity liquid absorption time", the "CRC", the "AAP 2.06 kPa", the "moisture content", and the "spot absorbency" were measured. "CRC", "AAP 2.06 kPa", and "moisture content" were measured by the methods described above. Evaluation results are shown in Tables 2 and 3.

"Measurement of the cavity ratio to the total volume [% by volume] and the void ratio to the total volume [% by volume]"

The cavity ratio to the total volume (unit:% by volume) and the void ratio to the total volume (unit:% by volume) occupying the total volume of the particulate water absorbent according to the present invention were determined by acquiring three-dimensional image data of the particulate water absorbent using a microfocus X-ray CT system (inspeXio SMX-100CT manufactured by SHIMADZU CORPORATION), analyzing the three-dimensional image data using high-speed three-dimensional analysis software (TRI/3D-VOL-FCS64/manufactured by RATOC SYSTEM ENGINEERING CO., LTD.), and performing calculation using Microsoft Excel. The cavity ratio to the total volume and the void ratio to the total volume were determined using a particulate water absorbent having a particle size of 250 um to 425 um. Specifically, three-dimensional image data of the particulate water absorbent having a particle size of 250 um to 425 um was acquired using the microfocus X-ray CT system and analyzed using the high-speed three-dimensional analysis software, and then these analysis results were calculated using Excel.

A specific calculation method will be described. First, a method for extracting a particulate water absorbent having a particle size of 250 um to 425 um will be described. First, JIS standard sieves (The IIDA TESTING SIEVE manufactured by SIEVE FACTORY IIDA Co., Ltd., diameter: 8 cm, mesh opening of sieve: 425 um and 250 um) were stacked in descending order of mesh opening from the top, and a receiver (manufactured by SIEVE FACTORY IIDA Co., Ltd., diameter: 8 cm) was stacked at the bottom. Subsequently, 10.0 g of the particulate water absorbent was put into the uppermost sieve (mesh opening of sieve: 425 um) and covered with a lid (manufactured by SIEVE FACTORY IIDA Co., Ltd., diameter: 8 cm). Subsequently, a set of the superposed lid, two sieves, and the receiver was shaken for 5 minutes using IIDA SIEVE SHAKER (TYPE: ES-65 type, SER. No. 0632). After shaking, only the water-absorbing resin remaining on the sieve having a mesh opening of 250 um was extracted and used as a particulate water absorbent having a particle size of 250 um to 425 um. The operation was performed in a room in which the temperature was adjusted to 20.0 to 25.0°C and the humidity was adjusted to 35% to 50%.

Into a plastic lid-attached cylindrical container (inner diameter: about 1 cm, height: about 5 cm), 0.3 g of thermosetting spherical fine particles (EPOSTAR MV1002 manufactured by NIPPON SHOKUBAI CO., LTD.) was put, 0.1 g of a particulate water absorbent having a particle size of 250 $\mu$m to 425 um was then put thereinto, and the mixture was shaken thoroughly by shaking and tapping to uniformly disperse the particulate water absorbent in the thermosetting spherical fine particles, thereby preparing a sample. Subsequently, a double-sided tape was attached to the bottom surface of the cylindrical container and fixed to the sample stage of the microfocus X-ray CT system, and then the three-dimensional image data was acquired under the following conditions.

[Table 1]

| | |
|---|---|
| X-ray tube voltage (kV): 50 | View number: 3000 |
| X-ray tube current ($\mu$A): 40 | Average number: 5 |
| Inch size (inch): 4.0 | Number of times of multi-rotation: None |
| X-ray filter: None | Smoothing: YZ |
| SDD (mm): 500 | Slice thickness (mm): 0.009 |
| SRD (mm): 40 | Distance between slices (mm): 0.010 |
| Z (mm): 112 | Scaling factor: 50 |
| X (mm): 0 | BHC data: None |
| Y (mm): 0 | Definition mode: Yes |
| CT mode 1: CBCT | FOV XY (mm): 5.0 |
| CT mode: Normal scanning | FOV Z (mm): 4.0 |
| Scanning angle: Full scanning | Voxel size (mm/voxel): 0.010 |

Analysis was performed using the high-speed three-dimensional analysis software according to the following procedure.

1. From the menu field, particle measurement > 3D particles > particle separation > giant particle separation was selected.

2. L-W was selected in the Binarize tab on the EVC panel, the L value was changed from the initial value to a value larger by "1" while the W value was maintained at the initial value, and a circular measurement target region was extracted. Subsequently, this processing was applied to all the slice images. The image data extracted by this operation was set as (A) and stored in bin5ch(b5) on the BC panel.

3. L-W was selected in the Binarize tab on the EVC panel, the L value was changed from the initial value to "37580" while the W value was maintained at the initial value, and the entire particulate water absorbent in the measurement target region was extracted. Subsequently, this processing was applied to all the slice images. The particle image data extracted by this operation was set as (B) and stored in binDch(bD) on the BC panel.

4. Based on the particle image data (B), first, Ers Sml was selected in the Binary tab on the EVC panel to remove particles having a particle size of 10 voxel or less, which are considered to be noise. Subsequently, Invert was selected in the Binary tab on the EVC panel so that the region where the particles were extracted and the region where the particles were not extracted were inverted. Subsequently, Ers Sml was selected in the Binary tab on the EVC panel to remove particles having a particle size of 1 voxel or less, which are considered to be noise. Labeling was selected in the 3D tab on the EVC panel, and volume and Max were further selected to extract only the region having the largest volume. It was confirmed that Label Count was displayed as 1, and then Invert was selected again in the Binary tab on the EVC panel to remove noise in the measurement target region and to extract all the particles in a state where the void (void) was filled. The particle image data extracted by these operations was set as (C) and stored in bin2ch(b2) on the BC panel.

5. in the LOp tab (inter-channel logical operation processing), "2" was selected for target 1 and "D" was selected for target 2, "SUB" was further selected, and the "Execute" button was pressed to subtract the particle image data (B) from the particle image data (C). Thereafter, Ers Sml was selected in the Binary tab on the EVC panel to remove particles having a particle size of 1 voxel or less, which are considered to be noise, thereby extracting the void (void). The particle image data extracted by these operations was set as (D) and stored in bin6ch(b6) on the BC panel.

6. Based on the particle image data (C), eight connection perimeters were selected in the 3D tab on the EVC panel, expansion processing (Dilation) was performed twice, and then contraction processing (Erosion) was performed twice. The particle image data extracted by this operation was set as (E) and stored in bin1h(b1) on the BC panel.

7. In the LOp tab (inter-channel logical operation processing), "1" was selected for target 1 and "2" was selected for target 2, "SUB" was further selected, and the "Execute" button was pressed to subtract the particle image data (C) from the particle image data (E). Cavity (cavity) was extracted by this operation. The obtained particle image data was set as (F) and stored in bin7ch(b7) on the BC panel.

8. Based on the particle image data (E), small particle extraction was selected on a large particle separation panel (large particle extraction was not selected), and the constriction ratio, Repair Filter Size, and Repair Mrg Sml Diameter were all set to "0" to perform particle separation and color coding.

9. Labeling was selected in the 3D tab on the EVC panel, the coordinate value (cycle) was further selected, the microparticle size was set to "100", and the particle separation operation was performed. The particle image data extracted by these operations was set as (G) and stored in bin1ch(b1) on the BC panel.

10. From the menu field, particle measurement > Void (void) in 3D particles > post-separation measurement was selected.

11. On the post-separation measurement panel, voxcel was selected as a unit, edge particle removal was subsequently selected, surface area calculation and void (void) calculation were further selected as measurement items, and Binary 5ch was selected as measurement ROI designation to perform calculation processing.

12. The data obtained by the calculation processing of the above 10 was extracted in CSV format of Excel.

Through the above operation, data of the particle volume (unit: mm$^3$), the void volume (hereinafter, "void volume") (unit: mm$^3$), and the cavity volume (hereinafter, "cavity volume") (unit: mm$^3$) were obtained for each particle for all the particulate water absorbents present in the measurement target region. The particle volume is a value calculated in a state where the void (void) and the cavity (cavity) in the particulate water absorbent are filled. A particulate water absorbent including about 200 to 500 particles is present in the measurement target region.

(Calculation of cavity ratio to the total volume [% by volume])

Next, the cavity ratio to the total volume [% by volume] was calculated using the data of the particle volume (unit: mm$^3$), the void volume (unit: mm$^3$), and the cavity volume (unit: mm$^3$) for each particle extracted by Excel. First, the particle volume (unit: mm$^3$), the void volume (unit: mm$^3$), and the cavity volume (unit: mm$^3$) for each particle were summed to calculate the total particle volume (H) (unit: mm$^3$) of all the particles, the total volume (I) (unit: mm$^3$) of the voids of all the particles, and the total volume (J) (unit: mm$^3$) of the cavities of all the particles. The total particle volume of all the particles is a value calculated in a state where the void (closed cell) and the cavity (communication hole) in the particulate water absorbent are filled. Next, the cavity ratio to the total volume (unit:% by volume), which is the average value of all the particulate water absorbents present in the measurement target region, was calculated based on the following Formula (1).

$$\text{Cavity ratio to total volume} = J/(H - I) \times 100 \quad \text{...Formula (1)}$$

where,

H: total particle volume of all particles (unit: mm$^3$)
I: total volume of voids of all particles (unit: mm$^3$)
J: total volume of cavities of all particles (unit: mm$^3$) .

(Calculation of void ratio to the total volume [% by volume])

The void ratio to the total volume (unit:% by volume), which is the average value of all the particulate water absorbents present in the measurement target region, was calculated based on the following Formula (2).

$$\text{Void ratio to total volume} = I/(H - J) \times 100 \quad \text{...Formula (2)}$$

where,

H: total particle volume of all particles (unit: mm$^3$)
I: total volume of voids of all particles (unit: mm$^3$)
J: total volume of cavities of all particles (unit: mm$^3$) .

"High-viscosity liquid absorption time"

(Preparation of high-viscosity test solution)

A test solution containing 792.8 parts by mass of ion-exchanged water, 7.2 parts by mass of sodium chloride, 35.6 parts by mass of sodium carbonate, 160 parts by mass of glycerin, 0.04 parts by mass of a red edible dye, and 4.4 parts by mass of carboxymethyl cellulose (manufactured by Aldrich, product number: C5678-500G) was prepared. The viscosity of the test solution was 5 mPa·s at 23°C and 3.4 mPa·s at 37°C.

(Measurement of high-viscosity liquid absorption time [sec])

In a 100-mL beaker, 50 g of the high-viscosity test solution adjusted to a liquid temperature of 23°C was weighed, 2.00 g of the particulate water absorbent was added while being stirred at 600 rpm with a cylindrical stirrer having a length of 40 mm and a diameter of 8 mm, and an absorption time (sec) was measured. As for the end point, the time until the particulate water absorbent absorbed the high-viscosity test solution and the test solution covered the stirrer chip was measured in accordance with the standard described in "Testing method for water absorption rate of super absorbent polymers - Explanations" in JISK 7224-1996 as a high-viscosity liquid absorption time (sec).

"Spot absorbency" ("time for incorporating liquid and release amount")

Regarding the particulate water absorbent according to the present invention, the following absorbent body was prepared and evaluated.

(Preparation of particulate water absorbent monolayer sheet)

A vinyl tape (Nitto Vinyl Tape No. 21-100TM manufactured by Nitto Denko Corporation) having a width of 10 cm was cut into a cut length of 18 cm, and placed on a horizontal laboratory table with the sticking surface facing upward, and a plastic frame having a longitudinal length of 8 cm and a lateral length of 16 cm of the inner frame and a longitudinal length of 10 cm and a lateral length of 18 cm of the outer frame (frame thickness: 1 cm) was pasted on the vinyl tape. At this time, no wrinkles were formed on the vinyl tape surface. On the sticking surface of the vinyl tape, 1.278 g of the particulate water absorbent was uniformly sprayed. At this time, the surface of the vinyl tape was regarded as three sections, each 8 cm long and 5.33 cm wide, and 0.426 g of the particulate water absorbent was uniformly sprayed to each section. After spraying, all the particulate water absorbents were stuck to the sticking surface of the vinyl tape by inclining the frame. The vinyl tape was peeled off from the plastic frame so that the stuck particulate water absorbent did not fall off, and the vinyl tape was placed on a horizontal laboratory table with the surface to which the stuck particulate water absorbent facing upward. A nonwoven fabric (spunbonded nonwoven fabric having a basis weight of 18.5 g/m$^2$) cut into a length of 10 cm and a width of 18 cm was placed on the vinyl tape to which the particulate water absorbent was stuck, and was pasted using the sticking surface of the vinyl tape remaining to obtain a particulate water absorbent monolayer sheet. At this time, the four corners of the vinyl tape and the four corners of the nonwoven fabric were bonded together so that the lower surface of the nonwoven fabric was in contact with the particulate water absorbent. The central position of the obtained particulate water absorbent monolayer sheet was marked with a black marker pen to obtain a liquid filling funnel position. Each position apart from 27.5 mm in four directions of 12:00, 3:00, 6:00, and 9:00 from the central portion, that is, four places in total, was marked and were regarded as filter paper position marks.

(Speed of incorporating test solution and release amount of particulate water absorbent monolayer sheet)

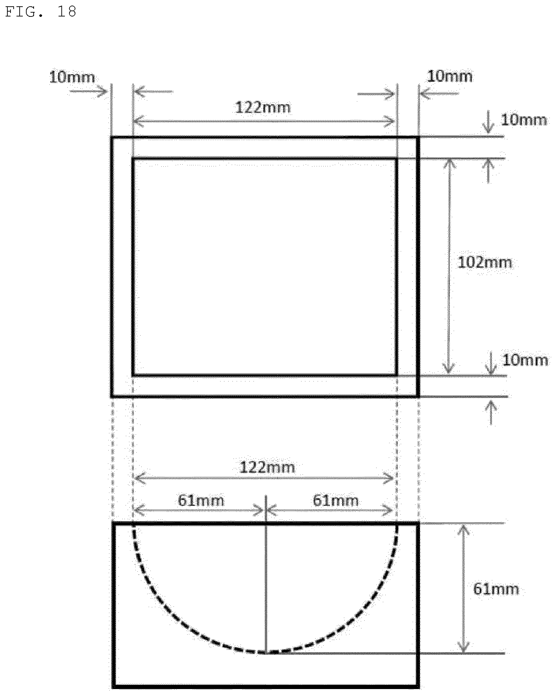

The particulate water absorbent monolayer sheet was placed closely along the in-frame curved surface of an evaluation device illustrated in Fig. 18 with the nonwoven fabric part facing upward. The device of Fig. 18 is a container (material: transparent acrylic resin) in which a semicircular recess is formed, and the size of the recess is 122 mm in diameter × 102 mm in width (61 mm in depth) of a circle. At this time, the nonwoven fabric was installed so that the central portion thereof was located on the bottom surface, and the nonwoven fabric at the filter paper position was prevented from being wrinkled. In accordance with the curved surface portion of the evaluation device, two silicon sheets of 180 mm × 10 mm (thickness: 2 mm) were placed one by one at both sides of the bottom portion of the curved surface portion of the device on the monolayer sheet, that is, along two sides having a length of 180 mm of the particulate water absorbent monolayer sheet to prevent liquid leakage from the side.

A funnel adjusted so that 5 g of the high-viscosity test solution can be charged in 2 seconds was placed at a position having a height of 1 cm from the liquid filling funnel position. A stopwatch was started at the first moment the high-viscosity test solution touched the particulate water absorbent monolayer sheet after 5 g of the high-viscosity test solution was put into the funnel, and the time until all the test solution on the surface of the particulate water absorbent monolayer sheet disappeared was measured and recorded as a speed (sec) of incorporating liquid. When the speed of incorporating liquid is short, it means that the speed of incorporating liquid is excellent. In the following Tables 2 to 4, the speed of incorporating liquid is described as "incorporating speed".

After 2 minutes and 50 seconds from the first time when the test solution was brought into contact with the particulate water absorbent monolayer sheet, the particulate water absorbent monolayer sheet was taken out from the evaluation device with the liquid charging surface facing upward, and placed on a horizontal laboratory table. After 3 minutes from the first time when the test solution was brought into contact with the particulate water absorbent monolayer sheet, five sheets of filter paper of Φ55 mm, the total weight (W1 [g]) of which was measured in advance, were stacked on each other in the central position (filter paper position) of the monolayer sheet, a weight (Φ50 mm, weight: 1035 g, 5.2 kPa) was placed thereon, and a load was applied for 10 seconds. After 10 seconds from the time when the weight was placed, the weight (W2 [g]) of the five sheets of filter paper of Φ55 mm was measured, and the difference (W2 - W1) was calculated as the release amount [g] of the particulate water absorbent monolayer sheet.

[Table 2]

| | Particulate water absorbent | Cavity ratio to total volume (% by volume) | Void ratio to total volume (% by volume) | High-viscosity liquid absorption time (sec) | CRC 30 min (g/g) | AAP 2.06kPa (g/g) | Moisture content (% by weight) | D50 (μm) | Proportion of fraction of 250 to 425 μm (% by mass) | Absorbent body evaluation | |
|---|---|---|---|---|---|---|---|---|---|---|---|
| | | | | | | | | | | Speed of incorporating (sec) | Release amount (g) |
| Example 1-1 | EX-1-1 | 14.9 | 0.19 | 131 | 32.2 | 29.0 | 10.2 | 403 | 38.0 | 20 | 0.3 |
| Example 1-2 | EX-1-2 | 13.6 | 0.16 | 133 | 32.5 | 29.4 | 9.7 | 423 | 39.2 | 21 | 0.3 |
| Example 1-3 | EX-1-3 | 12.6 | 0.24 | 135 | 31.9 | 28.9 | 10.2 | 415 | 42.7 | 21 | 0.4 |
| Example 1-4 | EX-1-4 | 14.4 | 0.16 | 117 | 33.1 | 28.2 | 10.3 | 428 | 40.2 | 19 | 0.3 |
| Example 1-5 | EX-1-5 | 15.4 | 0.12 | 90 | 36.1 | 25.6 | 11.0 | 278 | 58.6 | 14 | 0.1 |
| Example 1-6 | EX-1-6 | 15.3 | 0.17 | 123 | 33.1 | 27.9 | 10.7 | 419 | 43.3 | 19 | 0.2 |
| Example 1-7 | EX-1-7 | 13.1 | 0.11 | 131 | 32.9 | 26.9 | 10.3 | 423 | 40.1 | 20 | 0.3 |
| Example 1-8 | EX-1-8 | 12.9 | 0.22 | 134 | 32.0 | 28.5 | 9.8 | 420 | 42.9 | 22 | 0.4 |
| Example 1-9 | EX-1-9 | 14.5 | 0.15 | 111 | 33.0 | 28.4 | 11.3 | 427 | 40.8 | 20 | 0.4 |
| Example 1-10 | EX-1-10 | 15.0 | 0.13 | 91 | 36.9 | 25.9 | 10.6 | 307 | 50.6 | 18 | 0.2 |
| Example 1-11 | EX-1-11 | 14.8 | 0.19 | 132 | 32.5 | 30.1 | 10.1 | 402 | 38.7 | 20 | 0.3 |
| Example 1-12 | EX-1-12 | 19.1 | 0.24 | 129 | 36.0 | 35.0 | 10.0 | 393 | 57.2 | 15 | 0.2 |
| Example 1-13 | EX-1-13 | 10.4 | 0.23 | 95 | 35.1 | 26.5 | 9.8 | 256 | 41.9 | 19 | 0.3 |

| | Particulate water absorbent | Cavity ratio to total volume (% by volume) | Void ratio to total volume (% by volume) | High-viscosity liquid absorption time (sec) | CRC 30 min (g/g) | AAP 2.06kPa (g/g) | Moisture content (% by weight) | D50 (μm) | Proportion of fraction of 250 to 425 μm (% by mass) | Absorbent body evaluation | |
|---|---|---|---|---|---|---|---|---|---|---|---|
| | | | | | | | | | | Speed of incorporating (sec) | Release amount (g) |
| Example 1-14 | EX-1-14 | 11.5 | 0.43 | 112 | 34.0 | 26.7 | 9.7 | 309 | 42.6 | 19 | 0.4 |

[Table 3]

| | Particulate water absorbent | Cavity ratio to total volume (% by volume) | Void ratio to total volume (% by volume) | High-viscosity liquid absorption time (sec) | CRC 30 min (g/g) | AAP 2.06 kPa (g/g) | Moisture content (% by weigh) | D50 (μm) | Proportion of fraction of 250 to 425 μm (% by mass) | Absorbent body evaluation | |
|---|---|---|---|---|---|---|---|---|---|---|---|
| | | | | | | | | | | Speed of incorporating (sec) | Release amount (g) |
| Comparative Example 1-1 | CE-1-1 | 11.1 | 0.55 | 145 | 34.8 | 30.3 | 3.2 | 354 | 45.2 | 27 | 0.9 |
| Comparative Example 1-2 | CE-1-2 | 12.5 | 0.60 | 201 | 28.0 | 34.0 | 2.0 | 362 | 43.6 | 26 | 0.9 |
| Comparative Example 1-3 | CE-1-3 | 11.6 | 0.61 | 172 | 34.0 | 23.0 | 1.5 | 345 | 46.8 | 30 | 0.8 |
| Comparative Example 1-4 | CE-1-4 | 11.2 | 0.63 | 175 | 33.0 | 24.0 | 1.8 | 405 | 40.3 | 31 | 0.9 |
| Comparative Example 1-5 | CE-1-5 | 11.3 | 0.68 | 176 | 33.0 | 24.0 | 1.5 | 400 | 38.2 | 30 | 0.8 |
| Comparative Example 1-6 | CE-1-6 | 11.5 | 0.54 | 151 | 33.0 | 25.0 | 2.3 | 349 | 48.0 | 27 | 0.7 |
| Comparative Example 1-7 | CE-1-7 | 6.3 | 0.29 | 241 | 35.0 | 21.1 | 3.3 | 324 | 54.0 | 30 | 0.8 |
| Comparative Example 1-8 | CE-1-8 | 19.5 | 0.85 | 165 | 33.5 | 30.2 | 2.0 | 345 | 47.1 | 27 | 0.8 |
| Comparative Example 1-9 | CE-1-9 | 13.0 | 1.85 | 156 | 32.9 | 32.2 | 3.1 | 295 | 62.0 | 80 | 1.0 |

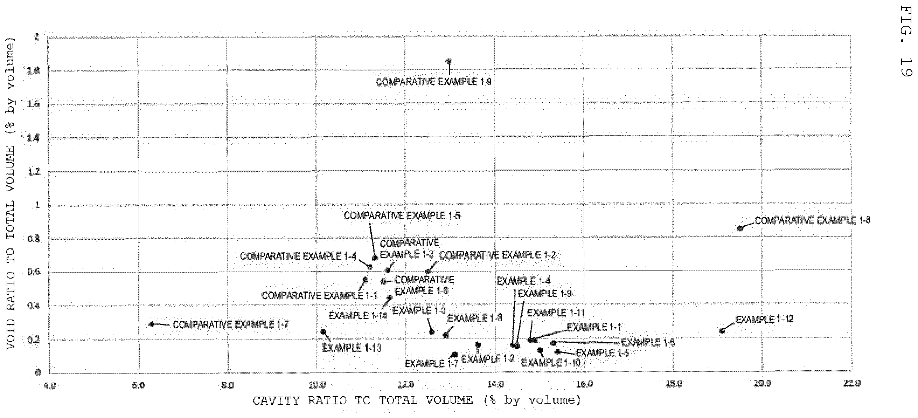

Fig. 19 is a graph plotting particulate water absorbents of Examples and Comparative Examples with the x-axis representing the cavity ratio to the total volume and the y-axis representing the void ratio to the total volume. Fig. 19 shows the correlation between the cavity ratio to the total volume and the void ratio to the total volume. From Fig. 19, it is found that the particulate water absorbents of Examples 1-1 to 1-14 in which the cavity ratio to the total volume is 10% by volume or more and the void ratio to the total volume is 0.5% by volume or less occupy the lower right region of the graph. It is considered that the absorbent body using the particulate water absorbent in this region is excellent in the speed of incorporating liquid and the release amount. From Fig. 19, it is understood that the particulate water absorbents (CE-1-1) to (CE-1-9) of Comparative Examples 1-1 to 1-9 do not satisfy the requirements for the cavity ratio to the total volume and the void ratio to the total volume in the particulate water absorbent of the present invention.

[Reference Examples]

The following reference examples are shown to show that the particulate water absorbent of which the cavity ratio to the total volume and the void ratio to the total volume as determined by X-ray CT measurement by using the particles passing through a sieve having a mesh opening of 425 um but not passing through a sieve having a mesh opening of 250 um satisfy the requirements, can achieve improvement in the speed of incorporating liquid and reduction in the release amount of the absorbent body.

[Reference Example 1-1]

Using sieves having mesh openings of 850/425/250/106 um, 30 g of the particulate water absorbent (EX-1-1) obtained in Example 1-1 was classified. First, JIS standard sieves (The IIDA TESTING SIEVE/manufactured by SIEVE FACTORY IIDA Co., Ltd., diameter: 15 cm, mesh opening of sieve: 850 um/425 um/250 $\mu$m/106 um) were stacked in descending order of mesh opening from the top, and a receiver (manufactured by SIEVE FACTORY IIDA Co., Ltd., diameter: 15 cm) was stacked at the bottom. Subsequently, 30.0 g of the particulate water absorbent (EX-1-1) was put into the uppermost sieve (mesh opening of sieve: 850 um) and covered with a lid (manufactured by SIEVE FACTORY IIDA Co., Ltd., diameter: 15 cm). Subsequently, a piled set of the lid, two sieves, and the receiver was shaken for 5 minutes using IIDA SIEVE SHAKER (TYPE: ES-65 type, SER. No. 0632). After shaking, the particulate water absorbent (fraction A) passing through the sieve having a mesh opening of 850 um but not passing through the sieve having a mesh opening of 425 um was 13.02 g (43.4% by mass). The water absorbent (fraction B) passing through the sieve having a mesh opening of 425 um but not passing through the sieve having a mesh opening of 250 um was 11.40 g (38.0% by mass). The particulate water absorbent (fraction C) passing through the sieve having a mesh opening of 250 um but not passing through the sieve having a mesh opening of 106 um was 5.58 g (18.6% by mass).

Using sieves having mesh openings of 850/425/250/106 um, 30 g of the particulate water absorbent (CE-1-5) obtained in Comparative Example 1-5 was classified in the same manner. The particulate water absorbent (fraction X) passing through the sieve having a mesh opening of 850 um but not passing through the sieve having a mesh opening of 425 um was 12.90 g (43.0% by mass). The particulate water absorbent (fraction Y) passing through the sieve having a mesh opening of 425 um but not passing through the sieve having a mesh opening of 250 um was 11.46 g (38.2% by mass). The particulate water absorbent (fraction Z) passing through the sieve having a mesh opening of 250 um but not passing through the sieve having a mesh opening of 106 um was 5.64 g (18.8% by mass).

The fraction X, the fraction B, and the fraction Z were mixed to obtain a particulate water absorbent (RE-1). As a result of evaluating an absorbent body using the particulate water absorbent (RE-1), the speed of incorporating liquid was 21 sec and the release amount was 0.4 g.

[Reference Example 1-2]

The fraction A, the fraction Y, and the fraction C were mixed to obtain a particulate water absorbent (RE-2). As a result of evaluating an absorbent body using the particulate water absorbent (RE-2), the speed of incorporating liquid was 29 sec and the release amount was 0.7 g.

As described above, Reference Examples 1-1 and 1-2 show that the water absorbent of which the cavity ratio to the total volume and the void ratio to the total volume as determined by X-ray CT measurement by using the particles passing through a sieve having a mesh opening of 425 um but not passing through a sieve having a mesh opening of 250 um satisfy the requirements, can achieve improvement in the speed of incorporating liquid and reduction in the release amount of the absorbent body. Specifically, in Reference Example 1-1, similarly to Example 1-1, the speed of incorporating liquid and the release amount are good. In Reference Example 1-2, similarly to Comparative Example 1-5, the speed of incorporating liquid and the release amount are poor. From the above results, it can be seen that the fraction controlling the speed of incorporating liquid and the release amount in the absorbent body evaluation is the fraction passing through a sieve having a mesh opening of 425 um but not passing through a sieve having a mesh opening of 250 um, and this fraction preferably occupies 35% by mass or more of the entire water absorbent.

[Table 4]

| | Particulate water absorbent | Weight ratio of each fraction (% by mass) | | | Absorbent body evaluation | |
|---|---|---|---|---|---|---|
| | | 850 - 425 μm | 425 - 250 μm | 250 - 106 μm | Speed of incorporating (sec) | Release amount (g) |
| Example 1-1 | EX-1-1 | 43.4 (Fraction A) | 38.0 (Fraction B) | 18.6 (Fraction C) | 20 | 0.3 |
| Comparative Example 1-5 | CE-1-5 | 43.0 (Fraction X) | 38.2 (Fraction Y) | 18.8 (Fraction Z) | 30 | 0.8 |
| Reference Example 1-1 | RE-1 | 43.1 (Fraction X) | 38.1 (Fraction B) | 18.8 (Fraction Z) | 21 | 0.4 |
| Reference Example 1-2 | RE-2 | 43.3 (Fraction A) | 38.1 (Fraction Y) | 18.6 (Fraction C) | 29 | 0.7 |

(Reason why X-ray CT measurement at 425/250 particle size is preferable)

When the X-ray CT measurement is performed using the fraction of 425 μm or more, the number of particles that can be measured at one time may be as small as 100 or less, and the measurement parameter when the cavity and the void are calculated is insufficient, and the accuracy of the data is impaired, which is not preferable. When the X-ray CT measurement is performed using the fraction of 250 um or less, the measurement parameter increases, but the measurement accuracy decreases due to the resolution, and the data fluctuation increases, which is not preferable. In the case of having a particle size of 425/250 (particles of 425 to 250 um), a sufficient measurement parameter can be secured in the X-ray CT measurement, and the measurement accuracy can be improved.

[Example 2-1]

Following the production method of Example 1-1 or 1-2, the amount of the crosslinking agent, polyethylene glycol diacrylate (average n number: 9), in "Step of preparing monomer solution" described in Examples and the gap of the roll mill in "Pulverizing and classification step of dried product" were adjusted to obtain a particulate water absorbent (EX-2-1). The physical properties of the particulate water absorbent (EX-2-1) are shown in Table 5.

[Example 2-2]

Following the production method of Example 1-1 or 1-2, the amount of the crosslinking agent, polyethylene glycol diacrylate (average n number: 9), in "Step of preparing monomer solution" described in Examples and the gap of the roll mill in "Pulverizing and classification step of dried product" were adjusted to obtain a particulate water absorbent (EX-2-2). The physical properties of the particulate water absorbent (EX-2-2) are shown in Table 5.

[Table 5]

| | Particulate water absorbent | Cavity ratio to total volume (% by volume) | Void ratio to total volume (% by volume) | CRC 30 min (g/g) | Moisture content (% by weigh) | D50 (μm) |
|---|---|---|---|---|---|---|
| Example 2-1 | EX-2-1 | 14.9 | 0.14 | 38.0 | 10.2 | 300 |
| Example 2-2 | EX-2-2 | 14.4 | 0.15 | 33.0 | 11.1 | 420 |

[Example 3-1]

Wood-pulverized pulp was dry-mixed using a mixer, the obtained mixture was subjected to air papermaking using a batch-type air papermaking device on a 400-mesh (mesh opening: 38 um) wire screen to mold a web having a size of 200 mm × 400 mm. Next, the longitudinal direction of the web was divided into 5 equal parts and cut into a size of 80 mm × 160 mm, and each of the pieces was pressed at a pressure of 7.8 kPa for 1 minute to obtain a pulp pad (corresponding to the second substrate) having a thickness of 2.5 mm and a basis weight of 45 g/m$^2$. A pattern paper having a length of 10 mm and a width of 60 mm was placed at the center of the pulp pad molded to a size of a length of 80 mm and a width of 160 mm. Next, 1.92 g (spraying amount: 150 g/m$^2$) of the particulate water absorbent (EX-2-1) was uniformly sprayed on the surface of the pulp pad on which the pattern paper was placed. When a part of the particulate water absorbent (EX-2-1) was sprayed on the pattern paper, the pattern paper was tilted toward the pulp pad on which the particulate water absorbent (EX-2-1) was sprayed, and the particulate water absorbent (EX-2-1) was dropped on the pulp pad. Thereafter, the pattern paper placed at the center of the pulp pad was removed, and a double-sided tape (manufactured by Nichiban Co., Ltd.; NICETACK (general type), adhesive force 02 (normal), width: 10 mm, NWBB-10) having a width of 10 mm and a length of 60 mm was pasted to the removed portion, and the release paper of the double-sided tape was peeled off. Next, a separately prepared pulp pad (corresponding to the first substrate) having a length of 80 mm, a width of 160 mm, a thickness of 2.5 mm, and a basis weight of 45 g/m$^2$ was placed on the surface of the pulp pad on which the particulate water absorbent (EX-2-1) was sprayed, and the lower pulp pad (second substrate) and the central portion (length: 10 mm, width: 60 mm) of the upper pulp pad (first substrate) were directly bonded to each other with the double-sided tape bonded to the central portion of the second substrate to obtain an absorbent body (1).

[Example 3-2]

On the pulp pad (length: 80 mm, width: 160 mm, thickness: 2.5 mm, basis weight: 45 g/m$^2$, corresponding to the second substrate) prepared by the same method as in Example 3-1, 1.92 g (spraying amount: 150 g/m$^2$) of the particulate water absorbent (EX-2-1) was uniformly sprayed. Next, a nonwoven fabric B (containing olefin as a main component, prepared by an air-through method, thickness: 1.4 mm, weight basis: 20 g/m$^2$, corresponding to the first substrate) cut into a length of 80 mm and a width of 160 mm was placed on the surface of the pulp pad on which the particulate water absorbent (EX-2-1) was sprayed to obtain an absorbent body (2).

[Example 3-3]

Three sheets of pulp pads (length: 80 mm, width: 160 mm, thickness: 2.5 mm, weight basis: 45 g/m$^2$) prepared by the same method as in Example 3-1 were stacked in such a manner that the longitudinal directions thereof coincided with each other (as illustrated in Fig. 16, corresponding to the second substrate (each pad corresponds to the third substrate)). On the uppermost pulp pad (the upper surface of the second substrate (the surface on the water absorption layer side)) of three sheets of pulp pads stacked, 1.92 g (spraying amount: 150 g/m$^2$) of the particulate water absorbent (EX-2-1) was uniformly sprayed. Next, a nonwoven fabric B (containing olefin as a main component, prepared by an air-through method, thickness: 1.4 mm, weight basis: 20 g/m$^2$, corresponding to the first substrate) cut into a length of 80 mm and a width of 160 mm was placed on the surface of the pulp pad on which the particulate water absorbent (EX-2-1) was sprayed to obtain an absorbent body (3).

[Example 3-4]

An absorbent body (4) was obtained by replacing the particulate water absorbent (EX-2-1) of Example 3-1 with the particulate water absorbent (EX-2-2).

[Example 3-5]

An absorbent body (5) was obtained by replacing the particulate water absorbent (EX-2-1) of Example 3-2 with the particulate water absorbent (EX-2-2).

[Example 3-6]

An absorbent body (6) was obtained by replacing the particulate water absorbent (EX-2-1) of Example 3-3 with the particulate water absorbent (EX-2-2).

[Example 3-7]

An absorbent body (7) was obtained by replacing the pulp pad used as the first substrate and the second substrate in Example 3-1 with a nonwoven fabric A cut into a length of 80 mm and a width of 160 mm (containing pulp fibers as a main component, produced by an air-laid method, and having a thickness of 0.5 mm and a basis weight of 45 g/m$^2$).

[Example 3-8]

An absorbent body (8) was obtained by replacing the pulp pad used as the second substrate in Example 3-2 with the nonwoven fabric A described in Example 3-7.

[Example 3-9]

An absorbent body (9) was obtained by replacing the pulp pad used as the second substrate in Example 3-3 with the nonwoven fabric A described in Example 3-7 (that is, three nonwoven fabrics A were stacked (corresponding to the second substrate; each nonwoven fabric A corresponds to the third substrate).

[Example 3-10]

An absorbent body (10) was obtained by replacing the pulp pad used as the second substrate in Example 3-4 with the nonwoven fabric A described in Example 3-7.

[Example 3-11]

An absorbent body (11) was obtained by replacing the pulp pad used as the second substrate in Example 3-5 with the nonwoven fabric A described in Example 3-7.

[Example 3-12]

An absorbent body (12) was obtained by replacing the pulp pad used as the second substrate in Example 3-6 with the nonwoven fabric A described in Example 3-7 (that is, three nonwoven fabrics A were stacked (corresponding to the second substrate; each nonwoven fabric A corresponds to the third substrate).

[Example 3-13]

An absorbent body (13) was obtained by changing the size of the absorbent body (that is, the sizes of the nonwoven fabric B and the nonwoven fabric A) from Example 3-8 to a size with a length of 300 mm and a width of 300 mm and changing the amount of the particulate water absorbent sprayed to 4.5 g (50 g/m$^2$).

[Example 3-14]

An absorbent body (14) was obtained by changing the amount of the particulate water absorbent sprayed from Example 3-13 to 0.45 g (5 g/m$^2$).

[Liquid permeable substrate]

The thicknesses of the liquid permeable substrates used in Examples 3-1 to 3-14, that is, the nonwoven fabric A, the nonwoven fabric B, and the pulp pad, were measured using a caliper in a state where no pressure was applied to the nonwoven fabric. The bulk density (g/cm$^3$), which is the basis weight/thickness, was calculated from the determined thicknesses. The porosity was calculated by the following (Formula 1).

$$\text{Porosity } (\%) = [1 - (M/(A \times T \times D))] \times 100 \quad \text{(Formula 1)}$$

M: mass (g) of substrate (fiber substrate)
A: area (cm$^2$) of substrate (fiber substrate)
T: thickness (cm) of substrate (fiber substrate)

D: density (g/cm$^3$) of fibers forming substrate (fiber substrate)

The porosity of the nonwoven fabric A was 94%, the porosity of the nonwoven fabric B was 98.5%, and the porosity of the pulp pad was 98.8%.

Among the liquid permeable substrates used in Examples 3-1 to 3-14, the substrate corresponding to the liquid permeable sheet is the nonwoven fabric A and the nonwoven fabric B.

[Absorbent body evaluation method]

<Examples 3-1 to 3-12: measurement of absorption rate and release amount>

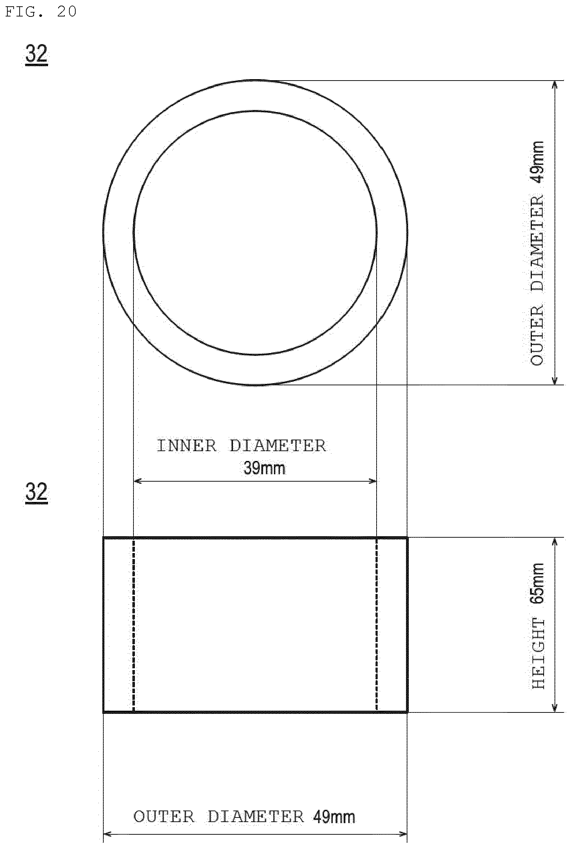

As illustrated in Figs. 20 to 22, for the absorbent bodies (1) to (12) having a length of 8 cm and a width of 16 cm prepared in Examples 3-1 to 3-12, the absorption rate and the release amount were evaluated according to the following method.

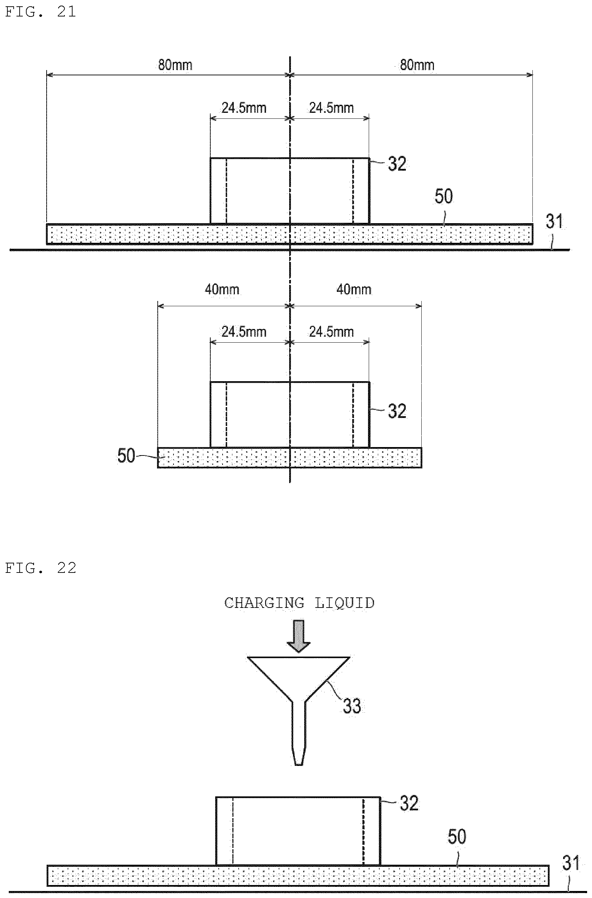

On a flat table, the absorbent body 50 was placed on a liquid impermeable vinyl sheet 31 so that the first substrate was on the uppermost surface, a liquid permeable nonwoven fabric C (prepared by a spunbond method, thickness: 0.15 mm, basis weight: 18 g/m$^2$) cut to the same dimensions as the absorbent body 50 was then placed so that the longitudinal directions were aligned (not illustrated), and a liquid injection cylinder 32 (Fig. 20) having a weight of 150 g and a height of 65 mm × an outer diameter of 49 mm (inner diameter: 39 mm) was placed at the center of the absorbent body 50 as illustrated in Fig. 21. In this state, 10 ml of a 0.9% by mass aqueous sodium chloride solution at 23°C was charged using a funnel 33 (Fig. 22) capable of charging a liquid at a flow rate of 6 ml/sec. The tip of the funnel 33 was set at a height of 1.5 cm from the absorbent body 50. The time from when the liquid was charged until all the liquid was absorbed into the absorbent body 50 was measured and defined as an absorption rate 1. After 3 minutes from the first liquid addition, the same operation was repeated to measure an absorption rate 2. After further 3 minutes from the second liquid addition, the same operation was repeated to measure an absorption rate 3. After 27 seconds from the third liquid addition, the liquid injection cylinder 32 was removed, 30 sheets of filter paper (Circular qualitative filter paper type No. 2, manufactured by ADVANTEC; diameter: 55 mm) whose mass was measured in advance were placed on the center of the absorbent body 50 and the nonwoven fabric C with the back surface (dense) facing down, and a cylindrical weight (1036 (± 2 g) having a diameter of 50 mm was further placed thereon and held for 10 seconds. After 10 seconds, the weight was removed, and the release amount (g) was measured from the mass increment of the filter paper. The time from the removal of the weight to the start of measurement of the release amount was about 3 seconds.

<Example 3-13: measurement of absorption rate and release amount>

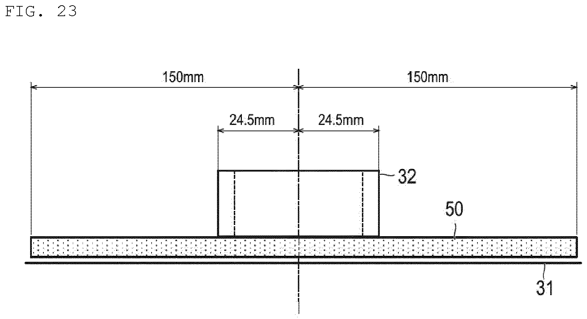

As illustrated in Fig. 23, for the absorbent body (13) having a length of 30 cm and a width of 30 cm prepared in Examples 3-13 and 3-14, the absorption rate and the release amount were evaluated according to the following method.

On a flat table, the absorbent body 50 was placed on a liquid impermeable vinyl sheet 31 so that the first substrate was on the uppermost surface, a liquid permeable nonwoven fabric C (prepared by a spunbond method, thickness: 0.15 mm, basis weight: 18 g/m$^2$, not illustrated) cut to the same dimensions as the absorbent body 50 was then placed on the absorbent body 50 in an overlapping manner, and the liquid injection cylinder 32 (Fig. 20) having a weight of 50 g and a height of 65 mm × an outer diameter of 49 mm (inner diameter: 39 mm) was placed at the center of the absorbent body 50 as illustrated in Fig. 23. In this state, 30 ml of a 0.9% by mass aqueous sodium chloride solution at 23°C was charged using a funnel 33 (Fig. 22) capable of charging a liquid at a flow rate of 6 ml/sec. The tip of the funnel 33 was set at a height of 1.5 cm from the absorbent body 50. The time from when the liquid was charged until all the liquid was absorbed into the absorbent body 50 was measured and defined as an absorption rate. After 2 minutes and 57 seconds from the liquid addition, the liquid injection cylinder 32 was removed, 30 sheets of filter paper (Circular qualitative filter paper type No. 2, manufactured by ADVANTEC; diameter: 110 mm) whose mass was measured in advance were placed on the center of the absorbent body 50 and the nonwoven fabric C with the back surface (dense) facing down, and a cylindrical weight (2749 (± 2 g) having a bottom surface with a diameter of 100 mm was further placed thereon and held for 30 seconds. After 30 seconds, the weight was removed, and the release amount (g) was measured from the mass increment of the filter paper. The time from the removal of the weight to the start of measurement of the release amount was about 3 seconds.

<Example 3-14: measurement of absorption rate and release amount>

For the absorbent body (14) having a length of 30 cm and a width of 30 cm prepared in Example 3-14, the absorption rate and the release amount were evaluated by the same evaluation method as the evaluation method for the absorbent body (13), except that the amount of a 0.9% by mass aqueous sodium chloride solution at 23°C charged was changed to 10 ml in <Example 3-13: measurement of absorption rate and release amount>.

[Table 6]

|  | Absorbent body size: 8 cm x 16 cm | Evaluation result | | | | |
|---|---|---|---|---|---|---|
|  |  | Absorption rate 1 [sec] | Absorption rate 2 [sec] | Absorption rate 3 [sec] | Total absorption rate [sec] | Release amount [g] |
| Example 3-1 | Absorbent body (1) | 11 | 8 | 9 | 28 | 2.3 |
| Example 3-2 | Absorbent body (2) | 10 | 13 | 15 | 38 | 2.8 |
| Example 3-3 | Absorbent body (3) | 7 | 10 | 14 | 31 | 2.1 |
| Example 3-4 | Absorbent body (4) | 7 | 8 | 8 | 23 | 2.9 |
| Example 3-5 | Absorbent body (5) | 10 | 10 | 11 | 31 | 2.7 |
| Example 3-6 | Absorbent body (6) | 7 | 9 | 9 | 25 | 1.9 |
| Example 3-7 | Absorbent body (7) | 11 | 8 | 9 | 28 | 2.1 |
| Example 3-8 | Absorbent body (8) | 10 | 13 | 15 | 38 | 2.6 |
| Example 3-9 | Absorbent body (9) | 7 | 10 | 14 | 31 | 1.9 |
| Example 3-10 | Absorbent body (10) | 8 | 7 | 8 | 23 | 2.9 |
| Example 3-11 | Absorbent body (11) | 9 | 9 | 11 | 29 | 2.6 |
| Example 3-12 | Absorbent body (12) | 6 | 8 | 9 | 23 | 1.7 |

[Table 7]

|  | Absorbent body size: 30 cm × 30 cm | Amount of particulate water absorbent in absorbent body | | Evaluation condition | Evaluation result | |
|---|---|---|---|---|---|---|
|  |  | Basis weight [g/m$^2$] | Content [g] | Amount of liquid absorbed × number of times | Absorption rate [sec] | Release amount [g] |
| Example 3-13 | Absorbent body (13) | 50 | 4.5 | 30 ml × once | 10 | 0.5 |
| Example 3-14 | Absorbent body (14) | 5 | 0.45 | 10 mix once | 3 | 2.5 |

The present application is based on Japanese Patent Application No. 2021-030521 filed on February 26, 2021 and Japanese Patent Application No. 2021-030524 filed on February 26, 2021, the disclosure content of which is incorporated herein by reference in its entirety.

Reference Signs List

| | |
|---|---|
| 1 | Particulate water absorbent |
| 1a | Cavity |
| 1b | Void |
| 12 | Table |
| 13 | Screw |
| 14 | Supply port |
| 15 | Hopper |
| 16 | Extrusion port |
| 17 | Supporting tool |
| 18 | Rotary blade |
| 19 | Ring |
| 20 | Returning prevention member |
| 20a | Band-shaped protrusion (returning prevention member) |
| 21 | Motor |
| 31 | Vinyl sheet |
| 32 | Liquid injection cylinder |
| 33 | Funnel |
| 50 | Absorbent body |
| 51 | First substrate |
| 52 | Water absorption layer |
| 53 | Second substrate |
| 53a | Third substrate |
| 54 | Particulate water absorbent |
| 55 | Gap |
| 56 | Hydrophilic fiber |
| 100 | Meat chopper |
| 200 | Gel-crusher |
| 204 | Input port |
| 206 | Rotation axis |
| 208 | Main body (barrel) |
| 210 | Discharge port |
| 212 | Crushing means |
| 214 | Drive device |
| 216 | Gas inlet |
| 217 | Gel-fluidizing agent input port |
| 310 | Gel sizing device |
| 311 | Screw |
| 312 | Small hole |
| 313 | Die |
| 320 | Gel sizing device |
| 321 | Roll |
| 322 | Small hole |
| 323 | Rotary die |
| 330 | Gel sizing device |
| 331 | Paddle |
| 332 | Small hole |
| 333 | Cylindrical die |
| 336 | Push blade |
| 340 | Gel sizing device |
| 343 | Perforated plate |
| 341 | Extrusion action portion |
| 342 | Small hole |
| 400 | Screw-type pretreating and extrusion type sizing machine |
| 420 | Feed screw |

420a    Spherical tip end part
410     Gear box
430     Screw case
440     Feed hopper
450     Spherical die
450a    Spherical back surface
460     Spherical extrusion blade
460a    Edge of spherical extrusion blade
502     Heating device
504     Main unit
506     Input portion and output portion
508     Steam inflow and outflow portion
510     Rotary container
512     Heating tube
514     First gear
516     Second gear
544     Steam inlet
546     Drain

**Claims**

1.  A particulate water absorbent comprising poly(meth)acrylic acid (salt)-based water-absorbing resin particles as a main component,

    the particulate water absorbent comprising: a cavity that is a space connecting to outside; and a void that is a closed space not connecting to outside,
    wherein a cavity ratio to a total volume is 10% by volume or more, and
    a void ratio to a total volume is 0.5% by volume or less.

2.  The particulate water absorbent according to claim 1, wherein a CRC is 25 g/g or more.

3.  The particulate water absorbent according to claim 1 or 2, wherein an AAP 0.3 psi (2.06 kPa) is 20 g/g or more.

4.  The particulate water absorbent according to any one of claims 1 to 3, wherein a moisture content is 5% by mass or more.

5.  The particulate water absorbent according to any one of claims 1 to 4, wherein an absorption time of high-viscosity liquid is 140 seconds or shorter.

6.  An absorbent body using the particulate water absorbent according to any one of claims 1 to 5.

FIG. 1

1

1a

1b

FIG. 2A

100

14

15

21

19

20(20a)

11

16

17  18  13

12

22

FIG. 2B

<u>17</u>

17a

17a

17b

FIG. 3

<u>200</u>

204

214

206

216

212

208

217

(A)

210

(L)

FIG. 4

200

FIG. 5

TYPE: SCREW

310

313

314

312    315    311

TYPE:
ROTARY POROUS DIE

320

321

324

323

325    322

TYPE: ROTARY BLADE

330    334

336

333

331

335    332

FIG. 6

<u>340</u>

FIG. 7

FIG. 8

FIG. 9

FIG. 10

<u>50</u>

FIG. 11

<u>50</u>

FIG. 12

(A)

50

54

53

(B)

50

54

53

(C)

50

54

53

(D)

50

54

53

FIG. 13

(A)

50

54

53

(B)

50

54

53

(C)

50

54

53

FIG. 14

(A)

50

54

53

(B)

50

54

53

(C)

50

54

53

(D)

50

54

53

FIG. 15

FIG. 16

FIG. 17

FIG. 18

FIG. 19

FIG. 20

<u>32</u>

<u>32</u>

OUTER DIAMETER 49mm

INNER DIAMETER
39mm

HEIGHT 65mm

OUTER DIAMETER 49mm

FIG. 21

FIG. 22

CHARGING LIQUID

FIG. 23

## INTERNATIONAL SEARCH REPORT

| International application No. |
|---|
| **PCT/JP2022/007925** |

### A. CLASSIFICATION OF SUBJECT MATTER

*C08J 3/12*(2006.01)i; *B01J 20/26*(2006.01)i
FI: B01J20/26 D; C08J3/12 A CEY

According to International Patent Classification (IPC) or to both national classification and IPC

### B. FIELDS SEARCHED

Minimum documentation searched (classification system followed by classification symbols)

B01J20/26; C08J3/12

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2015-83693 A (NIPPON SHOKUBAI CO., LTD.) 30 April 2015 (2015-04-30) claims, paragraphs [0186], [0194], [0196], [0204]-[0206] | 1-2, 4-6 |
| Y | | 3 |
| Y | WO 2013/002387 A1 (NIPPON SHOKUBAI CO., LTD.) 03 January 2013 (2013-01-03) paragraphs [0093]-[0096] | 3 |
| A | JP 2019-519663 A (LG CHEM, LTD.) 11 July 2019 (2019-07-11) entire text | 1-6 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **12 April 2022** | **26 April 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

International application No.

**PCT/JP2022/007925**

| Patent document cited in search report | | | Publication date (day/month/year) | Patent family member(s) | | | Publication date (day/month/year) |
|---|---|---|---|---|---|---|---|
| JP | 2015-83693 | A | 30 April 2015 | US 2013/0026412 A1<br>claims, paragraphs [0346],<br>[0356], [0360], [0374]-[0376]<br>EP 2518092 A1<br>CN 102712712 A<br>SG 181879 A<br>KR 10-2012-0132475 A | | | |
| WO | 2013/002387 | A1 | 03 January 2013 | US 2014/0193641 A1<br>paragraphs [0185]-[0188]<br>EP 2727953 A1<br>CN 103619919 A<br>KR 10-2014-0038998 A | | | |
| JP | 2019-519663 | A | 11 July 2019 | US 2019/0119452 A1<br>entire text<br>WO 2018/117548 A1<br>EP 3412710 A1<br>KR 10-2018-0074586 A<br>CN 108884241 A | | | |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013002387 A
- WO 2017170605 A
- US 7638570 B
- US 20080161512 A
- WO 2009123197 A
- US 20080194863 A
- US 20050215734 A
- US 6241928 B
- US 7265190 B
- US 4893999 A
- US 2005215734 A
- US 6987151 B
- US 6710141 B
- WO 2009025235 A
- WO 2013018571 A
- WO 2016182082 A
- WO 2020067310 A
- WO 2011126079 A
- WO 2015129917 A
- WO 2016204302 A

- WO 20130023187 A
- US 2013026412 A
- US 2016332141 A
- JP 2005035212 A
- WO 2006100300 A
- WO 2011025012 A
- WO 2011025013 A
- WO 2011111657 A
- WO 2018092863 A
- US 7183456 B
- WO 2011040530 A
- WO 97017397 A
- US 6107358 A
- WO 2014034667 A
- JP 2020047821 W
- WO 2019221154 A
- JP 2021034800 W
- JP 2006057075 A
- JP 2021030521 A
- JP 2021030524 A

**Non-patent literature cited in the description**

- Glossary of Technical Terms in Japanese Industrial Standards. 2002